(19) Europäisches Patentamt
European Patent Office
Office européen des brevets

(11) EP 1 897 921 B1

(12) EUROPEAN PATENT SPECIFICATION

(45) Date of publication and mention of the grant of the patent:
**16.07.2014 Bulletin 2014/29**

(21) Application number: **06767361.6**

(22) Date of filing: **26.06.2006**

(51) Int Cl.:
***C09D 201/00*** *(2006.01)*
***B05D 7/24*** *(2006.01)*
***C01B 33/14*** *(2006.01)*
***C08J 7/04*** *(2006.01)*
***C09D 7/12*** *(2006.01)*
***D06M 11/79*** *(2006.01)*
***D06M 15/263*** *(2006.01)*

(86) International application number:
**PCT/JP2006/312744**

(87) International publication number:
**WO 2006/137560 (28.12.2006 Gazette 2006/52)**

(54) **COATING COMPOSITION, PROCESS FOR PRODUCTION THEREOF, RESIN MOLDINGS AND PROCESS FOR PRODUCTION OF THE MOLDINGS**

BESCHICHTUNGSZUSAMMENSETZUNG, HERSTELLUNGSVERFAHREN DAFÜR, HARZFORMKÖRPER UND VERFAHREN ZUR HERSTELLUNG DER FORMKÖRPER

COMPOSITION DE REVÊTEMENT, SON PROCÉDÉ DE PRODUCTION, MOULAGES EN RÉSINE ET PROCÉDÉ DE PRODUCTION DES MOULAGES

(84) Designated Contracting States:
**DE**

(30) Priority: **24.06.2005 JP 2005184847**

(43) Date of publication of application:
**12.03.2008 Bulletin 2008/11**

(73) Proprietor: **Nippon Kasei Chemical Company Limited**
**Iwaki-shi**
**Fukushima 971-8101 (JP)**

(72) Inventors:
- **MORI, Yutaka**
**Yahatanishi-ku, Kitakyushu-shi, Fukuoka, 806-0004 (JP)**
- **SHIMOYAMA, Masaru**
**c/o Mitsubishi Chemical Corporation**
**Kitakyushu-shi, Fukuoka 806-0004 (JP)**
- **TSURUTA, Yuko**
**Yahatanishi-ku, Kitakyushu-shi, Fukuoka 806-0004 (JP)**

(74) Representative: **HOFFMANN EITLE**
**Patent- und Rechtsanwälte**
**Arabellastrasse 4**
**81925 München (DE)**

(56) References cited:
**JP-A- 6 057 178**
**JP-A- 06 073 311**
**JP-A- 09 310 282**
**JP-A- 10 259 354**
**JP-A- 63 108 085**
**JP-A- 2002 138 244**
**JP-A- 2002 144 703**
**JP-A- 2004 075 916**
**JP-A- 2004 211 049**
**JP-A- 2004 256 649**
**US-A- 5 853 862**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to coating compositions, resin forming products and methods for making them. In particular, the present invention relates to coating compositions excellent in coating characteristic and/or appearance of the coated surface, a method for making such compositions, and resin forming products with dew condensation resistance, moisture conditioning effect, anti-fouling effect, and cooling effect and/or endurance, and a method for making such resin forming products.

### Background Art

In the agriculture field with greenhouse cultivation in cold climates or intermediate mountain regions, greenhouse indoor temperature starts to fall after sunset, and dewing occurs for a period from night to dawn to cause adverse effects on cultivated crops.

In the construction field, houses with poor indoor ventilation do not have their autonomous moisture conditioning functions, causing the following serious problems: moisture collects easily on floors, ceilings, interior wall surfaces, for example; mites and fungi grow easily; dewing occurs readily between the interior wall and the exterior wall; and erosion of buildings progresses.

Membrane structures and storage facilities, such as warehouses and containers, in cold climates and intermediate mountain regions have problems of dewing on the inside of such facilities due to rise in humidity caused by outdoor air temperature fall, rainfall, and water vapor generated from objects preserved in these facilities.

To solve such problems, some humidity-controlling agents containing porous materials are disclosed, for example, in Patent Documents 1 and 2.

The conventional humidity-controlling agents described in Patent Documents 1 and 2, however, have poor endurance due to detachment between resin layers and substrates; and significantly limited applicability due to stiff surface with time passing.

Consequently, there is a need for a low cost material with high dew condensation resistance and moisture conditioning effect, as well as excellent endurance in greenhouses for agricultural cultivation, buildings such as houses, and membrane facilities and storage facilities such as warehouses and containers.

The field of food sales also requires a means for preventing dewing for use in food display.

For example, food display refrigerators or freezers in supermarkets, which are opened without lids or covers in the daytime so that goods therein are readily accessible to customers, are covered with rigid plastic film sheets having certain holes provided at regular intervals during closing time such as at night and non-business days so as to prevent cool air inside these appliances from leaking out and to achieve power-saving. Such coverings are accomodated in a manner of a roller curtain for easy rolling up and down and excellent space-saving, but do not completely block air flow between the inside and outside of these appliances through the holes for preventing dewing in use. This provides insufficient power saving for which coverings are used. In fact, such many holes can not prevent dewing itself, thus resulting in dew dripping on goods and floors.

To solve such problems, a cover sheet for refrigerating or freezing showcases laminated on its one side with a metal layer, is disclosed in Patent Document 3. For this cover, more significant effects on power saving and dew-proofing properties inside these showcases are observed as compared with the film sheet covers mentioned above. In the case of a noticeable difference in temperature between inside and outside of such appliances as refrigerators in particular, dewing occurs on the outer surface of the appliance, and then the dew drips on the floor.

Consequently, there is a need for a material which can form dew-proofing sheets that have high power-saving properties, prevent dewing on the outer surface of the appliance, and is lightweight and compact for use in food display, for example in supermarkets.

The automotive field also requires materials suitable for preventing dewing within vehicle lighting devices used as headlamps mounted on the front of the vehicle, for example.

Such a vehicle lighting device has a configuration in which a light source is accommodated inside a light source chamber composed of a housing and a lens. Once moisture intrudes into the chamber by certain climates or car washing, it is difficult to eliminate the moisture because of the configuration. When the chamber is drastically cooled in situations where the moisture remains contained therein, the moisture will form dew on the inner surface of the lens. Thereby, the lens mists up and orientation characteristics change while the light source is on. Furthermore, a part of the mist will mar the appearance even while the source is off.

To solve such problems, some methods of disposing a moisture adsorbent, for example, silica within the light source chamber, or applying an anti-misting coating on the inner surface of the lens have been provided. These conventional methods, however, have disadvantages of high cost and low endurance. Therefore, there is a need for low

cost materials with high dew condensation resistance and moisture conditioning effect, as well as excellent endurance.

In addition, the field such as printed circuit boards requires materials suitable for preventing dew condensation. High functionality and miniaturization of electronic units used in automobiles have allowed electronic components mounted on the printed circuit boards to be highly densified. As a result, the undesired phenomenon called "migration" has occurred. Migration involves electrolytic reactions when voltage from a battery is applied to exposed conductors which are solder-connected with a land of a printed circuit board in the presence of moisture containing, for example, electrolytic residues; and dendritic deposition of metal leaching from the conductor of the anode occurs on the conductor of the cathode. Progress of such reactions may impair the insulation between these conductors.

It is known that an anti-dewing plate is provided in the case of electronic units accommodating a printed circuit board in order to prevent dewing, which causes migration, on a surface of the board (See, for example, Patent Document 4). The plate is provided around, among other exposed conductors in the printed circuit board, ones that readily cause electrolytic migration with a high voltage applied. This allows outdoor air intruding into the case to come in contact with the plate, and water vapor contained in the air to form dew on the plate. Consequently, the air with lower humidity is blown on the exposed conductors so that dew is not formed on the exposed conductors, thereby preventing the migration.

Consequently, there is a need for materials for an anti-dewing plate (used inside a case accommodating a printed circuit board) that can effectively prevent dew formation which causes migration when the air containing water vapor is blown on the exposed conductors in the printed circuit board. Conventional anti-dewing plates, however, have disadvantages of high cost and low endurance. Therefore, there is a need for a low cost material with high dew condensation resistance and moisture conditioning effect, as well as excellent endurance.

Rearview mirror systems for rear viewing, particularly rearview mirror systems provided with built-in camera modules for lower viewing, which are attached to vehicle doors, require new materials.

In general, a rearview mirror system for rear viewing, which is attached to both the right and left doors of a vehicle, fails to allow for recognition of road surfaces from underneath the system to the diagonal forward. Therefore, a variety of camera built-in type rearview mirror systems which accommodate camera modules for recognizing road surfaces near front wheels and an lighting source therefor have developed (See Patent Documents 5 and 6).

In such camera built-in type rearview mirror systems, the above-mentioned camera module includes, for example, a camera body having an imaging sensor such as a lens and a CCD (charge coupled device), an image signal processor, and a power source so as to image and display the road surfaces near front wheels on a monitor inside the vehicle by outputting image signals from the processor to the monitor. Moreover, a mirror housing for accommodating such a camera module is provided with an opening on which the lens and the lighting source of the camera body are faced. The opening is generally enclosed with a transparent cover.

However, dust entering the mirror housing from the periphery of the mirror may adhere to the inner surface of the cover because dust and water proofing is not provided on the inner face of the cover. In addition, an increased humidity or a decreased temperature in the housing forms mist and dew on the cover, so that optical transmittance of the cover may be impaired. Furthermore, light from the lighting source will be diffracted to the lens of the camera body. When water droplets adhere to the outer surface of the cover during rainy days or after car washing, the incoming beam to the camera body may also be improperly diffracted through the lens effect of the droplets. In such a case, the camera body becomes incapable of photographing clear images through the transparent cover.

One idea to prevent moisture infiltrated into the mirror housing from forming mist and dew on the cover is to provide materials with dew condensation resistance, moisture conditioning effect, for example, within the mirror housing. Consequently, materials with dew condensation resistance, moisture conditioning effect, and excellent endurance are needed.

Semi-hermetic containers such as a hard disk drive (also referred to as a HDD) have also required solutions to dew formation along with changes in relative humidity. For example, when a laptop personal computer is taken outdoors in summer, an HDD will be exposed to elevated temperature environments, after which dew formation may occur therein because of a drastic drop in temperature when the computer is taken into an air conditioned building. Consequently, materials with dew condensation resistance, moisture conditioning effect, and excellent endurance are needed in order to prevent dewing and adjust the humidity in a HDD.

On the other hand, in the construction field, some methods have been provided to coat exterior walls or roofs of a building, for example, with titanium oxide, and to flow some rainwater, which forms a thin water membrane, on the surface of the coating, thereby cooling can be achieved, as shown in Non-Patent Document 1. This cooling technology involves cooling a surface of a building and its ambient air by the latent heat of vaporization of such a water membrane formed on the exterior walls of the building, for example. The technology also adopts a multi-stage system provided with several outlets for the coolant water in the vertical direction of the wall to increase the flow of the coolant, and utilizes photocatalysts to keep the state of the water membrane. The technology using these photocatalysts is characterized by coating exterior walls of a building, for example, with a photocatalytic material primarily composed of titanium oxide, and irradiating the walls with light such as sunlight to allow the material to exhibit hydrophilicity, resulting in a decrease in surface tension of water to facilitate formation of the water membrane being the coolant.

In the technology using the photocatalysts, however, it is impractical to irradiate the entire building with light in consideration of application to large buildings. In addition, since irradiation with light causes rise in temperature, the technology is not suitable for cooling purposes. Furthermore, a possible concern is performance degradation caused by degradation of such photocatalysts.
Thus, such a cooling technology requires materials with excellent hydrophilicity and endurance.
Furthermore, as greening materials used in the fields of horticulture and landscape architecture, or civil engineering and construction, moss fixed to a structure such as resin materials has been used, for example (See, for example, Patent Document 7). Such a material for the structure to which the moss is fixed needs to maintain its water retention capacity sufficient to stabilize growth and cultivation of the moss. Therefore, materials having hydrophilicity and excellent endurance are needed.
JP 6 057178 A describes a transparent anti-corrosive coating composition and a method for preparing the same, wherein 100 parts by weight of an acrylic resin having a Mw of 70,000-100,000, a Tg of -10-0°C, a hydroxyl value of 10-30 and an acid value of 25-40 is compounded with 5-20 parts by weight of an epoxy resin having an epoxy equivalent of 210-1000 to give a resin composition. 100 parts by weight of the thus prepared resin composition is compounded with 5-20 parts by weight of powdered silica having a number average primary particle diameter of 5-9 nm and a specific surface area of 200-380 $m^2$/g and 1-10 parts by weight of cross-linkable polymer particles having a number average primary particle diameter of 50-80 nm to give the desired coating composition.
JP 2004 211049 A describes a functional coating comprising an inorganic porous material which has a volume of pores in the range of 4-14 nm of 0.1 ml/g or more and a total volume of pores with a diameter in the range of 1-200 nm of 1.5 ml/g or less and an organic emulsion. The inorganic porous material in an amount of 200-400 parts by weight is mixed with the organic emulsion in an amount of 100 parts by weight in therms of the dry weight thereof.
Patent Document 1: JP Patent No. 3398830
Patent Document 2: Japanese Unexamined Patent Application Publication No. 2000-43179
Patent Document 3: Japanese Unexamined Patent Application Publication No. HEI 11-183023
Patent Document 4: Japanese Unexamined Patent Application Publication No. HEI 9-102679
Patent Document 5: Japanese Unexamined Patent Application Publication No. 2000-115759
Patent Document 6: U.S. Patent No. 5497306
Patent Document 7: Japanese Unexamined Patent Application Publication No. 2004-236518

Non-Patent Document 1: K. Hashimoto, Hashimoto Laboratory, Research Center for Advanced Science and Technology, The University of Tokyo, "Hikari Enerugi wo Riyoshita Kankyo Hozen (Environmental Conservation by Solar Power)", retrieved on Feb. 3, 2004, online reference:

http://www.appchem.t.u-tokyo.ac.jp/appchem/labs/fujisima/pccm/kaiyo.html

Disclosure of the Invention

Problems to be solved by the Invention

The present invention has been accomplished to solve these problems.
An object of the present invention is to provide a coating composition which is excellent in coating characteristic and/or appearance of the coated surface.
Another object of the present invention is to provide a resin forming product and a method for making the same. The resin forming has at least one of the following characteristics (i).to (v):

(i) dew condensation resistance
(ii) moisture conditioning effect
(iii) anti-fouling effect
(iv) cooling effect
(v) endurance

Means for Solving the Problems

As a result of extensive study to achieve the above object, the inventors have discovered that a coating composition excellent in coating characteristic and/or appearance of the coated surface is prepared using both an inorganic porous material containing a silicon compound and a hydrophilic binder resin having specific properties and that the

resin forming product having at least one of the above characteristics (i) to (v) is obtained by using the coating composition described above, and have accomplished the present invention.

The following are aspects of the present invention:

[1] A coating composition comprising at least an inorganic porous material, a binder resin, and a solvent, wherein (1) the inorganic porous material comprises at least one silicon compound; (2) the binder resin has (a) a solid hydroxyl value in the range of 5 mgKOH/g to 80 mgKOH/g and (b) a glass transition temperature (Tg) in the range of -5°C to 40°C; (3) the solvent comprises at least one organic solvent, and (4) the weight ratio of the inorganic porous material to the solid content of the binder resin is in the range of 0.6 to 10.0.

[2] The coating composition according to [1], wherein the weight ratio of the total solid content to the solid content of the binder resin is in the range of 1.6 to 11.0.

[3] The coating composition according to either [1] or [2], wherein the inorganic porous material is silica.

[4] The coating composition according to any one of [1] to [3], wherein the inorganic porous material has a mode particle diameter in the range of 1.0 μm to 50 μm.

[5] The coating composition according to one of [1] to [4], wherein the proportion of the solvent in the coating composition is 40 weight% or more and 98 weight% or less.

[6] The coating composition according to one of [1] to [5], wherein the proportion of the organic solvent to the total solvent is 5 weight% or more.

[7] The coating composition according to any one of [1] to [6], further comprising an organic filler.

[8] A resin forming product prepared by applying the coating composition of any one of [1] to [7] on a base material and removing the solvent.

[9] The resin forming product according to [8], comprising at least an inorganic porous material and a binder resin, wherein the resin forming product has a void volume per unit area and unit thickness in the range of 0.33 $ml/m^2 \cdot \mu m$ to 0.99 $ml/m^2 \cdot \mu m$.

[10] The resin forming product according to [8] or [9], further comprising a base material, wherein the inorganic porous material is fixed to at least part of the base material by the binder resin.

[11] The resin forming product according to [10], wherein the base material comprises at least a sheet.

[12] The resin forming product according to [10], wherein the base material comprises at least a film.

[13] The resin forming product according to [10], wherein the base material comprises at least a fiber.

[14] A method for making the coating composition according to any one of [1] to [7], comprising at least the step of: mixing the binder resin, the inorganic porous material, and the solvent.

Effects of the Invention

The coating composition of the present invention is excellent in coating characteristic and/or appearance of the coated surface. Furthermore, the resin forming product of the present invention exhibits at least one of the following characteristics (i) to (v):

(i) dew condensation resistance
(ii) moisture conditioning effect
(iii) anti-fouling effect
(iv) cooling effect
(v) endurance

Best Mode for Carrying Out the Invention

The present invention will now be described in detail. The present invention is not limited to the following embodiments and any modification should be included within the scope of the invention.

[1. Coating composition]

The coating composition of the present invention comprises an inorganic porous material, a binder resin, and a solvent.

[1-1. Inorganic porous material]

[1-1-1. Type of inorganic porous material]

The inorganic porous material contained in the coating composition of the present invention contains at least one silicon compound. Any type of inorganic porous material can be used without restriction. Examples of such silicon compounds include silica, zeolite, porous glass, apatite, diatomite, kaolinite, sepiolite, allophane, imogolite, white clay, and composite metal oxides, e.g. silica-alumina composite oxide, silica-titania composite oxide, silicazirconia, silica-magnesium oxide, silica-lanthanum oxide, silica-barium oxide, and silica-strontium oxide. Examples of inorganic porous materials other than silicon compounds include active carbon, alumina, titania, and zirconia. Among these inorganic porous material materials preferred are silica, zeolite, alumina, titania, and zirconia. These inorganic porous material materials may be used alone or in any combination of two or more with any proportion.

In the coating composition of the present invention, silica is at least preferred as the inorganic porous material, and silica having specific properties described below (referred to as "silica of the present invention") is particularly preferred.

The mode particle diameter of the inorganic porous material contained in the coating composition of the present invention is preferably 1.0 μm or more and more preferably 1.5 μm or more, and preferably 50 μm or less and more preferably 40 μm or less. If the mode particle diameter of the inorganic porous material in the coating composition is too small, the inorganic porous material particle is densely packed. This packed particle is difficult to be readily dispersed. If the mode particle diameter of the inorganic porous material in the resin forming product is too small, spaces between particles are decreased due to a high particle packing rate. This may cause a decrease in water retention capability. If the mode particle diameter of the inorganic porous material is too large, particle packing rate decreases. Since this precludes water retention due to large void openings at the resin forming product surface, water retention capability may be decreased regardless of an increase in voids between particles. Furthermore, contact points between the binder resin and the inorganic porous material are reduced. This leads to ready elimination of the inorganic porous material and thus a decrease in abrasion resistance and weather resistance. The mode particle diameter of the inorganic porous material can be determined, for example, using a laser diffraction-scattering particle size analyzer described below in [1-1-2. Silica characteristics].

The mode diameter of pores of the inorganic porous material contained in the coating composition of the present invention is preferably 2 nm or more and more preferably 2.3 nm or more, and preferably 20 nm or less and more preferably 18 nm or less. In the present invention, control of the mode diameter of pores of the inorganic porous material within this wide range can change moisture adsorption region of the coating composition. The mode diameter of pores of the inorganic porous material can be determined, for example, from a pore distribution curve that is calculated from an isothermal desorption curve by a BJH method. The isothermal desorption curve is measured by a nitrogen gas adsorption/desorption method described below in [1-1-2. Silica characteristics].

[1-1-2. Silica characteristics]

As the inorganic porous material contained in the coating composition of the present invention, silica (silica of the present invention) having the following characteristics is preferred.

(a) To be amorphous:

The silica of the present invention is characterized by being amorphous in a three-dimensional structure. In other words, it does not have a crystal structure. This represents that no crystalline peak is observed by X-ray diffractometry of the silica of the present invention. Throughout the specification, the amorphous silica is defined by one that does not have peaks attributed to its crystal structure (crystalline peaks) at a region exceeding 0.6 nanometers (nm Units d-spacing) in an X-ray diffraction pattern. An example of such silica is micelle-templated silica of which pores are formed using an organic template. The amorphous silica has significantly higher productivity than that of crystalline silica.

(b) Specific surface area:

The silica of the present invention has a specific surface area of generally 200 $m^2/g$ or more and preferably 250 $m^2/g$ or more, and generally 1000 $m^2/g$ or less and preferably 900 $m^2/g$ or less. Since the silica of the present invention has such a large specific surface area, the interactive area between silica and adsorptive material (water) adsorbed in pores of the silica can be increased in the resin forming product formed using the coating composition of the present invention (resin forming product of the present invention described below). Furthermore, surface modification of the pores of the silica enables interaction with the material to be significantly varied. The specific surface area of the

silica is measured by a BET method that involves adsorption/desorption of nitrogen gas.

(c) Pore volume:

The pore volume per unit weight of the silica of the present invention is generally 0.3 ml/g or more and preferably 0.35 ml/g or more (throughout the specification, this value "volume/weight" is referred to as merely "pore volume" unless otherwise noted. The pore volume is referred to as "total pore volume" to discriminate from the former.). Since the silica of the present invention has such a large pore volume, the resin forming product of the present invention exhibits high adsorption/desorption capacity. The upper limit of the pore volume is not restricted, but is generally 3.0 ml/g or less and preferably 2.5 ml/g or less. The pore volume of the silica can be determined by the adsorbed volume of nitrogen gas at a relative pressure of 0.98 on an isothermal adsorption curve.

(d) Mode diameter of pores:

The silica of the present invention has pores having a mode diameter ($D_{max}$) that is generally 2 nm or more and preferably 2.3 nm or more, and generally 20 nm or less and preferably 18 nm or less. The mode diameter is determined by a pore distribution curve that is calculated by a BJH method described in E. P. Barrett, L. G. Joyner, P. H. Haklenda, J. Amer. Chem. Soc., vol. 73, 373 (1951) using an isothermal desorption curve obtained by a nitrogen gas adsorption/desorption method, namely, a graph illustrating the relationship between the pore diameter d (nm) and the differential nitrogen gas adsorption volume ($\Delta V/\Delta(\log d)$; where V represents a nitrogen gas adsorption volume). Since the mode diameter ($D_{max}$) of the silica pores is properly controlled within such a wide range in the present invention, the moisture adsorption region of the resin forming product of the present invention can be varied. Thus, in the pore distribution curve of the silica of the present invention, the peak representing the mode diameter ($D_{max}$) of pores is not necessarily sharp. In contrast, in order to ensure sufficiently high moisture adsorption, the silica pore volume should reside within the range (c), as described above.

As described below, the method for making the silica of the present invention is not limited, and the silica may be produced by any conventional process. However, using some conventional processes, the pore size can be controlled arbitrarily. Since the adsorption/desorption capacity of some of the resin forming product of the present invention depends on the pore diameter of the silica, it is preferred that the pore diameter be determined according to application. For example, the humidity conditioning ability in the adsorption/desorption capacity generally depends on the pore diameter of the silica.

(e) Mode particle diameter:

The silica of the present invention has the mode particle diameter of preferably 1.0 μm or more and more preferably 1.5 μm or more, and preferably 50 μm or less and more preferably 40 μm or less. If the mode particle diameter of the silica is too small, it causes the particle packing rate to increase, the interparticle void to decrease, and thus the water retention capability to decrease. In contrast, if the mode particle diameter of the silica is too large, it leads to a decrease in water retention capability due to low water retention, regardless of an increase in interparticle void. Thus, the mode particle diameter of the silica should reside within the range described above. The mode particle diameter of the silica is determined by the particle size distribution measured with a laser diffraction-scattering particle size analyzer (for example, a Laser Micronsizer LMS-24 made by Seishin Enterprise Co. Ltd).

(f) Silanol content:

The silica of the present invention has a silanol content of generally 2 $nm^{-2}$ or more, preferably 2.5 $nm^{-2}$ or more, and more preferably 3 $nm^{-2}$ or more, and generally 10 $nm^{-2}$ or less, preferably 8.5 $nm^{-2}$ or less, and more preferably 7 $nm^{-2}$ or less. An excessively low silanol content leads to low hygroscopicity because the silica is hydrophobic and less sensitive to moisture. An excessively high silanol content leads to low endurance and unsatisfactory resin forming product due to low stability of the coating composition. Thus, the range described above is preferred. The silanol content of silica can be determined by a change in weight by thermogravimetry, as follows.

In order to remove adsorbed water, the silica is heated to 160°C, is held at this temperature for 2 hours, is heated to 1000°C, and is held at this temperature for 1 hour. The change in silica weight is measured during this process. The water content derived from silanol corresponds to a difference between the change in weight during the heating step (weight loss between 160°C and 1000°C) and the weight of $CO_2$ derived from alcohol during hydrothermal treatment. That is, the water content can be calculated by the following equation:

$$\{\text{water content derived from silanol (g)}\} = \{\text{weight loss between 160°C and 1000°C (g)}\} - \{\text{weight of } CO_2 \text{ derived from alcohol (g)}\}$$

Supposing that one $H_2O$ molecule is generated from two silanol molecules, the number of silanol groups and the silanol content of the silica can be calculated from the following equations, respectively:

$$\{\text{number of silanol}\} = [\{\text{water content derived from silanol (g)}\} \times \{\text{Avogadro's constant: } 6.02\times10^{23} \text{ (/mol)}\}\times 2] / \{\text{molecular weight of } H_2O \text{ (g/mol)}\}$$

$$\{\text{silanol content (nm}^{-2})\} = \{\text{number of silanol groups}\}/\{\text{surface area (nm}^{2})\}$$

(g) Other characteristics:

It is preferred that the silica of the present invention having the characteristics (a) to (f) further have the following optional characteristics.

•Particle shape:

On the shape of the silica particles, Japanese Unexamined Patent Application Publication No. 2003-220657 discloses that use of spherical particles increases the packing rate of the inorganic porous material and thus improves moisture adsorption/desorption capacity. In the present invention, however, the particle shape of the silica may be either spherical or milled. Milled silica, which has many interparticle voids, is more preferred. However, a large number of micropowder aggregates has the following problems; a low pore utility factor, low homogeneity of the composition due to further aggregate, and low preservation stability of the composition and so on. Thus, a narrow particle size distribution is preferred. The particle shape of the silica can be observed by scanning electron microscopy (SEM) and the like. The particle size distribution of the silica can be measured with a laser diffraction-scattering particle size analyzer (a Laser Micronsizer LMS-24 made by Seishin Enterprise Co. Ltd) and the like.

• Properties on hydrothermal resistance:

In the silica of the present invention, it is preferred that the pore characteristics do not so significantly change by heating in water (hydrothermal resistance test). Variations in pore characteristics of silica after the hydrothermal resistance test can be observed in the form of, for example, variations in specific surface area, pore volume, and pore diameter distribution. After the silica of the present invention is subjected to a hydrothermal resistance test at 200°C for 6 hours, the specific surface area after the test is preferably 20% or more of the specific surface area before the test (specific surface area residual rate is 20% or more). The silica of the present invention having such characteristics is preferred since porous characteristics can be maintained under a severe condition for a long time. The specific surface area residual rate is preferably 35% or more and more preferably 50% or more.

In the hydrothermal resistance test in the present invention, silica is brought into contact with water at a predetermined temperature (200°C) for a predetermined time (6 hours) in a closed system. The silica should be completely present in water. For example, the entire closed system may be filled with water. Alternatively, the system may have a pressured vapor phase portion containing water vapor. The pressure of the vapor phase portion is, for example, 60000 hPa or more and preferably 63000 hPa or more. The error of the predetermined temperature generally resides within ±5°C, preferably ±3°C, and more preferably ±1°C

• Characteristics on solid-state Si-NMR spectroscopy:

On the structure of the silica of the present invention, it is preferred that the following solid-state Si-NMR (nuclear magnetic resonance) spectroscopic results be obtained.

Silica is amorphous hydrated silicate, which is represented by the rational formula $SiO_2 \cdot nH_2O$, and has a network structure in which O is bonded at each apex of the Si tetrahedron and is bonded to another Si atom. In the Si-O-Si-O- repeating unit, part of O is replaced with a substituent (for example, -H or $-CH_3$). On a certain Si atom, the Si atom is bonded to four -OSi groups as shown in the following formula (A) {Si($Q^4$)} or three -OSi groups as shown in the following formula (B) Si($Q^3$)}. In the formulae (A) and (B), the Si-O network structure is illustrated in a plane without considering their tetrahedral structure described above. In the solid-state Si-NMR spectroscopy, peaks attributed to these Si bonds are referred to as $Q^4$ peak, $Q^3$ peak, ···, in sequence.

[Chem. 1]

(A)

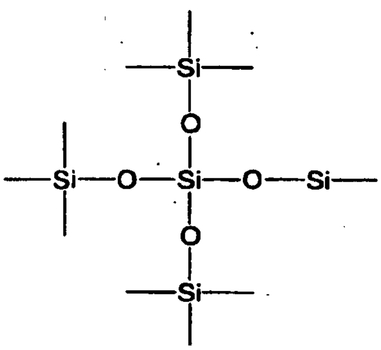

(B)

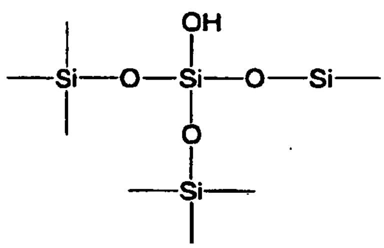

In the solid-state Si-NMR spectroscopy of the silica of the present invention, the molar ratio $Q^4/Q^3$ is generally 1.2 or more, preferably 1.3 or more, more preferably 1.4 or more, and most preferably 1.5 or more. Noted that Si($Q^4$) has four -OSi bonds, and Si($Q^3$) has three -OSi bonds. Although the upper limit is not critical, it is generally 10 or less.

It is known that the thermal stability of silica is generally excellent at a higher ratio. This demonstrates that the silica of the present invention has significantly good thermal stability. Specifically, the silica of the present invention has a structure resistive to heat. Thus, the resin forming product of the present invention can be used stably for a long term. In contrast, some crystalline micelle-templated silica has a $Q^4/Q^3$ ratio of less than 1.2 and shows poor thermal stability and in particular hydrothermal stability and the like.

In addition, it is preferred that the distortion of the bond angle of the siloxane bonds in the skeleton of the silica of the present invention be small. The structural distortion of the silica can be represented by the chemical shift of the $Q^4$ peak in a solid-state Si-NMR spectrum.

From the relationship between the structural distortion of the silica and the chemical shift δ (ppm) of the $Q^4$ peak, for the silica of the present invention, δ preferably satisfies the following relationship (1) [δ is smaller than the value {$-0.0705 \times (D_{max}) - 110.36$} represented by the left part of the relationship (1) (the peak is shifted to more negative side)].

$$-0.0705 \times (D_{max}) - 110.36 > \delta \quad (1)$$

Conventional silica has a chemical shift δ of the $Q^4$ peak that is generally larger than a value calculated by the left part of the relationship (1) (shifted to more positive side). Thus, the chemical shift of the $Q^4$ peak of the silica of the present invention is smaller than that of the conventional silica. Accordingly, in the silica of the present invention, the chemical shift of the $Q^4$ peak resides at a higher magnetic field. This shows that the bond angles represented by two -OSi bonds are more uniform and structural distortion is significantly moderated.

In the silica of the present invention, the chemical shift δ of the $Q^4$ peak is preferably 0.05% or more, more preferably 0.1% or more, and most preferably 0.15% or more smaller than that calculated from the left portion ($-0.0705 \times (D_{max}) - 110.36$) of the relationship (1). In general, the minimum of the $Q^4$ peak of silica gel is -113 ppm.

The silica of the present invention shows excellent thermal resistance and water resistance, and stable physical

properties. Thus, humidity conditioning ability can be maintained for a long term at high temperature and high humidity. The relationship between this ability and the structural distortion is still unclear, but is presumed as follows. Silica is composed of aggregates of spherical particles having different particle sizes. In the state in which the structural distortion is moderated, a highly uniform like microstructure is maintained over the entire spherical particles. As a result, high thermal resistance and water resistance are ensured. As for the $Q^3$ or lower peaks, the structural distortion of the silica is difficult to be appeared because the spread of the Si-O network structure is limited.

The ratio $Q^4/Q^3$ and the chemical shift of the $Q^4$ peak can be determined by solid-state Si-NMR spectroscopy. The analysis (determination of the peak position) of the data obtained can be carried out by, for example, extracting each peak by curve fitting analysis and the like using a Gaussian function.

•Metal impurity content:

It is preferred that the silica of the present invention be highly pure. More particularly, the total content of metal elements (metal impurities) other than silicon, which is a constituent of the silica skeleton, is generally 500 ppm or less, preferably 100 ppm or less, more preferably 50ppm or less, and most preferably 30ppm or less. Such a reduction in impurity ensures high endurance, high thermal resistance, and high water resistance. Furthermore, a low metal impurity content can prevent contact of the binder resin with metal impurities in the resin forming product formed using the coating composition of the present invention (the resin forming product of the present invention described below). Since photodegradation, thermal degradation, and aging degradation caused by such contact do not occur, the resin forming product of the present invention can be used stably for a long term. The metal impurity content in the silica can be determined by any elemental analysis, for example, ICP emission spectrometry.

As described below, the silica of the present invention may intentionally contain other components such as specific atoms and atomic groups according to its application in order to obtain a desired function. Thus, whether the silica of the present invention contains components other than silica should be determined according to application.

• Other components:

The silica of the present invention may contain other components as described above. The other components contained in the silica of the present invention are not limited. The silica may contain and/or support any components, for example, various auxiliary agents, useful elements (hereinafter, "useful foreign elements") and/or their compounds, and organic groups (hereinafter, "useful organic groups").

These other components may be compounded by any means in any step of the production process, as long as the coating composition of the present invention (and the resin forming product of the present invention containing the composition) does not lose its intended functions. For example, these components may be contained in the binder resin or in the solvent used in the coating composition instead that silica contains and/or supports these components. Alternatively, the components may be compounded in the coating composition during or after the preparation of the coating composition, or may be compounded in the resin forming product during or after the preparation of the resin forming product. As described above, these components may be compounded and/or supported in the silica by any means. For example, auxiliary agents may be compounded or supported during or after the production of the silica, or may be supported on the silica in the resin forming product after the production of the resin forming product of the present invention using the coating composition of the present invention. The additives descried below may also be supported on the silica in advance. These auxiliary agents and additives may be compounded by any operation such as impregnation after the production of resin forming product and the base material. The auxiliary components may be used alone or in any combination of two or more with any proportion.

As an auxiliary agent, for example, an auxiliary moisture adsorbent may be supported. The auxiliary moisture adsorbent is contained to impart a highly functional moisture conditioning effect to the silica. The auxiliary moisture adsorbent preferably has high affinity for water and is selected from various compounds, such as organic compounds, inorganic compounds, and metal salts. The auxiliary moisture adsorbents may be used alone or in any combination of two or more with any proportion.

The auxiliary agent is supported on the silica such that the content of at least one compound among these compounds is generally 1 weight% or more, preferably 3 weight% or more, more preferably 5 weight% or more, and generally 80 weight% or less, preferably 60 weight% or less, and more preferably 50 weight% or less of the weight of the silica. The auxiliary moisture adsorbents may be used alone or in any combination of two or more with any proportion.

When an auxiliary moisture adsorbent composed of a metal salt is contained in the pores, the content of the auxiliary moisture adsorbent is preferably controlled such that the volume of the auxiliary moisture adsorbent aqueous solution trapped in the pores by moisture adsorption does not exceed the total pore volume of the silica at a maximum humidity under its use conditions. The metal salts are present as aqueous solution in the pores under a high-humidity condition.

If the volume of the aqueous solution, which contains the metal salt and moisture adsorbed on the metal salt, exceeds the pore volume, the aqueous solution overflows from the pores. When the silica is dried for dehumidification, the metal salt discharged with the aqueous solution from the pores undesirably remains on the exterior of the pores, resulting in deterioration of the hygroscopic capacity of the silica in some cases. Thus, a high content of metal salt cannot be used in a high-humid region in some cases regardless of an increase in hygroscopic capacity. This may limit the available humidity region.

However, in a case capable of an improvement in facility, for example, providing incidental equipment, the silica can be used under an operation cycle that recycles the silica before the amount of water in the pores exceeds the pore volume, even in a high humidity region that cannot be used under a static adsorption condition.

Silica that contains an alkali metal salt or an alkaline earth metal salt as the auxiliary moisture adsorbent has a significantly high moisture adsorption capacity. Since the alkali metal and alkaline earth metal have high affinity for water vapor and enhances hygroscopicity, these can be used as auxiliary moisture adsorbents. Thus, in the case of use of the auxiliary moisture adsorbent, the silica preferably contains at least one metal salt selected from the group consisting of alkali metal salts and alkaline earth metal salts, as the auxiliary moisture adsorbent.

Any alkali metal salt and alkaline earth metal salt may be used. In view of significantly high affinity for moisture, the auxiliary moisture adsorbent preferably includes at least one or more selected from the group consisting of LiF, NaF, KF, $CaF_2$, $MgF_2$, $Li_2SO_4$, $Na_2SO_4$, $K_2SO_4$, $CaSO_4$, $MgSO_4$, $LiNO_3$, $NaNO_3$, $KNO_3$, $Ca(NO_3)_2$, $Mg(NO_3)_2$, NaCl, LiCl, $CaCl_2$, $MgCl_2$, LiBr, LiI, and KBr. Among these salts more preferably are lithium salts having the highest hygroscopicity, and particularly lithium chloride having high moisture absorbance per unit weight.

The auxiliary moisture adsorbent may be present in any form. For example, the adsorbent may be dispersed as molecules, clusters, or particles in the silica, or may adhere on the silica surface or the like. Alternatively, at least part of the auxiliary moisture adsorbent may be bonded to silicon atoms directly or via oxygen atoms. The auxiliary moisture adsorbent may be solid or liquid. The auxiliary moisture adsorbent may be hydrated or part of the auxiliary moisture adsorbent may be present as a solution in the pores.

The content of the auxiliary moisture adsorbent composed of metal salts selected from the alkali metal salts and alkaline earth metal salts is generally 1 weight% or more, preferably 3 weight% or more, and more preferably 5 weight% or more, and generally 80 weight% or less, preferably 60 weight% or less, and more preferably 50 weight% or less. Herein, "metal salts selected from the alkali metal salts and alkaline earth metal salts" represents generally four types, preferably three types, and more preferably two types, and most preferably one type, in the descending order of the content, among metal salts selected from the alkali metal salts and alkaline earth metal salts contained in the silica of the present invention. In the case of use of two or more metal salts selected from the alkali metal salts and alkaline earth metal salts, the total content is controlled within the above range.

The silica of the present invention can support metal salts as the auxiliary moisture adsorbents with a highly dispersed state and can maintain excellent pore characteristics after the supporting operation, compared with conventional silica. As a result, the supported metal salts exhibit high hygroscopicity corresponding to an almost theoretical moisture adsorption volume. The reason for such high hygroscopicity is probably due to multiple factors, but is not yet clear. A possible reason is as follows.

Since the carrier (silica) is significantly high purity and has a uniform structure in which the bond angle of the siloxane bond has reduced distortion, the surface of the carrier is homogeneous and has small active points at which metal salts are specifically adsorbed. In general, metal salts supported in pores are present as solid at low humidity, and the silica of the present invention uniformly supports metal salts in the pores, resulting in high surface area and high adsorption capacity. At high humidity, metal salts are generally present as aqueous solution in the pores. In the silica of the present invention, however, these are uniformly supported in the pores, as in low humidity. For example, an aqueous solution of lithium salt as the metal salt has a relatively high viscosity. If the salt is nonuniformly supported in pores, sites with high viscosity and high liquid layer thickness are localized. In conventional silica, at such sites with high viscosity and high liquid layer thickness, the dispersion velocity of water adsorbed in the pores (specifically in the viscous lithium salt aqueous solution) is not sufficiently dispersed, and the entire lithium salt in the pores cannot effectively contribute to moisture adsorption (only part of the lithium salt in the pore contributes to moisture adsorption). In contrast, in the silica of the present invention, the metal salt aqueous solution is uniformly supported in the pores, preventing this disadvantage.

The pore diameter of the silica slightly decreases by supporting the auxiliary agents such as auxiliary moisture conditioning agents. In view of such a phenomenon, it is preferred that the pore size of the silica be large in some degree so that the silica can satisfactorily supports the auxiliary agents.

Examples of other components which may be contained in the silica include useful foreign elements and their compounds that belong to groups 3A, 4A, and 5A, and transition metals in the periodic table. Silica may have these useful foreign elements in some cases. The useful foreign elements and their compounds may be used alone or in any combination of two or more with any proportion.

When the silica contains useful foreign elements or their compounds as other components, the useful foreign

elements or their compounds are at least one element or its compound selected from the group (useful foreign element group) consisting of groups 3A, 4A, and 5A, and transition metals in periodic table. Among these, examples of preferred elements include group 3A elements such as B, Al, Ga, In, and Tl; group 4A elements such as C, Si, Ge, Sn, and Pb; group 5A elements such as N, P, As, Sb, and Bi; and transition metal elements such as Sc, Ti, V, Cr, Mn, Fe, Co, Ni, Cu, Zn, Y, Zr, Nb, Mo, Tc, Ru, Rh, Pd, Ag, Cd, lanthanoids, Hf, Ta, W, Re, Os, Ir, Pt, Au, Hg, actinoids, Rf, Db, Sg, Bh, Hs, and Mt. Among these, B, Al, Ga, In, Tl, Ge, Sn, Pb, P, As, Sb, Bi, Sc, Ti, V, Cr, Mn, Fe, Co, Ni, Cu, Zn, Y, Zr, Nb, Mo, Tc, Ru, Rh, Pd, Ag, Cd, lanthanoids, Hf, Ta, W, Re, Os, Ir, Pt, Au, Hg, and actinoids that have high activity and that are useful in various applications are preferred.

Among these useful foreign elements, B, Al, Ga, In, Tl, Fe, Ti, P, W, Mo, and Zn are particularly preferred in the fields of solid acid catalysts and solid base catalysts. In the fields of hydrogenation catalysts and dehydrogenation catalysts, W, Mo, Tc, Re, Ru, Os, Rh, Ir, Pd, Pt, Ag, Au, Ni, and Cu are preferred. In the field of redox catalysts, Ti, Zr, Hf, V, Nb, Ta, Cr, Mo, W, Mn, Fe, Co, Ni, Cu, Zn, Sn, Ge, and Pb are preferred. In the field of photocatalysts, Ti, Zn, W, Sn, and Cd are preferred. In the field of polymerization catalysts, Ti, Zr, Cr, Fe, Ge, Sb, Bi, V, Mo, W, Mn, Co, Cu, Sc, and Nb are preferred.

The applications of these elements belonging to groups 3A, 4A, and 5A, and transition metal elements are not limited to that described above and may include other applications, such as antibacterial agents (e.g. Ti, Ag, Cu, and Zn); water resistance improvers (stabilizers) (e.g. Zr and Ti); and fluorescent materials (rare earth elements and lanthanoids).

The silica of the present invention can contain these useful foreign elements and/or their compounds in the interior of the silica or can support these useful foreign elements and/or their compounds on the surface of the silica. It is preferred that these useful foreign elements and/or their compounds be particulate. The diameter of the particles is preferably small not to block the pores of the silica.

The silica of the present invention may have any other organic group according to application. Hereinafter, the organic group of the silica is referred to as "useful organic group", and the silica having the useful organic group is referred to as "silica containing organic group". The useful organic group may be used alone or in any combination of two or more with any proportion.

The type of the useful organic group introduced to the silica containing organic group is not limited. For example, any known organic group of silane coupling agents can be used. The conditions of particularly useful organic groups are as follows.

The number of carbon atoms of the useful organic group is generally 1 or more, and generally 1000 or less, preferably 500 or less, more preferably 100 or less, and most preferably 50 or less.

The useful organic groups are preferably monovalent or multivalent organic groups that are induced from aliphatic compounds, alicyclic compounds, aromatic compounds, and alkylaryl compounds.

Part of the hydrogen of the useful organic group may be substituted by any other atom or atomic group. Nonlimiting examples of atoms and atomic groups introduced in the useful organic group are atoms and organic functional groups. Examples of the atoms and functional groups include halogen atoms, such as a fluorine atom, a chlorine atom, a bromine atom, and an iodine atom; a phenyl group, a vinyl group, a methacryloxy group, an acryloxy group, a styryl group, a mercapto group, an epoxy group, an epoxycyclohexyl group, a glycidoxy group, an amino group, a cyano group, a nitro group, a sulfonate group, a carboxy group, a hydroxy group, an acyl group, an alkoxy group, an ammonium group, and an allyl group.

When the useful organic group substituted by these atoms or atomic groups is introduced into the silica, the silica has a property based on the property of each organic functional group. The selection of the functional group depends on application of the silica material having the functional group.

In addition, at least part of hydrogen atoms of these organic functional groups may be substituted by other atoms or atomic groups such as O, N, and S. The organic functional groups shown here can be readily introduced into silica. Other organic functional groups having different chemical reactivities and physical properties may also be introduced according to the intended purpose. The atoms and atomic groups introduced instead of the useful organic group may be present alone or in any combination of two or more with any proportion types.

The useful organic groups may have various atoms or atomic groups such as O, N, and S as connection groups.

When the useful organic group is supported on the surface of the silica, the silica surface can be modified. One of the properties imparted by such surface modification is improved affinity for organic materials. In order to impart such a property, examples of the useful organic group include functional groups having high affinity for or chemical reactivity with the organic resin matrix, such as C1-C50 alkyl groups, a vinyl group, a methacryloxy group, an acryloxy group, a styryl group, a mercapto group, an epoxy group, an epoxycyclohexyl group, and a glycidoxy group. When the useful organic group is one having a double bond, e.g. a vinyl group, a methacryloxy group, an acryloxy group, or a styryl group, the group can be tightly bonded to organic resins having double bonds, resulting in silica containing organic group with high structural strength and high water resistance. Furthermore, the supported useful organic group can be used as a skeleton for various functional materials.

The useful organic group may be introduced into silica containing organic group in any state. In general, the useful organic group is directly bonded to a silicon atom or silicon atoms according to its valence by covalent bond. Thus, the useful organic group is contained in the silica containing organic group. Since the silicon atom bonded to the useful organic group is a part of the silica skeleton in this case, the useful organic group is substantially introduced into the silica skeleton directly. In order to introduce the useful organic group to the silica of the present invention in such a state, a reagent having a reactive terminal that can form a siloxisane bond in the useful organic group may be used. Among such reagents, a typical reagent that can be readily available is a silane coupling agent shown below. Although there are several general synthetic reagents (hereinafter, referred to as "reagents introducing organic group") reactive with silanol to form siloxane bonds, these cannot readily be available at industrial scale and their reaction conditions are often limited.

Throughout the specification, the silane coupling agent represents a generic name of compounds in which the useful organic group described above is directly bonded to the silicon atom and is represented by the following formulae (I) to (IV) :

$$X_3SiR^1 \qquad (I)$$

In the formula (I), X is independently a hydrolyzable silyl group that is hydrolyzed by water in an aqueous solution, water in air, or water adsorbed on the surface of an inorganic material to form a highly reactive silanol group. The type of such a group is not limited and may be any known type. Examples of the silyl groups include a C1-C4 lower alkoxy group, an acetoxy group, a butanoxime group, and chloro group. These hydrolyzable silyl groups may be used alone or in any combination of two or more with any proportion.

$R^1$ is a monovalent group of the useful organic groups described above.

The silane coupling agents represented by the formula (I) are most commonly used. Examples of the silane coupling agents include 3-glycidoxypropyltrimethoxysilane, 2-(3,4-epoxycyclohexyl)-ethyltrimethoxysilane, 3-aminopropyltrimethoxysilane, 3-aminopropyltriethoxysilane, 4-aminobutyltriethoxysilane, p-aminophenyltrimethoxysilane, N-(2-aminoethyl)-3-aminopropyltrimethoxysilane, aminoethylaminomethylphenetyltrimethoxysilane, N-(6-aminohexyl)aminopropyltrimethoxysilane, 3-chloropropyltrimethoxysilane, 3-chloropropyltrichlorosilane, (p-chloromethyl)phenyltrimethoxysilane, 4-chlorophenyltrimethoxysilane, 3-methacryloxypropyltrimethoxysilane, 3-methacryloxypropyltriethoxysilane, 3-acryloxypropyltrimethoxysilane, styrylethyltrimethoxysilane, 3-mercaptopropyltrimethoxysilane, vinyltrimethoxysilane, vinyltriethoxysilane, vinyltrichlorosilane, vinyltriacetoxysilane, vinyltris(2-methoxyethoxy)silane, and trifluoropropyltrimethoxysilane.

$$X_2SiR^2R^3 \qquad (II)$$

In the formula (II), X is independently a hydrolyzable silyl group as in X in the formula (I).

$R^2$ and $R^3$ are each a monovalent group of the useful organic groups, as in $R^1$ in the formula (I). $R^2$ and $R^3$ may be the same groups or different groups.

Examples of the silane coupling agent represented by the formula (II) include dimethyldimethoxysilane, dimethyldiethoxysilane, diphenyldimethoxysilane, diphenyldiethoxysilane, and diphenyldichlorosilane.

$$XSiR^4R^5R^6 \qquad (III)$$

In the formula (III), X is independently a hydrolyzable silyl group as in X in the formula (I).

$R^4$, $R^5$, and $R^6$ are each a monovalent group of the useful organic groups, as in $R^1$ in the formula (I). $R^4$, $R^5$, and $R^6$ may be the same groups or different groups.

Examples of the silane coupling agent represented by the formula (III) include trimethylmethoxysilane, trimethylethoxysilane, trimethylchlorosilane, and triphenylchlorosilane.

$$(X_3Si)_mR^7 \qquad (IV)$$

In the formula (IV), X is independently a hydrolyzable silyl group as in X in the formula (I).

$R^7$ is a m-valent useful organic group, and m is an integer of 2 or more.

Examples of the silane coupling agent represented by the formula (IV) include various organic polymers and oligomers each having plural hydrolyzable silyl groups as side chains.

These exemplified compounds of the formulae (I) to (IV) are part of commercially available silane coupling agents, and their details are described in Chapter 9 Kappuringuzai oyobi Kanren Seihin Ichiranhyou (List of Coupling Agents and Related Products) of "Kappuringuzai Saiteki Riyou Gijutsu (Optimum Utilization Technology of Coupling Agents)" published by Kagaku Gijutsu Sogo Kenkyusho.

The silane coupling agents that can be used in the present invention are not limited to these examples.

The type and amount of the useful organic groups to be introduced are not limited within the range that does not preclude the function of the useful organic groups. Thus, any type of silane coupling agent or organic group introducing reagent having these useful organic groups may be used in a suitable amount. In order to obtain high-purity silica containing organic group, preferably, the silane coupling agent or reagents introducing organic group having these useful organic groups is also high purity.

The other components contained in the silica, including the useful foreign elements and the useful organic groups described above, may be used alone or in any combination of two or more with any proportion.

[1-1-3. Production of silica]

The production of the silica of the present invention will now be described.

The method for making the silica of the present invention is not limited, and the silica can be produced by any conventional process. Examples of methods for making silica are as follows:

(i) Liquid glass is neutralized with an acid such as sulfuric acid followed by gelation.
(ii) Alkoxysilane is hydrolyzed followed by gelation.
(iii) Using alkoxysilane or liquid glass as a raw material, pores are formed with a surfactant as an organic template (so-called micelle-templated silica).

An example of the process for making the silica of the present invention is described below, but the method of the present invention should not be limited to this process.

This process, which differs from conventional sol-gel processes, includes a hydrolysis/condensation step including a hydrolysis substep that hydrolyzes a silicon alkoxide or alkali silicate (preferably silicon alkoxide) and a condensation substep that condenses the resulting silica hydrosol to form silica hydrogel; and a physical property modifying step that hydrothermally treat the silica hydrogel without aging to silica gel having desirable properties.

Examples of silicon alkoxides used as raw materials for the silica of the present invention include trialkoxysilanes or tetraalkoxysilanes having a C1-C4 lower alkyl group, such as trimethoxysilane, tetramethoxysilane, triethoxysilane, tetraethoxysilane, tetrapropoxysilane, and tetrabutoxysilane, and oligomers thereof. Among these, tetramethoxysilane, tetraethoxysilane, and their oligomers, and particularly tetramethoxysilane and its oligomers are preferred in order to produce silica having excellent pore characteristics, since high-purity silicon alkoxides readily prepared by distillation are suitable for raw materials for high-purity silica. The total content of alkali metals and/or alkaline earth metals (metal impurities) in the silicon alkoxides is generally 100 ppm or less, preferably 50 ppm or less, more preferably 10 ppm or less, and most preferably 1 ppm or less. The metal impurity content can be determined by a conventional impurity measuring method for silica.

In the present invention, a silicon alkoxide is hydrolyzed without catalyst and the resulting silica hydrosol is condensed to form silica hydrogel in the hydrolysis/condensation step.

The amount of water used in the hydrolysis of the silicon alkoxide is not limited, and generally 2 mole or more, preferably 3 mole or more, and more preferably 4 mole or more, and generally 20 mole or less, preferably 10 mole or less, and more preferably 8 mole or less for 1 mole of silicon alkoxide. By hydrolysis of silicon alkoxide, silica hydrogel and alcohol are generated, and the silica hydrosol is condensed seriatim into silica hydrogel.

Also, the temperature of hydrolysis is not limited, and is generally controlled to the range of room temperature to 100°C or less. If a liquid phase is maintained under increased pressure, the hydrolysis may be carried out at higher temperatures. The reaction time required for the hydrolysis depends on the composition of the reaction solution (type of the silicon alkoxides and molar ratio to water) and the reaction temperature. Furthermore, the time required for gelation is different. Thus, the reaction time cannot be fixed. In order to prepare silica having excellent pore characteristics, such as the silica of the present invention, it is preferred to control the reaction time such that the fracture stress of the hydrogel does not exceed 6 MPa.

The hydrolysis can be accelerated in the presence of a catalyst such as acid, alkali, or salt in the hydrolysis system. The use of such a catalyst, however, is not recommended in the production of the silica of the present invention because it causes the resulting hydrogel to be aged.

During the hydrolysis of the silicon alkoxide, the reaction system must be sufficiently stirred. In the case of the use of a stirrer having a rotary shaft provided with stirring blades, the stirring rate (the number of rotation of the rotary shaft) is generally 30 rpm or more and preferably 50 rpm or more, although it depends on the shape and the number of the blades and the contact area of the blades with the solution and the like.

An excessively high stirring rate causes generation of droplets in the vessel. Such droplets lead to blocking of gas lines of the vessel. Furthermore droplets trapped on the inner wall lead to deterioration of thermal conductivity that will adversely affect the temperature control essential for physical property control. If the deposit on the inner wall is

detached, this contaminant will cause deterioration of the product quality. Accordingly, the stirring rate is preferably 2000 rpm or less and more preferably 1000 rpm or less.

In the present invention, the separate two liquid phases (aqueous phase and silicon alkoxide phase) can be stirred by any stirring method that can accelerate the reaction. For example, the following apparatuses (i) and (ii) are suitable for mixing these two liquid phases.

(i) An apparatus having a rotary shaft that is inserted substantially perpendicularly or having slight angle to the liquid surface and stirring blades that causes vertical flow of the solution.
(ii) An apparatus having a rotary shaft that is placed substantially in parallel to the interface between the two liquid phases and stirring blades that causes mixing between these phases.

The peripheral velocity of the stirring blades (the speed at the leading edges of the stirring blades) of the apparatuses (i) and (ii) is generally 0.05 m/s or more and preferably 0.1 m/s or more, and generally 10 m/s or less, preferably 5 m/s or less, and more preferably 3 m/s or less.

The shape and length of the stirring blades are not limited. Examples of the stirring blades include propeller blades, paddle blades, angled paddle blades, pitched paddle blades, flat blade disc turbines, curved paddle blades, pfaudler blades, and brumargin blades.

The width, number, and tilt angle of the blades may be determined by the shape and size of the reactor and the designed mixing ability. In preferred stirring apparatuses, the ratio (b/D) of the blade width (length of the blade along the rotary shaft) to the inner diameter of the reactor (maximum diameter of the liquid phase surface perpendicular to the rotary shaft) is 0.05 to 0.2, the tilt angle ($\theta$) is 90° $\pm$10°, and the number of the blades is 3 to 10.

The following structure is preferred in view of stirring efficiency and facility maintenance. The rotary shaft is provided above the liquid surface in the reactor, and stirring blades are provided at the tip of the shaft extending from rotary shaft.

During hydrolysis of the silicon alkoxide, the silicon alkoxide is hydrolyzed into silica hydrosol, and condensation of the silica hydrosol occurs successively with an increase in viscosity of the reaction solution to form silica hydrogel finally.

In the physical property modifying step of the present invention, the silica hydrogel generated by the hydrolysis is subjected to hydrothermal treatment in an unaging state substantially before the hardness of the silica hydrogel increases. The silicon alkoxide generates soft silica hydrogel by hydrolysis. The silica of the present invention is difficult to be produced by a series of operations including aging or drying and then hydrothermal treatment of the silica hydrogel for stabilization of the hydrogel characteristics.

In the immediate hydrothermal treatment without aging of the silica hydrogel formed by hydrolysis, soft silica hydrogel is subjected to the subsequent hydrothermal treatment in a state when it is generated.

In particular, it is preferred that the silica hydrogel be subjected to hydrothermal treatment within generally 10 hours, preferably 8 hours, more preferably 6 hours, and most preferably 4 hours from the generation of the silica hydrogel.

In industrial plants, a large amount of silica hydrogel product, which is preserved in a silo, may be subjected to hydrothermal treatment later. In such a case, the time from generation of the silica hydrogel to the hydrothermal treatment (so-called storage time) may exceed the above upper limit. In order to prevent aging in this case, the silica hydrogel is preserved in the silo such that the liquid component in the silica hydrogel is not dried.

For example, the silo is sealed hermetically or humidity is controlled. Alternatively, the silica hydrogel may be preserved by being immersed in water or any other solvent.

Preferably, the preservation temperature is as low as possible, for example, 50°C or less, more preferably 35°C or less, and most preferably 30°C or less. Another means that substantially prevents aging is preparation of silica hydrogel using a controlled raw material composition for the purpose of low silica concentration in the silica hydrogel.

The effects of hydrothermal treatment with unaging silica hydrogel and the reason for achieving such effects are discussed below.

Aging of the silica hydrogel will generate a macroscopic network structure by -Si-O-Si- bonds over the entire silica hydrogel. This network structure over the entire silica hydrogel precludes formation of mesopores during the hydrothermal treatment. And, silica hydrogel prepared from a controlled composition of raw materials to reduce the silica concentration in the silica hydrogel can suppress crosslinking of the silica hydrogel during preservation. As a result, silica hydrogel is not aged.

Thus, in the method for making the silica, hydrothermal treatment should be carried out before the silica hydrogel is aged.

Mixing acid, alkali, or salt to the hydrolysis reaction system for the silicon alkoxide or high hydrolysis temperature may accelerate aging of the hydrogel in some cases. Furthermore, it is preferred to minimize the time and temperature required for washing with water, drying, and preservation.

It is preferred that the silica hydrogel produced by hydrolysis of the silicon alkoxide be pulverized before the hydrothermal treatment into an average particle diameter of generally 10 mm or less, preferably 5mm or less, more

preferably 1 mm or less, and most preferably 0.5 mm or less.

As described above, in the method for making the silica of the present invention, it is important that the silica hydrogel is subjected to hydrothermal treatment immediately after the formation of the hydrogel. In the method for making the silica of the present invention, the critical point is that the silica hydrogel subjected to hydrothermal treatment is not aged. Thus, the silica hydrogel is not always subjected to hydrothermal treatment immediately after the formation of the hydrogel. For example, it may be subjected to hydrothermal treatment after it is allowed to stand at low temperature for a while.

If the silica hydrogel is not subjected to hydrothermal treatment immediately after its formation, the hydrothermal treatment may be carried out after the aging state of the silica hydrogel is checked. Methods for checking the aging state of the hydrogel are not limited. For example, the hardness of the hydrogel is one index. As described above, hydrothermal treatment of soft hydrogel having a fracture stress of generally 6 MPa or less can produce silica having physical properties defined in the present invention. The fracture stress is preferably 3 MPa or less and more preferably 2 MPa or less.

The hydrothermal treatment condition is not limited, and the state of water may be liquid or gas. In particular, slurry of silica hydrogel in liquid water is suitable for hydrothermal treatment. In the hydrothermal treatment, to one part by weight of silica hydrogel, generally 0.1 parts by weight or more, preferably 0.5 parts by weight or more, more preferably 1 part by weight or more, and generally 10 parts by weight or less, preferably 5 parts by weight or less, and more preferably 3 parts by weight or less of water is added to form slurry. This slurry is subjected to hydrothermal treatment at generally 30°C or more, preferably 40°C or more, and more preferably 100°C or more, and generally 250°C or less and preferably 200°C or less for generally 0.1 hours or more and preferably 1 hour or more, and generally 100 hours or less and preferably 10 hours or less. An excessively low hydrothermal treatment temperature may preclude formation of pores with a large pore volume.

The water used in the hydrothermal treatment may contain any solvent. Examples of the solvents include lower alcohols, such as methanol, ethanol, and propanol. The solvent may be an alcohol derived from alkoxysilane, if the silica hydrogel is produced by hydrolysis of the alkoxysilane as a raw material.

The solvent content in the water used in hydrothermal treatment is not limited, but preferably is as low as possible. For example, the silica hydrogel produced by hydrolysis of the alkoxysilane described above is washed with water and then is subjected to hydrothermal treatment at a low temperature of about 150°C. The resulting silica has excellent pore characteristics and a large pore volume. Alternatively, the silica hydrogel may be subjected to hydrothermal treatment with water containing a solvent at a temperature of about 200°C to prepare the silica of the present invention readily.

This hydrothermal treatment can be applied to, for example, production of a membrane reactor in which silica is formed in a membrane or laminate form on particles, a substrate, a tube or the like. Although the hydrothermal treatment may be continuously carried out in the hydrolysis reactor by modifying the temperature conditions, it is generally difficult to prepare silica of the present invention in a system to which water is not added due to difference in optimum condition between the hydrolysis and the subsequent hydrothermal treatment.

If the temperature is elevated in the hydrothermal treatment, the diameter and the pore volume of the resulting silica tend to increase. It is likely that the specific surface area of the silica will reach a maximum and then gradually decrease with treating time. In view of such a trend, the conditions are appropriately selected according to required physical properties. For example, in order to achieve high humidity conditioning ability, the silica is preferably produced at a hydrothermal treatment temperature in the range of 100°C to 200°C. Since the hydrothermal treatment is carried out to change the physical properties of the silica, a higher temperature compared with hydrolysis temperature described above is preferred.

In order to produce silica having a uniform microstructure, high-rate heating is preferred so that the temperature of the reaction system reaches an intended temperature within 5 hours during the hydrothermal treatment. More particularly, in the treatment in a vessel, the average heating rate from the start of the heating to the target temperature is generally 0.1°C/min or more and preferably 0.2°C/min or more, and generally 100°C/min or less, preferably 30°C/min or less, and more preferably 10°C/min or less.

Other preferred methods to reduce the heating velocity are heating using a heat exchanger and feeding of stocked hot water. Gradual heating may be employed with the above heating rate. If a long time is required until the temperature of the reaction system reaches the intended temperature, the aging of the silica hydrogel proceeds during the heating, resulting in low uniformity in the microstructure in some cases.

The heating time to the target temperature is preferably within 4 hours, and more preferably within 3 hours. To reduce the heating time, water used in the hydrothermal treatment may be preheated.

If the temperature and the time of the hydrothermal treatment are set outside of the above ranges, the silica of the present invention may be difficult to be prepared. For example, a high hydrothermal treatment temperature leads to a large pore diameter and a large pore volume of the silica, and a wide pore size distribution. If the hydrothermal treatment temperature is low, the resulting silica has low crosslinking degree, thermal instability, a pore size distribution with no peak, and an extremely small $Q^4/Q^3$ ratio in the solid-state Si-NMR described above.

Hydrothermal treatment in aqueous ammonia has similar effects at lower temperature compared with the treatment in pure water. Silica prepared by hydrothermal treatment in aqueous ammonia is generally hydrophobic compared with that produced by hydrothermal treatment with ammonia-free water. The hydrophobic property is further enhanced at a relatively high hydrothermal treatment temperature of generally 30°C or more and preferably 40°C or more, and generally 250°C or less and preferably 200°C or less. The concentration of ammonia in the aqueous ammonia is preferably 0.001 weight% or more and more preferably 0.005 weight% or more, and preferably 10 weight% or less and more preferably 5 weight% or less.

The resulting silica of the present invention is dried under proper conditions. The drying temperature is not limited, and is generally 40°C or more and preferably 60°C or more, and generally 200°C or less and preferably 120°C or less. Methods of drying are not limited. The drying may be carried out by a batch system or a flow system, and under normal pressure or reduced pressure. In particular, vacuum drying, which reduces the drying time and increases the pore volume and specific surface area of the resulting silica, is preferred.

If a carbon component derived from the silicon alkoxide raw material is contained, it can be removed by calcining at generally 400°C to 600°C, if necessary. The silica may be fired at a temperature up to 900°C to control the surface state. Furthermore, the surface may be treated with silane coupling agents, inorganic salts, or various organic compounds to control the hydrophilic or hydrophobic property. Any silane coupling agent can be used for this surface treatment. For example, the silane coupling agents for introduction of the useful organic groups described above can also be used in this treatment.

The resulting silica may be pulverized and classified, if necessary, to prepare the final product, namely, the silica of the present invention.

Preferably, the silica subjected to the hydrothermal treatment is dried after the water contained in the silica is replaced with a hydrophilic organic solvent. This inhibits shrinkage of silica during the drying step and produces silica having a large pore volume and excellent pore characteristics. This phenomenon is presumed as follows.

The major part of the liquid component in the silica slurry after the hydrothermal treatment is water. Since the water strongly interacts with silica, complete removal of water from the silica requires large energy.

A drying process (for example, heating by drying) in the existence of a large amount of water promotes a reaction of heated water with unreacted silanol groups, resulting in structural changes of the silica. The most noticeable change among the structural changes is condensation of the silica skeleton. This condensation produces localized silica regions with high density. Since the silica skeleton has a three dimensional structure, localized condensation of the skeleton (an increase in density of the silica skeleton) affects the pore characteristics of the entire silica particles composed of the silica skeleton, resulting in shrinkage of particles and shrinkage of the pore volume and pore diameter.

If the liquid component (containing a large amount of water) in the silica slurry is replaced with a hydrophilic organic solvent, the water in the silica slurry is excluded. Thus, the shrinkage of the silica can be prevented.

The hydrophilic organic solvent should be highly miscible with water, in consideration of the above description. In particular, solvents showing high intramolecular polarization are preferred. Solvents having a dielectric constant of 15 or more are more preferred.

In the method for making the silica of the present invention described above, preferably, hydrophilic organic solvent, which is used for removal of water in order to prepare high-purity silica, is removed in the subsequent drying step. Thus, hydrophilic organic solvents having low boiling points are preferred. Such solvents can be readily removed by drying (for example, drying by heating, vacuum heating, or heating under reduced pressure). The boiling point of the hydrophilic organic solvent is generally 150°C or less, preferably 120°C or less, and more preferably 100°C or less.

Examples of the hydrophilic organic solvents include alcohols, such as methanol, ethanol, propanol, and butanol; ketones, such as acetone, methylethylketone, and diethyl ketone; nitriles, such as acetonitrile; amides, such as formamide and dimethylformamide; aldehydes; and ethers. Among these preferred are alcohols and ketones. In particular, lower alcohols, such as methanol, ethanol, and propanol, and acetone are preferred. In production of the silica of the present invention, these hydrophilic organic solvents may be used alone or in any combination of two or more with any proportion.

If water can be removed, the hydrophilic organic solvent used may contain water. Since the water content in the hydrophilic organic solvent is preferred to be as low as possible, it is generally 20 weight% or less, preferably 15 weight% or less, more preferably 10 weight% or less, and most preferably 5 weight% or less.

In the production of the silica of the present invention, the temperature and pressure of the substitution treatment by the hydrophilic organic solvent is not limited. The treatment temperature is arbitrary, but it is generally 0°C or more and preferably 10°C or more, and generally 100°C or less and preferably 60°C or less. The pressure during the treatment may be normal pressure, pressurized pressure, or reduced pressure.

The amount of the hydrophilic organic solvent to come into contact with silica slurry is also not limited. If the amount of the hydrophilic organic solvent used is too small, the substitution rate with water is too law. If the amount is too large, no advantage comparable to the amount of the hydrophilic organic solvent is found regardless of an increase in substitution rate, resulting in economical disadvantages. In conclusion, the volume of the hydrophilic organic solvent to be used is generally 0.5 to 10 times the bulk volume of the silica. Preferably, the substitution operation using the

hydrophilic organic solvent should be repeated several times to ensure high substitution percentage.

The contact of the hydrophilic organic solvent with the silica slurry can be carried out by any process, for example, addition of the hydrophilic organic solvent while silica slurry being stirred in an agitated vessel; packing the silica recovered from silica slurry by filtration into a column and feeding hydrophilic organic solvent into the column; and leaving the silica immersed in the hydrophilic organic solvent.

The substitution operation using the hydrophilic organic solvent may be terminated based on the analytical results of the water content in the liquid components of the silica slurry. For example, the silica slurry is sampled and is subjected to the measurement of water content periodically. The water content may be determined at the end point that corresponds to a water content of generally 5 weight% or less, preferably 4 weight% or less, and more preferably 3 weight% or less. Water can be measured by any means, for example, by a Karl Fischer's method.

After the substitution operation using the hydrophilic organic solvent, the silica and the hydrophilic organic solvent are separated and the silica is dried to prepare silica of the present invention. These may be separated by any known solid-liquid separation process. More specifically, these can be separated by a solid-liquid separation process, such as decantation, centrifugation, or filtration, depending on the size of the silica particles. The processes may be applied alone or in any combination of two or more with any proportion.

As described above, the producing silica is used as the particle-shape silica after generally granulating by pulverization and classification. The form of the resulting silica is not limited and thus arbitrary. For example, the form may be spherical particles, other agglomerates having any shape, fine pulverized particles, or granules gathering fine pulverized particles. In economical view, preferred are pulverized particles of which the particles size can be readily controlled, or granules prepared from the pulverized particles. Furthermore, the silica may be shaped into a honeycomb construction. The particle size of the silica can be determined according to the conditions of its use.

The silica may be pulverized and classified with any processes. For example, the silica can be classified with a sifter, a gravity classifier, or a centrifugal classifier.

The silica may be pulverized with any apparatus or device. Examples of such apparatuses and devices include ball mills, such as tumbling mills, vibration ball mills, and planetary ball mills; agitation mills, such as column pulverizers, stirred vessel mills, sand grinders, and annular (circular) mills; high-speed rotary pulverizing mills, such as screen mills, turbo mills, and centrifugal mills; jet mills, such as circulating jet mills, collision mills, and fluidized-bed jet mills; shearing mills, such as kneaders and ong mills; colloid mills; and mortars. Among these, ball mills and agitation mills are preferred for production of silica with relatively small diameters (for example, 2 μm or less). Pulverization may be carried out either by a wet process or a dry process. A wet process is preferred for production of silica with relatively small diameters. Dispersion media used in the wet process may be either water or an organic solvent such as alcohol. The dispersion media may be a mixture of two or more solvents, depending on its application. Pulverization under excess high pressure or strong shearing force for a long time may impair pore characteristics of the silica in some cases.

In production of silica for fiber application, beads with a small diameter are preferably used in wet pulverization. More particularly, the diameter of the beads is generally 0.5mm or less and preferably 0.3mm or less. Thereby, the particle size of the silica for fiber application (silica fixed to fiber as a base material with a binder resin for production of a resin forming product) can be easily controlled within the preferable range {condition (i) described above}.

The beads efficiency (amount of pulverization per bead) of the pulverizer is preferably as high as possible.

If the silica produced by the above process is particle by pulverization or the like, the silica particles (primary particles) may be subjected to size enlargement by a known process to form particles (for example, spherical-shape) or aggregates. Silica having a primary particle size of 2 μm or less can be readily changed into aggregates by drying aqueous slurry of the silica without addition of a binder resin. However, a binder resin is necessary for aggregation of particles exceeding 2 μm in many cases. These aggregates composed of the silica and the binder resin correspond to the resin forming product of the present invention.

A variety of binder resins can be used in production of aggregates. Water-soluble binder resins are, for example, sugar, dextrose, corn syrup, gelatin, carboxymethylcellulose (CMC), polyvinylalcohol (PVA), other water-soluble polymers, liquid glass, and a hydrolyzed silicon alkoxide solution (also usable as solvent-soluble resins). Solvent-soluble binder resins are, for example, waxes, lacquers, shellac, and oil-soluble polymers. These binder resins may be used alone or in any combination of two or more with any proportion. In order to prepare silica without deterioration of pore characteristics, the use of the binder resin is not desirable. If the binder resin is used by necessity, its content must be minimized. Furthermore, since metallic impurities induce alteration of physical properties of the silica, use of a high-purity metal-less binder resin is preferred.

As described above, particulation (pulverization) of the silica may be carried out by any process. Examples of typical processes include rolling processes, fluidized bed processes, stirring processes, disintegration processes, compression processes, extruding processes, and jet processes. In order to prepare silica particles having controlled pore characteristics, the type, amount, and purity of the binder resin must be carefully selected and bare essentials of pressure must be applied for the particulation of the silica.

An embodiment of the method for making the silica of the present invention is described above, but the method

should not be limited to this embodiment.

As described above, the silica of the present invention may contain other components. The other components can be added to the silica by any process.

For example, the auxiliary agent may be introduced into the silica by the following process: In a production process of the silica of the present invention involving doping with the auxiliary agent before the hydrothermal treatment, an alkali silicate or a silicon alkoxide as a raw material is hydrolyzed, the resulting product is mixed with the auxiliary agent before gelation, and the resultant silica hydrogel is subjected to hydrothermal treatment. Silica of the present invention containing the auxiliary agent is thereby produced. In a preferred modification, after a mixture of the silicon alkoxide and the auxiliary agent is hydrolyzed, the resultant production may be subjected to hydrothermal treatment.

One or more auxiliary agents are contained in the system in the process for preparation of silica hydrogel through hydrolysis of the silicon alkoxide. The pattern of mixing is not limited within the scope that does not inhibit the formation of homogeneous silica hydrogel. Auxiliary agents that do not have strong catalytic activity to hydrolysis of the silicon alkoxide are preferred. Also, use of high-purity auxiliary agents is preferred in view of production of high-purity silica.

The auxiliary agent may be mixed by any process that does not inhibit formation of homogeneous silica hydrogel. The auxiliary agent may be mixed with water used for hydrolysis of the silicon alkoxide; may be mixed with the silicon alkoxide; or may be mixed with a homogeneous hydrosol solution immediately after the hydrolysis, depending on the process operation. Alternatively, the auxiliary agent is preliminarily hydrolyzed and the product is mixed to any one of the systems described above. Inversely, the auxiliary agent may be added after partial hydrolysis of the silicon alkoxide.

In another process, the silica of the present invention may be produced by supporting the auxiliary agent on high-purity silica after control of pores. In such a case, the auxiliary agent is introduced into pores of the silica by any conventional process, for example, by an impregnation process known as a catalyst preparation method. Examples of the process include an adsorption process, a pore-packing process, an "incipient wetness" process, an evaporation-to-dryness process, a spray process, and dry concentration process. When an auxiliary moisture adsorbent is supported as the auxiliary agent, by the auxiliary moisture adsorbent adhering on sites outside of the pores, large particles of the auxiliary moisture adsorbent are deposited. Since this leads to a decrease in hygroscopic property, a particularly preferred process is a pore-filing process that can prevent the aqueous auxiliary moisture adsorbent solution from overflowing to the outside of the pores.

In this case, the auxiliary agent can also be supported on the silica prepared by hydrothermal treatment immediately after hydrolysis of the silicon alkoxide without aging. This form is not limited as long as the auxiliary agent maintains its function. The use of a high-purity auxiliary agent is preferred in view of preparation of high-purity silica.

The silica carrier may be subjected to surface modification to alter its hydrophilic or hydrophobic property, surface activity, and acidity. The auxiliary agent may be introduced by any one of the processes described above. Introduction by supporting is preferred since it ensures pore control and wide flexibility in selection of the auxiliary agent.

This process to introduce the auxiliary agent to silica is also applicable to introduction of the auxiliary moisture adsorbent into the silica.

The process for containing and/or supporting useful foreign elements or their compounds as other components on the silica is similar to the process for introducing the auxiliary agent.

A useful organic group as one of the other components can be introduced in the silica, for example, as in the process for introduction of the auxiliary agent, except that a silica coupling agent (or an organic group introducing agent) is used instead of the auxiliary agent.

More specifically, on the introduction of the auxiliary agent into the silica, a silane coupling agent (or an organic group introducing agent) containing the useful organic group described above substituted for the auxiliary agent is mixed before the hydrolysis of the silicon alkoxide, followed by gelation. Using the resulting silica hydrogel, the silica containing organic group can be produced by utilizing the hydrothermal treatment.

Another preferred application of this process is hydrolysis of a mixture of the silicon alkoxide and the silane coupling agent or the organic group introducing agent. In this process, organic group introducing agents that are deactivated by moisture is difficult to be used.

In the step of producing silica hydrogel by hydrolysis of silicone aldehyde, the silane coupling agents and the organic group introducing agents may be compounded alone or in combination in the system. The type and amount of the organic group introducing agent are not limited within the scope that does not inhibit the formation of the homogeneous silica hydrogel, as described above. Any type of silane coupling agent and organic group introducing agent can be used as long as these reagents themselves and the decomposition product by the reaction do not preclude the formation of the homogeneous hydrogel. High-purity silane coupling agents and organic group introducing agents are preferred in view of preparation of high-purity silica gel.

The mixing process of the silane coupling agent and the organic group introducing agent is not limited as long as the process does not inhibit the formation of the homogeneous silica hydrogel. More particularly, the silane coupling agent and the organic group introducing agent may be mixed to water used for hydrolysis of the silicon alkoxide, or to the silicon alkoxide, or to a homogeneous hydrosol solution immediately after the hydrolysis, according to the operation.

Alternatively, the silane coupling agent and the organic group introducing agent may be preliminarily hydrolyzed before mixing to these systems, or may be mixed after partial hydrolysis of the silicon alkoxide.

Alternatively, the silica containing organic group can be produced by supporting a compound containing an intended useful organic group onto high-purity silica after the control of pores. In such a case, the silane coupling agent and the organic group introducing agent are introduced into the silica pores, by any process that is well known as a method of, for example, treating of inorganic powder with a silane coupling agent. Examples of such process include a wet process (aqueous solvent system, no aqueous solvent system), a dry process, a slurry process, a spray process, and a dry concentration process.

As described above, the useful organic group can be introduced by the process described above into the silica gel prepared by hydrolysis of the silicon alkoxide followed by hydrothermal treatment without aging. If the intended organic group is supported later, the high-purity silica gel carrier may be preliminarily treated. For example, calcining of carbon components derived from the raw materials, calcining to control the surface state, and boiling with an inorganic acid may be employed.

[1-1-4. Others]

The silica of the present invention described above has controlled structural characteristics, such as a large pore volume and a large specific surface area, and thus exhibits excellent adsorption/desorption capacity, for example, adsorption heat buildup, humidity conditioning ability, cooling effect, water retention, slow drug release, adsorptivity, and antibacterial activity. The use of an auxiliary agent, such as the auxiliary moisture adsorbent described above, enhances intended characteristics.

Furthermore, the silica of the present invention has excellent moisture conditioning capacity for the following reason.

Silica adsorbs excess water vapor at high humidity but releases the adsorbed water at low humidity. At an average pore diameter set at 3 to 5 nm, the humidity of the system can be controlled to a humidity corresponding to the average pore diameter (comfortable humidity region of 40% to 60% at dwelling environment). At an average pore diameter set at 5 nm to 10 nm, water vapor at high humidity (60% to 90%) is adsorbed, and a humid temper in a cloth at high humidity, for example, after exercise can be prevented. The humid conditioning capacity can be evaluated by an adsorption isotherm of water vapor to the silica. The mode diameter ($D_{max}$) of pores should be controlled within the above range so that the pore volume that maximizes the moisture adsorption is achieved even if the pore diameter distribution is not sharp.

The correlation between a relative vapor pressure ($P/P_0$) at which an adsorptive material (herein water vapor) starts to be rapidly adsorbed on the silica by capillary condensation [herein, the adsorptive material is water vapor and ($P/P_0 \times 100$) corresponds to the relative humidity (%)] and the pore radius r (nm) is represented by the Kelvin equation of the formula (2-1):

$$\ln(P/P_0) = -(2V_m \gamma \cos\theta)/(rRT) \quad (2\text{-}1)$$

In the formula (2-1), $V_m$ is a molar volume of the adsorptive material, $\gamma$ is a surface tension of the adsorptive material, $\theta$ is a contact angle of the adsorptive material, R is a gas constant, and T is an absolute temperature of the adsorptive material (K).

Supposing that the adsorptive material is water vapor and the temperature T = 298K (=25°C), the molar volume $V_m = 18.05 \times 10^{-6}$ m$^3$/mol and the surface tension $\gamma = 72.59 \times 10^{-3}$ N/m are obtained. At a gas constant R = 8.3143 J/deg·mol and a contact angle $\theta$ = 0, the formula (2-1) can be expressed by the following formula (2-2):

$$\ln(P/P_0) = -1.058/r \quad (2\text{-}2)$$

The formula (2-2) shows that water vapor is rapidly adsorbed into the pores of the silica by capillary condensation when the relative vapor pressure ($P/P_0$) is exp(-1.058/r) for silica with a pore radius r (nm).

The relative vapor pressure ($P/P_0$), thus the relative humidity, at which water vapor adsorption on the pores of the silica starts, primarily depends on the pore diameter 2r (nm). The control of the mode diameter ($D_{max}$) of pores within the above range such that the pore volume maximizes the moisture adsorption achieves rapid moisture adsorption response to a change in humidity and ensures a sufficient amount of moisture adsorption.

Since the silica of the present invention has a stable structure having a less distorted siloxane bond angle, physical properties such as pore characteristics are not significantly varied even if the silica is placed under severe

environments (for example, high temperature and high humid). Thus, the silica has advantages of suppressed deterioration of pore characteristics and thus adsorption/desorption activity after long-term use or repeated recycle processes by heat.

The silica of the present invention is characterized by a relatively high pore volume and a high specific surface area compared with other silica having a similar pore diameter, and shows excellent adsorption capacity to the adsorptive material and a high adsorption volume. On the humidity conditioning ability of other silica, dew forms on the silica when the moisture adsorption capacity is saturated at high humidity, resulting in loss of moisture adsorption function of the silica. In contrast, the silica of the present invention can effectively control humidity at a reduced amount.

Since the silica of the present invention is amorphous, the productivity is significantly high.

[1-2. Resin]

The binder resin (hereinafter, referred to as "binder resin of the present invention) contained in the coating composition of the present invention has the following characteristics:

(a) To be hydrophilic (property on the hydroxyl value):

Preferably, the binder resin should be hydrophilic. In the present invention, a hydrophilic binder resin has the following advantages: The coagulation of the inorganic porous material contained in the composition is prevented; even if the inorganic porous material is precipitated, precipitation of the inorganic porous material can be readily redispersed; and a resin forming product having a higher hydrophilic surface can be prepared. The "hydrophilic property" of the binder resin represents that the resin contains a polymer having hydroxyl groups on the main chain or any side chain. A plurality of binder resins may be used such that the mixture of the binder resins exhibits hydrophilicity as a whole.

The binder resin of the present invention has a solid hydroxyl value of 5 mgKOH/g or more, preferably 8 mgKOH/g or more, and more preferably 10 mgKOH/g or more, and 80 mgKOH/g or less, preferably 65 mgKOH/g or less, and more preferably 50 mgKOH/g or less. A lower hydroxyl value of the binder resin leads to instable dispersion of the inorganic porous material in the coating composition, low abrasion resistance of the resin forming product, and low adhesion property to the base material. A higher hydroxyl value of the binder resin leads to low water resistance of the resin forming product. A plurality of binder resins may be used such that the overall hydroxyl value of the mixture of the binder resins satisfies the above range.

The hydroxyl value of the binder resin can be measured according to "6.4 hydroxyl value" of JIS K1557. More particularly, using a phthalic anhydride in pyridine solution (concentration: about 140 g/1L) as an esterification reagent, the hydroxyl group of the binder resin is esterified, and the excess amount of reagent is titrated with a 0.5 N sodium hydroxide aqueous solution to determine the hydroxyl value of the binder resin.

To a sample that cannot adapt to this method, as an alternative method, the hydroxyl value can be calculated from the molecular weight and the proportion of each monomer unit contained in the polymer of the binder resin using the following relationship:

$$\Sigma(m \cdot \chi_m)/\Sigma(Mw_n \cdot \chi_n) \times 56.11 \times 1000$$

In the formula,
$Mw_n$ is a molecular weight of each unit;
$X_n$ is a molar fraction of each unit;
m is the number of moles of hydroxyl groups contained in one hydroxyl-containing monomer unit;
$X_m$ is a mole fraction of the hydroxyl-containing monomer units, and 56.11 is a molecular weight of potassium hydroxide.

Other methods include determination based on the calculated values of the configuration and the proportion of units by $^1$H-NMR spectrometry and determination based on the peak intensity and a calibration curve of an OH adsorption peak by infrared (IR) spectrometry.

(b)Characteristics on glass transition temperature (Tg):

If the pores of the inorganic porous material are filled by the intruding binder resin, the adsorption/desorption capacity will decrease. The binder resin of the present invention does not fill the pores of the inorganic porous material in the coating composition of the present invention (also, in the resin forming product of the present invention containing the coating composition).

Thus, the binder resin of the present invention has a glass transition temperature Tg of -5°C or more and

preferably 0°C or more, and 40°C or less and preferably 35°C or less. A lower Tg leads to low strength of the binder resin, which causes poor hygroscopicity of the resin forming product and poor physical properties and handling such as stickiness. A higher Tg leads to excessively high strength of the binder resin, which causes cracking and separation of the resin forming product.

(c) To be synthetic resin:

The type of the binder resin is not limited as long as the resin satisfies the characteristics described above, and is preferably a synthetic resin. Examples of the synthetic resins include esterified celluloses, such as nitrocellulose, cellulose acetate, and cellulose acetate butyrate; etherified celluloses, such as methyl cellulose and ethyl cellulose; and thermoplastic resins, such as polyamide resins, polyvinyl chloride-vinyl acetate copolymers, ethylene-vinyl acetate copolymers, and acrylic resins. Other examples include thermosetting resins, such as alkyd resins, aminoalkyd resins, urea formaldehyde resins, melamine resins, melamine-urea resins, phenolic resins, resorcinol resins, fran resins, epoxy resins, unsaturated polyester resins, polyurethane resins, polyimides, polyamide-imides, polybenzimidazole, and polybenzothiazole.
Further examples include; fat and oil, processed fat and oil, such as boiled oil, boiled flaxseed oil, wood stand oil, oily phenol resin, and maleic oil; oil- or fatty acid-modified phthalate resins, such as drying oil-modified phthalate resins, nondrying oil-modified phthalate resins, modified alkyd resins, epoxy-fatty acid ester resins, epoxy-alkyd resins, and oil modified polyurethane resins; polyester resins, such as unsaturated polyester resins, fluorinated modified-polyester resins, silicone-modified polyester resins, and urethane-modified polyester resins; silicone-modified resins; acrylic silicone-modified resins; fluorine-containing resins; and inorganic resins.
Also, styrene-maleic resins, acrylic resins, polyurethane resins, epoxy ester resins, and polyamine resins can be used as the binder resin.
As will be described below, in the case of combined use of an organic solvent and water or an aqueous solvent (hydrophilic solvent), examples of preferred binder resins are polymers, such as polyester elastomers, polyurethanes, thermally reactive polyurethane resins, acrylic resins, isocyanate resins, polyvinyl alcohol resins, polyacrylic emulsion, modified silicone resins, epoxy resins, melamine resins, and polymer latex.
In view of adherent property, the binder resin should preferably be resins categorized into polymer latex. An example of the polymer latex is a synthetic resin latex.
Examples of the synthetic resin latex include polyurethane latex, acrylic resin latex, polyvinyl acetate latex, and modified products and copolymers thereof. Thus, the binder resins in this case are, for example, polyurethane, acrylic resins, polyvinyl acetate, and modified products and copolymers thereof.
Acrylic latex, which is a typical synthetic latex, will be described in further detail.
A preferred acrylic resin latex is polymer emulsion primarily composed of a (meth)acrylate ester. Examples of (meth)acrylate esters, which are the primary component of the binder resin in this polymer emulsion, methyl (meth)acrylate, ethyl (meth)acrylate, butyl (meth)acrylate, 2-ethylhexyl (meth)acrylate, (meth)acrylic acid glycidyl ester, and 2-hydroxyethyl (meth)acrylate. Copolymerizable ethylenically unsaturated monomers may be used with this main component. Examples of such monomers include styrene, (meth)acrylonitrile, (meth)acrylic amide, N-methylol acrylic amide, vinyl acetate, vinyl propionate, polyvinyl chloride, vinylidene chloride, (meth)acrylic acid, itaconic acid, fumaric acid, crotonic acid, and maleic acid.
In combined use with these monomer, the content of the primary component, i.e. (meth)acrylate ester, should preferably be 50 weight% or more. Furthermore, acrylic resins prepared by emulsion polymerization are preferred. For example, the resin is polymerized by mixing water, an ethylenically unsaturated monomer, an emulsifier, such as sodium dodecylbenzene sulfonate or polyoxyethylene alkyl ether, and a radical initiator, and then heating with stirring the mixture to a predetermined temperature in a nitrogen-substituted reactor. The particle size of the acrylic resin can be controlled by adjusting the concentration of the emulsifier in the emulsion polymerization.
Examples of the binder resin having a glass transition temperature Tg in the range of -5°C to 40°C include acrylic resins, acrylic-urethane resins, polyurethane resins, and styrene-acrylic resins.
The binder resin may be used alone or in any combination of two or more with any proportion.
In particular, the binder resin of the present invention should preferably be a hydrophilized anionic resin. Herein, "hydrophilized" resin represents a resin modified with a hydrophilic solvent. Hydrophilization is easy to impart hydrophilicity to the resin composition and improves anti-dewing effect. Since pores can be effectively used, the humidity conditioning ability is also improved. Additional advantages are improved adhesion and flexibility. Examples of hydrophilized anionic resin include polyester resins, acrylic-urethane resins, acrylic resins, epoxy resins, polyurethane resins, styrene-acrylic resins, and vinyl acetate-acrylic resins.

(d) Others:

Any binder resin satisfying the requirements above can be used in the present invention. In order to prevent filling of the pores of the inorganic porous material by the binder resin, binder resins preferably used are ones that cannot intrude in the pores of the silica when the binder resin is mobile, in other words, in a liquid state, or in a solution or dispersion in any solvent (for example, a coating composition of an inorganic porous material and a binder resin in a solvent). Thereby, during the production of the resin forming product (the resin forming product of the present invention), pores of the inorganic porous material are not filled by the binder resin, resulting in high adsorption/desorption capacity of the inorganic porous material.

In general, it is preferred that the average particle size of the binder resin in the coating composition of the present invention be larger than the mode diameter of pores of the inorganic porous material used together. More specifically, the average particle diameter of the binder resin is as large as 1.0 time or more, preferably at least 1.1 times, and more preferably at least 1.2 times the mode diameter of pores of the inorganic porous material.

The average particle diameter of the binder resin should preferably be smaller than the mode particle diameter of the inorganic porous material used together. More specifically, the average resin diameter of the binder resin is the same as or less, preferably 0.95 times or less, and more preferably 0.9 times or less the mode particle diameter of the inorganic porous material.

For example, preferably, the average particle size of the binder resin should be generally 5 nm or more and preferably 10 nm or more, and generally 10 μm or less and preferably 1 μm or less. At an average particle size of the binder resin less than this value, the binder resin readily intrudes in the pores of the inorganic porous material, and the dispersion of the inorganic porous material is instable, resulting in precipitation of the inorganic porous material. At an average particle size of the binder resin over the upper limit, the dispersion of the inorganic porous material is instable in some cases.

Since the dispersion state of the binder resin depends on the type of the solvent as described above, any binder resin having a molecular weight suitable for the dispersion state can be used. For example, in order to prevent intrusion of the binder resin in a mobile state into the pores of the inorganic porous material, the binder resin has a molecular weight of generally 10000 or more, preferably 20000 or more, more preferably 30000 or more, most preferably 35000 or more, and generally 1000000 or less, preferably 800000 or less, and more preferably 500000 or less. At a molecular weight of 10000 or more in the binder resin, the binder resin does not fill the pores of the inorganic porous material. At a molecular weight of 1000000 or less, the binder resin imparts a proper viscosity to a coating composition containing the inorganic porous material, the binder resin, and the solvent, maintaining excellent handling of the coating composition.

In order to prevent intrusion of the binder resin in a mobile state into the pores of the inorganic porous material, the ratio of the molecular weight of the binder resin to the mode diameter of pores of the inorganic porous material ($D_{max}$), represented by "(molecular weight of the binder resin)/(the mode diameter of pores of the inorganic porous material ($D_{max}$)), wherein the unit of the mode diameter of pores of the inorganic porous material ($D_{max}$) is "nm", is generally 200 or more, preferably 2500 or more, more preferably 3000 or more, most preferably 35000 or more, and generally 500000 or less, preferably 100000 or less, and more preferably 50000 or less. Thereby, the binder resin does not fill the pores of the inorganic porous material, and the binder resin imparts a proper viscosity to the coating composition containing the inorganic porous material, the binder resin, and the solvent, maintaining excellent handling of the coating composition.

A reason why the binder resin does not intrude into the pores of inorganic porous material although the binder resin is in a mobile state is described below.

In order to prevent intrusion of the binder resin in a mobile state into the pores of the inorganic porous material, the average particle diameter of the binder resin is controlled to be larger than the pore diameter of the pores of the inorganic porous material. Herein, "average particle diameter of the binder resin" represents a diameter of binder resin molecules in the coating composition. Alternatively, when the binder resin is dissolved or dispersed as aggregated particles (for example, aggregates and colloid), "average particle diameter of the binder resin" represents an average diameter of aggregated particles.

Meanwhile, the average particle diameter (size) of the binder resin is associated with the molecular weight of the binder resin. It is known that the binder resin having a high molecular weight has a large diameter. Thus, in order' to select a binder resin having a proper size that cannot intrude into the pores of the inorganic porous material, the binder resin should have a molecular weight in a predetermined range.

Thus, a binder resin having a molecular weight within the above-mentioned range or having a ratio of the molecular weight of the binder resin to the mode diameter of pores of the inorganic porous material ($D_{max}$) within the above-mentioned range has a diameter that is too large to intrude into the pores of the inorganic porous material (particularly, the silica of the present invention). As a result, the binder resin does not intrude into the inorganic porous material even in the mobile state. In conclusion, the binder resin does not fill the pores of the inorganic porous material.

The molecular weight of the binder resin can be determined by, for example, gel permeation chromatography

(GPC) or viscosity measurement of a binder resin solution.

The average particle diameter D (nm) of the solid-sate binder resin can be generally calculated from the density a (g/ml) of the solid-state binder resin and the molecular weight M of the binder resin using the following equation:

[Equation. 1]

$$D=(0.003183 \cdot M/a)^{1/3}$$

The average particle diameter of the binder resin dissolved or dispersed in a solvent can be determined by the intensity of light scattered from the solvent that is irradiated with laser light using a multi-angle light scattering (MALS) detector. Alternatively, the average particle diameter of the binder resin can be determined by transmission electron microscopic observation of the binder resin, by turbidity of a solvent in which the binder resin is dissolved or dispersed, or by capillary hydrodynamic fractionation (CHDF).

When the binder resin is dissolved or dispersed in a solvent, the polymer chain of the binder resin has a spherical shape conformation that has a molecular size close to that in the solid state at a high concentration.

In general, the binder resin has a spherically shrunk shape when it is not dissolved in a solvent. In contrast, the binder resin cannot be present in the form of a single molecule, but may be present in the form of a mass of multiple entangled or swelled molecules, in a solution. Thus, the binder resin would not intrude into the pores of the inorganic porous material in a solvent in some cases, even if the average particle diameter of the binder resin calculated from the molecular weight is smaller than the mode diameter of pores of the inorganic porous material ($D_{max}$). For example, an acrylic resin with an average molecular weight of 95000 has a diameter (molecular size) of 6 nm. However, it does not block pores of an inorganic porous material having the mode pore diameter ($D_{max}$) of 15 nm.

The molecular size of the binder resin in a solution depends on the solubility of the binder resin in the solvent. In any state, however, at a ratio of the molecular weight of the binder resin to the mode diameter of pores of the inorganic porous material ($D_{max}$) within the above range or at a molecular weight of the binder resin within the above range, the binder resin will not fill the pores of the inorganic porous material.

In an emulsion of the binder resin in a solvent (particularly aqueous solvent) in which the binder resin is present in a colloidal state, the binder resin (colloid) in the emulsion is present in a mass of coagulated molecules that is stabilized by a surfactant (protective colloid), and has a size that cannot intrude in the pores of the inorganic porous material. That is, the average particle diameter of the binder resin (here, the average diameter of the colloid of the binder resin in the emulsion) is larger than the mode diameter of pores of the inorganic porous material.

If the molecular weight of the binder resin is outside of the above-described range, the size of the colloid of the binder resin is too large to intrude in the pores of the inorganic porous material regardless of the molecular weight of the binder resin. Thus, in a stabilized colloid of the binder resin, the binder resin does not intrude in the pores of the inorganic porous material.

The stability of the binder resin colloid in the emulsion is associated with its glass transition temperature Tg. Thus, use of a binder resin having a glass transition temperature Tg that contributes to stabilization of the colloid prevents the binder resin from intruding into the pores of the inorganic porous material in emulsion containing a solvent. For example, a binder resin having a glass transition temperature Tg of generally -5°C or more and 40°C or less does not intrude in the pores of the inorganic porous material (particularly, the silica of the present invention), in an emulsion in a solvent.

Furthermore, a binder resin having a glass transition temperature Tg of -5°C or more has adequate strength. A resin forming product of the present invention prepared by forming a composition composed of an inorganic porous material and this binder resin (for example, the coating composition of the present invention) exhibits high moisture adsorption capacity, excellent physical and handling properties without stickiness, and high dispersitiy for the inorganic porous material. A binder resin having a glass transition temperature Tg of 40°C or less has moderate hardness. A resin forming product of the present invention prepared by forming a composition composed of an inorganic porous material and this binder resin (for example, the coating composition of the present invention) does not cause the inorganic porous material to detach from the forming product and exhibits improved aesthetic properties.

The emulsion is classified into colloidal dispersion (particle size: 10 nm to 50 nm), emulsion (50 nm to 500 nm), and suspension (0.5 μm to 10 μm) according to the diameter of the dispersed particles.

A high degree of cross-linking of the binder resin also leads to a large average particle size of the binder resin. Thus, a binder resin having a high degree of cross-linking is preferred. During or after the production of the coating composition of the present invention, a cross-linking agent for cross-linking of the binder resin should preferably be added. The degree of cross-linking of the binder resin can be determined by solubility in an organic solvent.

[1-3. Solvent]

The solvent contained in the coating composition of the present invention (hereinafter, referred to as "solvent of the present invention") has the following characteristics.

The solvent of the present invention is composed of one or more organic solvents. The organic solvents may be used alone or in any combination of two or more with any proportion. The organic solvent(s) may be mixed with other solvents, for example, one or more aqueous solvents. The organic solvents and aqueous solvents will be described in sequence.

[1-3-1] Organic solvent:

In the present invention, at least one organic solvent is used as the solvent. The viscosity of the coating composition and the average particle diameter of the binder resin vary, with the type of the solvent. Use of organic solvents and particularly hydrophilic solvents such as alcohols as the solvent leads to a decrease in the average particle diameter of the binder resin. Thus, the inorganic porous material is homogeneously dispersed into the solvent, without sedimentation and coagulation of the inorganic porous material. Only water is used as the solvent without use of organic solvents, the binder resin cannot be dispersed, resulting in sedimentation and coagulation of the inorganic porous material and poor coating characteristic and poor appearance of the coated surface due to a low drying rate.

The type of the organic solvent is not limited, and any known organic solvent can be used. As described above, when the value of the ratio of the mode particle diameter of the inorganic porous material and the mode diameter ($D_{max}$) to the average particle diameter of the binder resin reside within the above-described ranges, the binder resin does not intrude in the pores of the inorganic porous material, resulting in reliable production of the resin forming product of the present invention.

Among organic solvents, use of organic solvents that barely intrude in the pores of the inorganic porous material (for example, ones having a large contact angle to the inorganic porous material) is preferred because these organic solvents prevent the binder resin intruding into the pores of the inorganic porous material in the coating composition.

Preferably, the organic solvent may be a poor solvent to the binder resin or may contain a poor solvent. The poor solvent can dissolve the binder resin without raveling of the polymer chains (namely, in an entangled conformation) in the organic solvent, preventing the binder resin intruding into the pores of the inorganic porous material.

Use of highly viscous organic solvents is also preferred in view of preventing the polymer chains raveling. However, the use of such solvents may preclude, for example, a coating operation.

Examples of the usable organic solvents include chain hydrocarbons, such as neopentane, n-hexane, n-heptane, and Solvesso; aromatic hydrocarbons, such as toluene and xylene; halogenated hydrocarbons, such as trichloroethylene and perchloroethylene; alcohols, such as methanol, ethanol, isopropanol, and 1-butanol; ketones, such as acetone, methyl ethyl ketone, and methyl isobutyl ketone; esters, such as ethyl acetate and n-butyl acetate; ethers, such as cellosolves, butylsolve, and cellosolve acetate; and mineral spirits (hydrocarbon oils).

These organic solvents may be used alone or in any combination of two or more with any proportion.

Among the organic solvents preferred are hydrophilic organic solvents. The term "hydrophilic organic solvent" represents organic solvents having hydrophilicity. The hydrophilic organic solvent is well dispersed in both the aqueous phase and the resin phase in a balanced manner and optimizes the size of the binder resin aggregates. Examples of the hydrophilic organic solvent include alcohols, e.g. methanol, ethanol, and isopropanol; ketones, e.g. acetone, methyl ethyl ketone, and diacetone alcohol; glycols, e.g. ethylene glycol and propylene glycol monomethyl ether; and esters e.g. ethyl acetate, cellosolve acetate, and butyl cellosolve acetate. Among these particularly preferred are methanol, ethanol, and methyl ethyl ketone.

[1-3-2 Aqueous solvent]:

In combined use of an organic solvent and an aqueous solvent, the type of the aqueous solvent is not limited, and any known aqueous solvent can be used. Examples of the usable aqueous solvents are water and various aqueous solutions. Among these aqueous solvents, water is preferred. When water is mixed, deionized water is preferably used.

As the solvent of the present invention, it is preferred that the hydrophilic organic solvents be used alone or in combination of two or more, or that one or more hydrophilic organic solvents be used with water.

As described above, when the glass transition temperature Tg of the binder resin resides within the predetermined range, the binder resin can be present in a colloidal form and does not intrude in the pores of the inorganic porous material, resulting in reliable production of the resin forming product of the present invention. When the coating composition of the present invention is present in an aqueous emulsion of a mixed solvent of an organic solvent and an aqueous solvent, as described above, the average particle diameter of the binder resin (resin size) in a dispersed state is expected to be considerably larger than the pore diameter of the inorganic porous material, preventing the binder resin from

intruding in the pores of the inorganic porous material. When the average particle diameter of the binder resin is too large, sedimentation and coagulation of the inorganic porous material may occur due to insufficient dispersion, as described above. Thus, the proportion between the organic solvent and the aqueous solvent must be controlled such that a proper average particle diameter is achieved.

As another advantage of the use of aqueous solvent, explosion proofing of facilities is not necessary or can be simplified.

A further advantage is less use and generation of environmentally hazardous materials. Even if the system is difficult to be hermetically sealed, volatilization of the organic solvent can be prevented.

An additional effect of the use of an aqueous solvent is, as described below, a decrease in amount of the organic solvent remaining in the resin forming product after forming of the resin forming product of the present invention, and an improvement in adhesive force.

In an aqueous emulsion of the binder resin using the organic solvent and the aqueous solvent, it is preferred to use the aqueous emulsion which can optimize the temperature at which coagulation of the aqueous emulsion occurs, depending on the type, application, and use environment of a base material to which the coating composition of the present invention is applied. Thereby, the coating composition of the present invention can be applied to a base material that is not heat-resistant. At the temperature at which the aqueous emulsion coagulates, emulsion loses flowability and coagulates when emulsion containing various additives is heated with stirring. The coagulation temperature can be controlled by, for example, adding an additive that decreases the dew point.

In the production of an aqueous emulsion of the coating composition using both the organic solvent and the aqueous solvent, preferably, the inorganic porous material rather than the binder resin should be preliminarily dispersed in the aqueous solvent. The pores of the inorganic porous material are filled with water and are stabilized, while the binder resin added later is also stabilized at the exterior of the pores. During mixing the stabilized ones, the binder resin will not come loose into individual polymer chains and thus will not intrude in the pores of the inorganic porous material.

In combined use of the organic solvent and the aqueous solvent, the proportion of the organic solvent to the total solvent is generally 5 weight% or more, preferably 20 weight% or more, and more preferably 30 weight% or more. At a lower proportion of the organic solvent, the advantages attributed to the organic solvent are not achieved.

The use of the organic solvent improves dispersibility and adherence to a base material. In order to improve adherence, the base material is partially swelled or dissolved by using a small amount of organic solvent of about 5 weight% to express anchor effect. The use of 20 weight% or more of organic solvent improves dispersibility. A difference in boiling point between the organic solvent and the aqueous solvent leads to formation of a resin forming product having poor appearance and low strength. Thus organic solvents having high boiling point should be avoided.

[1-4. Other components]

The coating composition of the present invention may contain other components (additives), in addition to the inorganic porous material, the binder resin, and the solvent described above. The coating composition of the present invention and the resin forming product of the present invention containing the coating composition may contain plasticizers, stabilizers, surfactants, cross-linkable materials (crosslinking agents), fillers, colorants (coloring materials), pH adjusters, flame retardants, conductive agents, hardeners, pigment dispersants, emulsifiers, desiccants, defoamers, antiseptic agents, antifreezing agents, thickeners, auxiliary exothermic agents, auxiliary moisture adsorbents, and reinforcing fibers (glass fiber, carbon fiber, and fibers used as a base material), in addition to the inorganic porous material and the binder resin, according to application. The composition may further contain other components such as deodorants, antibacterial agent, and functional medicines in adequate amounts. These other components may be compounded in any production step of the coating composition of the present invention or in a production step of the resin forming product of the present invention using the composition. Alternatively, these may be preliminarily supported in the pores of the inorganic porous material before the production of the coating composition of the present invention. Alternatively, these may be added to the coating composition of the present invention or the resin forming product of the present invention by, for example, impregnation.

Typical additives among these will be described in detail.

For example, the coating composition of the present invention or the resin forming product of the present invention may contain a coloring material. The coloring material may be mixed with the coating composition of the present invention, or may be preliminarily mixed with the inorganic porous material to dye the inorganic porous material. Any known coloring material can be used. For example, inorganic pigments, organic pigments, and dyes can be used.

Examples of the inorganic pigments include natural inorganic pigments, such as clay, barium sulfate, calcium carbonate, mica, micaceous iron oxide, and yellow ocher; synthetic inorganic pigments, such as lead white, red lead oxide, lead yellow, vermilion, ultramarine blue pigment, iron blue pigment, cobalt oxide, titanium dioxide, mica covered with titanium dioxide, strontium chromate, titanium yellow, titanium black, carbon black, graphite, zinc chromate, iron black, molybdate orange, molybdenum white, litharge, and lithopone; and metals, such as aluminum, gold, silver, copper,

zinc, and iron.

Examples of the organic pigments include dye lake prepared by coloring a body pigment with a dye and by adding a precipitant; azo pigments, such as soluble azo, insoluble azo, and condensed azo; phthalocyanine pigments; nitroso pigments; nitro pigments; basic dye pigments; acidic dye pigments; vat dye pigments; and mordant dye pigments.

Examples of the usable coloring materials include granular, sand, and powdered glass, thermoplastic resins (plastics), such as ionomers, AS, ABS, ethylene-polyvinyl chloride copolymers, ethylene-vinyl acetate copolymers, polyamides, polyethylene, polyethylene terephthalate, polyvinylidene chloride, polyvinyl chloride, polycarbonates, polyvinyl acetate, polystyrene, polybutadiene, and polypropylene; and thermosetting resin, such as epoxy resin, xylene resins, phenolic resins, unsaturated polyester resins, polyimides, polyurethanes, maleic resins, melamine resins, and urea formaldehyde resins. These may be either colored ones or uncolored ones.

These coloring materials may be used alone or in any combination of two or more with any proportion.

The coating composition of the present invention may contain surfactants to be converted into emulsion. Any known surfactant can be used without restriction. Examples of such surfactants include tripolyphosphates salt, such as sodium tripolyphosphate, sodium tetraphosphate, and sodium hexametaphosphate; alkyl aryl sulfonates salt, such as sodium alkylnaphthalene sulfonate and sodium alkylbenzene sulfonate; synthetic polymers, such as sodium polyacrylate, polyvinyl alcohol, and styrene-maleic acid copolymers; cellulose derivatives, such as methyl cellulose, hydroxyethyl cellulose, and carboxymethylcellulose; and polyoxyalkylene aryl ethers, such as polyoxyethylene phenol ether and polyoxybutylene phenol ether.

The surfactants may be used alone or in any combination of two or more with any proportion.

For example, a pH adjuster may be mixed. The use of the pH adjuster can stabilize the binder resin in the coating composition of the present invention, in a system containing both a polymer latex, such as acrylic resin latex stabilized in an alkaline region (generally pH8 to 10), as a binder resin, and an inorganic porous material that is acidic in an aqueous solvent. Any known pH adjuster, for example, aqueous ammonia may be used.

The pH adjusters may be used alone or in any combination of two or more with any proportion.

Furthermore, for example, flame retardants may be added. Various known flame retardants, such as inorganic flame retardants and organic flame retardants, can be used appropriately. Examples of the known flame retardants include antimony compounds, phosphorus compounds, chlorine compounds, bromine compounds, guanidine compounds, boron compounds, ammonium compounds, bromine diaryl oxides, and brominated allenes. More specific examples are antimony trioxide, antimony pentoxide, ammonium phosphate, diammonium phosphate, phosphoric acid triesters, phosphite esters, phosphonium salts, phosphoric triamides, chlorinated paraffin, Dechlorane, ammonium bromide, tetrabromobisphenol A, tetrabromoethane, guanidine hydrochloride, guanidine carbonate, guanidine phosphate, guanylurea phosphate, sodium tetraborate decahydrate (borax), ammonium sulfate, ammonium sulfamate, decabromodiphenyl oxide, hexabromophenyl oxide, pentabromophenyl oxide, and hexabromobenzene.

The flame retardants may be used alone or in any combination of two or more with any proportion.

In addition, for example, a conductive agent and an antistatic agent may be compounded. Various known conductive agent, for example, conductive polymers, such as conductive carbon black, polyacetylene, and polypyrrole; metal powders, such as copper, aluminum, stainless steel; conductive fibers, such as carbon fiber and metal fiber; anionic, cationic, and nonionic antistatic agents; and quaternary ammonium compounds can be appropriaely used.

These conductive agents may be used alone or in any combination of two or more with any proportion.

Also, for example, fillers may be compounded. Various known filers may be used appropriately. Examples of such fillers are hydrous magnesium silicate clay mineral such as palygorskite; and porous adsorbent materials such as activated charcoal, activated carbon fiber, synthetic zeolite, and cristobalite.

The fillers may be used alone or in any combination of two or more with any proportion.

When the coating composition of the present invention is applied to the resin forming product (the resin forming product of the present invention), the organic filler can increase the void volume of the resin forming product.

Herein, "organic filler" represents organic fine powder or organic fiber and includes both natural products and synthetic products. Examples of natural organic fillers include wood flour, shell fiber, and cotton. Examples of synthetic organic fillers include rayon, cellophane, nylon fiber, polyacrylonitrile, polyethylene, polyesters, polytetrafluoroethylene, polyvinyl alcohol, polypropylene, and aromatic polyamides. These fillers may be used alone or in any combination of two or more with any proportion.

The organic filler may have various shapes, such as powder, fiber, tuft, and lamella. In particular fibrous organic fillers can form a structure containing a large volume of pores by mutual entanglement of the fibers. Throughout the specification, the "fibrous" organic filler represents organic fillers having an aspect ratio of generally 1.5 or more and preferably 2.0 or more. "Aspect ratio" represents the ratio of the major axis to the minor axis of the organic filler. The aspect ratio of the organic filler can be determined by calculation from the major axis and the minor axis measured by electron microscopic observation of the filler.

In order to improve various endurances such as light resistance, thermal resistance, water resistance, and solvent resistance, stabilizers may be compounded. Various known stabilizers, such as antioxidants, ultraviolet absorbers, and antihydrolytic agents can be appropriately used.

The stabilizers may be used alone or in any combination of two or more with any proportion.

Furthermore, in order to improve various endurances such as light resistance, thermal resistance, water resistance, and solvent resistance, crosslinking agents that enhance the degree of crosslinking of the binder resin can be compounded. Known crosslinking agents, such as epoxy resins, melamine resins, isocyanate compounds, aziridine compounds, and polycarbodiimide compounds, can be appropriately used.

The crosslinking agents may be used alone or in any combination of two or more with any proportion.

Auxiliary agents, such as auxiliary moisture adsorbents described above, may also be compounded. These auxiliary agents may also be used alone or in any combination of two or more with any proportion.

Other additives, silicone and fluorine water-repellents, hydrophilic agents, such as polyethylene glycol, reinforcing fillers, plasticizers, antideteriorate agents, dispersants, and antistatic agents. These additives may also be used alone or in any combination of two or more with any proportion.

[1-5. Composition of each component]

The compositions of the inorganic porous material, the binder resin, and the solvent in the coating composition of the present invention are not limited, and preferred ranges are as follows:

The preferred proportion of the inorganic porous material in coating composition of the present invention is generally 2.0 weight% or more and more preferably 2.5 weight% or more, and generally 30 weight% or less and more preferably 27 weight% or less.

A higher proportion of the inorganic porous material promotes coagulation of the inorganic porous material, resulting in sedimentation of the inorganic porous material in the coating composition and poor appearance on the coated surface due to uneven coating or cracking. Furthermore, adhering sites between the inorganic porous material and the binder resin decrease in the resin forming product, resulting in detachment of the inorganic porous material due to insufficient adhesion by the binder resin. This leads to low endurance and precludes formation of voids.

A lower proportion of the inorganic porous material has the following disadvantages: Excess binder resin fills in the interparticle voids or intrudes in the pores of the inorganic porous material, resulting in covering the inorganic porous material and filling the pores. As a result, the effective pore volume available for moisture adsorption is reduced. Furthermore, such a low amount of inorganic porous material will impair various properties such as hydrophilic property of the resin forming product.

In conclusion, either a lower or higher proportion of the inorganic porous material to the binder resin leads to a reduced number of voids. This impairs hydrophilic property of the resin forming product, and thus, impairs the dew condensation resistance and the moisture conditioning effect by water retention.

The proportion of the binder resin in the coating composition of the present invention is generally 0.2 weight% or more and preferably 0.3 weight% or more, and generally 30 weight% or less and preferably 27 weight% or less. A higher proportion of the binder resin causes poor coating characteristics due to increased viscosity. Furthermore, the binder resin intrudes in the pores of the inorganic porous material, resulting in a decrease in pore volume for moisture adsorption. In addition, the interparticle voids of the resin forming product may be filled with the binder resin. A lower proportion of the binder resin will lead to separation of the inorganic porous material due to insufficient adhesion.

The proportion of the solvent in the coating composition of the present invention is generally 40 weight% or more, preferably 45 weight% or more, and more preferably 50 weight% or more, and generally 98 weight% or less, preferably 95 weight% or less, and more preferably 93 weight% or less. A higher proportion of the solvent leads to low viscosity of the coating composition, resulting in flow of the composition on a coated surface and poor coating characteristics, such as irregular color. A lower proportion precludes dispersion of the inorganic porous material and the resin due to high viscosity, resulting in poor coating characteristics and low coating performance.

The ratio of the inorganic porous material to the solid component of the binder resin in the coating composition of the present invention (weight of the inorganic porous material)/(weight of solid component of the binder resin) is 0.6 or more and preferably 0.7 or more, and 10.0 or less and preferably 9 or less. A higher ratio leads to insufficient adhesion by the binder resin, resulting in separation of the inorganic porous material. A lower ratio leads to infiltration of the binder resin into the pores of the inorganic porous material, resulting in a decrease in pore volume for moisture adsorption.

In consideration that the coating composition of the present invention is used as a resin forming product (the resin forming product of the present invention) by coating, the weight ratio of the total solid components of the coating composition of the present invention (the total of the solid components of the binder resin, the inorganic porous material, and other components added according to needs in the coating composition) to the solid component of the binder resin is generally 1.6 or more and preferably 1.7 or more, and generally 11 or less and preferably 10 or less. At a lower weight ratio of the total solid component to the solid component of the binder resin, the binder resin may fill in the pores of the inorganic porous material and the interparticle void. At a higher weight ratio of the total solid component to the binder resin, sedimentation and the decrease of redispersion property of the inorganic porous material may occur in the coating

composition. Furthermore, the resin forming product cannot be readily formed and the inorganic porous material and additives may be detached.

The total solid component in the coating composition can be primarily controlled by the amount of the organic filler. If the proportion of the organic filler is lower, a sufficient number of interparticle voids cannot be formed. If the proportion of the organic filler is higher, hydrophilicity of the inorganic porous material is impaired.

[1-6. State and Usage]

The coating composition of the present invention is generally prepared by compounding the inorganic porous material, the binder resin, the solvent, and other optional components. Its state depends on the type of each component used and is generally a slurry state.

The coating composition of the present invention can be prepared according to the following procedure.

In a vessel such as a beaker, the inorganic porous material, the binder resin, the solvent, and the other optional components are placed, and these are mixed by stirring at about 400 to about 800 rpm with any means such as a magnetic stirrer. The order of feeding and mixing of these components is not limited. For example, all the components may be simultaneously fed, or some components may be fed before or after feeding and mixing of the other components. In general, the solvent and the binder resin are well mixed to disperse,the binder resin, and then the inorganic porous material is added and dispersed by mixing. If an organic filler is used, preferably, the organic filler should be preliminarily dispersed in a solvent such as water, and then the dispersion is added to the dispersion of the solvent and the binder resin. After mixing, it is preferred that homogeneous dispersion without aggregates of each component (in particular, the binder resin) be visually confirmed. If dispersion is insufficient, a dispersing device such as a homogenizer may be used. The coating composition is thereby prepared. The resulting coating composition may be filtered to improve coating characteristics and appearance of the coated surface. The coating composition should preferably be preserved in an airtight container.

The viscosity of the coating composition of the present invention is generally 10 mPa·s or more, preferably 15 mPa·s or more, and more preferably 20 mPa·s or more, and generally 12000 mPa·s or less, preferably 10000 mPa·s or less, and more preferably 8000 mPa·s or less. A lower or higher viscosity of the coating composition precludes control of the amount of coating of the coating composition. This restricts the coating procedure and leads to poor appearance of coated surface due to irregular coating.

The coating composition of the present invention can be applied to any appropriate base material. That is, the coating composition of the present invention is applied to an appropriate base material, and the solvent is removed to prepare a resin forming product in which the inorganic porous material is bonded to the base material by the binder resin.

The type of the base material to be coated is not limited. For example, the base materials may be films, sheets, nets, plates, and cloth made of fiber, paper, plastic, wood, concrete, metal, leather and the like. Among these preferred are nets, sheets, and films. In the case of a fiber base material, the fiber may be in the form of yarn made by spinning, woven fabric made by weaving, or fiber plate made by compression forming. These base materials may be used alone or in any combination of two or more with any proportion.

The fiber may be natural fiber and/or synthetic fiber. Furthermore, the fiber may be in any form, for example, woven fabric, knitted fabric, or nonwoven fabric. Examples of such forms include cloth, moquette, towel cloth, tricot, double rassel, circular knitting, and needle-punched. Examples of the fiber include natural fibers, such as cotton, hemp, silk, and wool; rayon; acetate; protein fiber. Further examples include fibers made of chlorinated rubber; polyamide, such as nylon 6, nylon 66, and nylon 12; polyvinyl alcohol, polyvinyl chloride; polyvinylidene chloride; polyacrylonitrile; polyesters, such as polyethylene terephthalate, polytrimethylene terephthalate, polybutylene terephthalate, and polylactic acid; polyethylene; polypropylene; polyurethane; polyvinylidene cyanide; and polyfluoroethylene; and copolymers and blends thereof. Polyesters and polyamides, which are readily available, are preferred. These fibers may contain additives such as, other polymers, matting agents, flame retardants, antistatic agents, and pigments.

Conductive cloths may be used in order to discharge static electricity effectively. Herein, the conductive cloths are prepared by compounding particles of conductive materials, such as copper, aluminum, stainless steel, carbon, and conductive polymers in organic fibers; coating these materials on the surfaces of the organic fibers by vacuum deposition; cladding the conductive materials with organic fibers; or adding fibers composed of the conductive materials to cloths. Addition of the conductive fibers to the cloths may be carried out by mixing in a fiber state, mixing in a sliver state, twisting, mixing or twisting in a filament state, or textural arrangement.

The single-yarn fineness of the fiber is generally 0.01 dtex or more, preferably 0.1 dtex or more, and more preferably 1 dtex or more, and generally 100 dtex or less and preferably 10 dtex or less. A single-yarn fineness of 100 dtex or less ensures a sufficient fiber surface, resulting in high hygroscopicity. Furthermore, a single-yarn fineness of 0.01 dtex or more ensures a practical level of mechanical strength of the fiber after coating of the inorganic porous material.

The synthetic fiber may have various cross-sectional shapes, for example, circular, hollow, multilobal such as trilobal, other noncircular cross-sections. In addition, the synthetic fiber may have any shape, for example, filament or

staple. Cloths may be woven fabric or knitted fabric according to application. Types of the woven fabric are, for example, plain weave, diagonal weave, sateen weave, and combination thereof. A typical type of the knitted fabric is stockinet.

If the resin forming product of the present invention prepared by applying the coating composition on the base material is a hygroscopic film, the base material should also preferably be a film.

Examples of materials for films include synthetic resins, such as polyethylene terephthalate, polyethylene naphthalate, acrylic resins, polycarbonates, polystyrene, polyolefins, cellulose acetate, and polyvinyl chloride.

The thickness of the film is not restricted, and is preferably 10 μm or more and 5 mm or less according to application.

When the resin forming product of the present invention prepared by applying a coating composition to a base material is a hygroscopic sheet, the base material should also be preferably a sheet.

Examples of materials for the sheets include paper and synthetic resins such as polyethylene terephthalate, polyethylene naphthalate, acrylic resins, polycarbonates, polystyrene, polyolefins, cellulose acetate, and polyvinyl chloride.

The thickness of the sheet is not restricted and should preferably be 50 μm or more and 1 cm or less depending on application.

As described above, when the resin forming product of the present invention has a honeycomb structure, the coating composition of the present invention can be applied to a ceramic honeycomb base material, for example. In such a case, for example, a coating composition of the present invention prepared by mixing an inorganic porous material and a binder resin with a solvent is applied to the honeycomb structure. The honeycomb structure may be made of, for example, cordierite. Alternatively, the inorganic porous material and the binder resin are mixed with the solvent to prepare a coating composition of the present invention, and the coating composition is applied to a nonwoven fabric filter and sheet. The filter and sheet may be composed of, for example, polyethylene terephthalate and polyvinyl chloride.

The honeycomb, filter and sheet containing the inorganic porous material may be provided with an inlet for air subjected to moisture conditioning, an outlet for moisture-conditioned air, and optional powered instruments, such as a pump and a fan, for circulation of the air. A column or the honeycomb facilitates circulation of air in air conditioning equipment, so that a larger volume of air can come into contact with the surface of the inorganic porous material and the moisture conditioning agent. As a result, the humidity of the space can be rapidly maintained at a certain level. By mounting these filters and sheets on air conditioning equipment or on outside walls of building with watering, a larger volume of water can come into contact with the surface of the inorganic porous material. Since the hydrophilic surface forms a water membrane, it can evaporate much water due to water retention effect. Furthermore, the latent heat of vaporization generated during this process can be used air cooling.

In the production of the resin forming product of the present invention using the base material, the inorganic porous material may be fixed to the base material in any form. For example, the inorganic porous material and the binder resin may be fixed to the base material so as to cover the entire base material or part of the base material.

The base material may be used alone or in any combination of two or more with any proportion.

In a coating process, the coating composition of the present invention is applied to the base material to form a coating film, and a solvent is removed from the coating film to cake the binder resin. The resin forming product of the present invention is thereby prepared.

Any base material can be used without restriction for applying the coating composition, and the coating composition of the present invention can be applied to any base material. Examples of the base material include sheets, fibers, films, nets, plates, cloth, and leather made of paper, plastic, wood, concrete, and metal.

In an actual process, the coating composition of the present invention is applied to the base material, and the solvent is removed by drying to form of a coating film (coating layer) of the resin forming product of the present invention on the surface of the base material. The resulting coating film is the resin forming product of the present invention containing the inorganic porous material and the binder resin, and exhibits high adsorption/desorption capacity. Thus, the base material provided with the coating film also exhibits high adsorption/desorption capacity.

The coating process is not limited, and any conventional process can be used appropriately. Examples of the coating process include brush coating, spraying, electrostatic coating, roll coating, dip coating, bar coating, floating with a knife coater, knife-over-roll coating, reverse roll coating, roll doctor coating, gravure roll coating, air knife coating, curtain coating, kiss-roll coating, nip-roll coating, cast coating, comma direct coating, comma reverse coating, slit coating, laminating, bonding, padding, blade coating, and ink jetting. It is preferred that these processes be appropriately selected depending on parameters, such as viscosity and volume, of the coating composition of the present invention and properties of the base material. These processes may be employed in combination.

After the coating, the coating composition of the present invention may be dried by any means without restriction to remove the solvent. For example, drying at room temperature, heating, vacuum drying, baking, UV irradiation, and electron beam irradiation can be employed depending on the properties of the coating composition of the present invention. These processes may be empolyed in combination. The drying temperature also can be determined depending on the properties of the coating composition. Some coating compositions become resin forming products exhibiting

excellent hydrophilicity by drying at room temperature.

The coating composition of the present invention is excellent in coating property and appearance of the coated surface. Furthermore, applying the coating composition of the present invention to the base material by the process described above can provide a resin composition (resin composition of the present invention described below) that exhibits dew condensation resistance, moisture conditioning effect, anti-fouling effect, cooling effect, and excellent endurance.

[2. Resin forming product]

Next, the resin forming product of the present invention is described. The resin forming product of the present invention is composed of a resin composition containing at least an inorganic porous material and a binder resin. In general, the resin forming product is prepared by applying the coating composition of the present invention to a base material by the process described above in which the inorganic porous material is fixed to the base material by the binder resin. The resin forming product of the present invention must contain at least the inorganic porous material and the binder resin and satisfy at least one of the following requirements [2-1] and [2-2]:

[2-1. Void volume per unit area and unit thickness of resin forming product]

The resin forming product of the present invention is characterized by a void volume per unit area and a unit thickness within a specified range (hereinafter, referred to as "void volume per unit volume") defined by the equations (3-1) and (3-2):

(Void volume in resin forming product)
= (interparticle void volume in resin forming product)
+ (total pore volume in resin forming product)
(3-1)

[Equation. 2]

Void volume per unit area and unit thickness of resin forming product =
(void volume of resin forming product)/
{(area of resin forming product)×(thickness of resin forming product)}(3-2)

More specifically, the resin forming product of the present invention contains at least the inorganic porous material and the binder resin, and the void volume per unit area and unit thickness of the resin forming product ranges from 0.33 $ml/m^2\cdot\mu m$ to 0.99 $ml/m^2\cdot\mu m$. If the void volume per unit area and unit thickness of the resin forming product is less than the lower limit, properties such as hygroscopicity and dew condensation resistance are often impaired due to an increased packing rate. If the void volume per unit area and unit thickness exceeds the upper limit, the strength of the resin forming product decreases significantly, resulting in poor appearance by separation, curling, and spotting. At a void volume per unit area and unit thickness within the above range, the pores of the inorganic porous material in the back of the coating layer can also be effectively utilized. Furthermore, since the interparticle voids function as paths, the adsorption/desorption rate is high and the interpaticle voids, as well as the pores of the inorganic porous material, can retain moisture, resulting in high moisture adsorption. The void volume per unit area and unit thickness varies with the particle shape, the ratio inorganic porous material/resin, the type of the binder resin, the type of the solvent, coating process, and drying conditions.

The voids in the resin forming product consist of the interparticle voids contained in the resin forming product itself and pores in the inorganic porous material compounded in the resin forming product. Thus, the void volume in the resin forming product and the void volume per unit area and unit thickness can be determined by the following steps (1)

to (9):

(1) The thickness and the area of the resin forming product fixed to the base material are measured. Herein, "the thickness of the resin forming product" does not include the thickness of the base material and represents the net thickness of the resin forming product. The total thickness of the base material and the resin forming product is measured, and the thickness of the base material is subtracted from the total thickness to determine the thickness of the resin forming product.

(2) From the thickness and the area of the resin forming product determined by step (1), the volume of the resin forming product including interparticle voids (referred to as "apparent volume of the resin forming product") is calculated by the following equation:

(Apparent volume of resin forming product)

= (thickness of resin forming product) × (area of resin forming product)

(3) The resin forming product is shaved off from the base material, is pulverized with a mortar, and is charged into a pelleting machine with a diameter of 10 mm. A hydraulic pressure of 10 t/$cm^2$ is applied to prepare a disk with a diameter of 10 mm. The thickness of the disk is measured with a micrometer and the volume of the disk is calculated from the diameter and the thickness. Thereby, the volume of the resin forming product excluding the interparticle voids (referred to as "effective volume of the resin forming product") is obtained.

(4) From the apparent volume determined in step (2) and the effective volume determined in step (3) of the resin forming product, the interparticle void volume in the resin forming product is determined by the following equation:

(Interparticle void volume in the resin forming product)

= (apparent volume of resin forming product) - (effective volume of resin forming product)

(5) The resin forming product after measurement in step (3) is fired at 600°C for 4 hours. The binder resin (and other components) can be almost removed during this process, and the inorganic porous material contained in the resin forming product can be substantially recovered.

(6) The weight and the pore volume (pore volume per unit weight) of the inorganic porous material recovered by the calcining step (5) are measured. The pore volume per unit weight of the inorganic porous material can be determined by the procedure described in [1-1. Inorganic porous material].

(7) From the weight of the resin forming product determined in step (6) and the pore volume per unit weight from the resin forming product, the total pore volume of the inorganic porous material in the resin forming product is calculated by the following equation:

(Total pore volume in the resin forming product)

= (pore volume per unit weight of resin forming product)

× (weight of resin forming product)

(8) From the interparticle void of the resin forming product determined in step (4) and the total pore volume in the inorganic porous material determined in step (7), the void volume in the resin forming product is determined by the following equation:

$$(\text{Void volume in resin forming product''}) = (\text{interparticle void volume in resin forming product}) + (\text{total pore volume of inorganic porous material})$$

(9) From the void volume in the resin forming product determined in step (8) and the thickness and area of the resin forming product determined in step (1), the void volume per unit area and unit thickness of the resin forming product is determined by the following equation:

$$(\text{Void volume per unit area and unit thickness of resin forming product}) = (\text{the void volume in the resin forming product}) / \{(\text{thickness of inorganic porous material}) \times (\text{weight of inorganic porous material})\}$$

The void volume per unit area and unit thickness of the resin forming product of the present invention varies with the organic filler, as well as the inorganic porous material and the binder resin contained in the resin forming product. In a resin forming product containing the organic filler, large voids occur by entanglement of the organic filler particles. Thus, the void volume per unit area and unit thickness in this case is greater than that of a case not containing the organic filler.

In the case of a resin forming product of the present invention not containing the organic filler, the void volume per unit area and unit thickness is generally 0.33 $ml/m^2 \cdot \mu m$ or more and preferably 0.35 $ml/m^2 \cdot \mu m$ or more, and generally 0.95 $ml/m^2 \cdot \mu m$ or less and preferably 0.93 $ml/m^2 \cdot \mu m$ or less.

In a case of a resin forming product of the present invention containing the organic filler, the void volume per unit area and unit thickness is generally 0.50 $ml/m^2 \cdot \mu m$ or more and preferably 0.55 $ml/m^2 \cdot \mu m$ or more, and generally 0.99 $ml/m^2 \cdot m$ or less and preferably 0.97 $ml/m^2 \cdot \mu m$ or less.

[2-2. Requirements for inorganic porous material and binder resin]

The resin forming product of the present invention is characterized by its constituents, i.e. requirements for the inorganic porous material and the binder resin. More particularly, the resin forming product of the present invention contains an inorganic porous material containing at least one silicon compound, which is explained above in the description on the coating composition of the present invention, and a binder resin of the present invention having (a) a solid hydroxyl value in the range of 5 mgKOH/g to 80 mgKOH/g and (b) a glass transition temperature (Tg) in the range of -5°C to 40°C, which is also explained above in the description on the coating composition of the present invention. The inorganic porous material and the binder resin are also explained in detail in the description on the coating composition of the present invention.

Either the requirements described in [2-1. Void volume per unit area and unit thickness of resin forming product] or the requirements described in [2-2. Requirements for inorganic porous material and binder resin] should be satisfied at least, and it is preferred that both the requirements be satisfied.

[2-3. Other requirements for resin forming product]

The resin forming product of the present invention does not need to satisfy other requirements, as long as the forming product satisfies the requirements described above in [2-1. Void volume per unit area and unit thickness of resin forming product] (referred to as "requirement [2-1]") and/or [2-2. Requirements for inorganic porous material and binder resin] (referred to as "requirement [2-2]"), as follows:

In the resin forming product of the present invention, in general, the inorganic porous material is fixed on various base materials by the binder resin. Furthermore, other optional components (for example, organic filler) may be contained. In the resin forming product of the present invention, inorganic porous material particles are three-dimensionally bonded

by the binder resin over the outer surface of the resin forming product and the interface with the base material. Such connection of the inorganic porous material particles by the binder resin over the outer surface of the resin forming product and the interface with the base material enhances the structural strength of the resin forming product of the present invention, resulting in excellent endurance such as high abrasion resistance and high weather resistance. Use of an organic filler, and particularly use of fibrous organic filler having a high aspect ratio significantly enhances the extent of connection of the inorganic porous material particles by the binder resin over the outer surface of the resin forming product and the interface with the base material, resulting in further enhancement of the advantages by the present invention. In contrast, disconnection between the inorganic porous material particles and the binder resin over the outer surface of the resin forming product and the interface with the base material will impair endurance such as abrasion resistance and weather resistance.

A linear or network structure of the connections of the inorganic porous material particles by the binder resin forms voids in the resin forming product of the present invention. Preferably, these voids communicate with each other from the outer surface of the resin forming product to the interface with the base material. Thus, formation of such open voids from the outer surface of the resin forming product to the interface with the base material further enhances the dew condensation resistance and the moisture conditioning effect of the resin forming product of the present invention. Use of an organic filler, and particularly use of fibrous organic filler having a high aspect ratio significantly enhances the extent of mutual connection of the organic filler particles and the inorganic porous material particles by the binder resin over the outer surface of the resin forming product and the interface with the base material. This increases voids and communicating structures, resulting in further enhancement of the advantages by the present invention. In contrast, if the voids are partly filled with the binder resin, the voids do not communicate with each other from the outer surface of the resin forming product to the interface with the base material. Thus, pores of the inorganic porous material particles that are present in the central region of the resin forming product may not absorb moisture or retain water.

In particular, it is preferred that many pores of the inorganic porous material be opened to the voids in the resin forming product of the present invention (without being filled by the binder resin). Thus, pores of the inorganic porous material particles in the central region of the resin forming product can contribute to moisture adsorption and water retention, resulting in further enhancement in the dew condensation resistance and the moisture conditioning effect of the resin forming product of the present invention.

In the resin forming product of the present invention, the distribution of the binder resin may be uniform or nonuniform. In particular, if more part of the binder resin is present near the outer surface of the resin forming product, the abrasion resistance of the resin forming product is improved.

The structure of the resin forming product of the present invention (whether having or not having the connection structure of the inorganic porous material by the binder resin and its shape, whether having or not having the voids in the resin forming product and its shape, and the distribution of the binder resin) can be confirmed by observation of cross-sections of the resin forming product with a scanning electron microscope (SEM) or a transmission electron microscope (TEM).

In the resin forming product of the present invention, the proportion of the inorganic porous material and the binder resin is not limited. Furthermore, the resin forming product of the present invention may contain any other component, in addition to the inorganic porous material and the binder resin.

However, the resin forming product of the present invention satisfying the requirement [2-2] is prepared by applying the coating composition of the present invention to the base material and removing the solvent, as described above. Thus, its composition (for example, the weight ratio of the inorganic porous material to the solid component of the binder resin and the weight ratio of the total solid component to the solid component of the binder resin) is substantially identical to the composition excluding the solvent of the coating composition of the present invention used in the production.

In the resin forming product of the present invention satisfying the requirement [2-1], it is preferred that its composition be substantially identical to the coating composition, but not containing the solvent, of the present invention used in the production.

In addition to the requirements described above, in a preferred embodiment of the resin forming product of the present invention, generally 30% or more, preferably 40% or more, and more preferably 50% or more of the pore volume of the inorganic porous material is opened to the exterior of the resin forming product. That is, the voids preferably communicate with the exterior of the forming product. The proportion of the volume of the pores opened to the exterior of the resin forming product of the present invention to the total pores of the inorganic porous material can be determined by calculating the pore volume of each of the resin forming product of the present invention, the inorganic porous material, and the binder resin.

The resin forming product of the present invention may have any shape. For example, the resin forming product may be shaped into a film (representing coating on the surface of a base material), a flat plate, a film, a sheet, a block, a pipe, and a fiber (incorporating the.inorganic porous material in the fiber by kneading).

Furthermore, the resin forming product of the present invention may be subjected to various treatments, if

necessary, such as annealing, cooling, rolling, printing, dry laminating, solution or melt coating, bag making, deep drawing, box making, tube making, and splitting.

When the resin forming product of the present invention is a layered forming product, at least one layer composed of the inorganic porous material and the binder resin is necessary, but other layers are not restricted. For example, it may be a single layer structure composed of the inorganic porous material and the binder resin or a multilayer structure including one or more layer composed of the inorganic porous material and the binder resin.

In the production of the layered structure, for example, layers composed of other materials are laminated on one side or both sides of a layer composed of the inorganic porous material and the binder resin. Lamination may be carried out, for example, by melt-extruding other resins on a film or sheet composed of the inorganic porous material and the binder resin, by melt-extruding a composition composed of the inorganic porous material and the binder (for example, the coating composition of the present invention) on a base material composed of another resin, by coextruding the composition composed of the inorganic porous material and the binder (for example, the composition of the present invention) and another resin, or by laminating a film or sheet composed of the inorganic porous material and the binder and another film or sheet composed of another base material with a known adhesive agents such as an organotitanium compound, an isocyanate compound, or a polyester compound. Herein, "film" in the present invention represents films in wide sense, for example, in the form of sheets, tapes, tubes, containers and the like.

Furthermore, the resin forming product of the present invention may be shaped into a honeycomb structure for application in air conditioning equipment. The honeycomb structure can be formed by forming a mixture of the inorganic porous material and the binder resin, or by shaping slurry containing the inorganic porous material, the binder resin and water into a forming product (the resin forming product of the present invention). A honeycomb structure can be formed of only the inorganic porous material in some cases. The slurry containing the inorganic porous material further contains generally 2 to 20 parts by weight of organic binder, generally 10 to 50 parts by weight of inorganic binder, and generally 150 to 200 parts by weight of water to 100 parts by weight of the inorganic porous material. The organic binder is, for example, methyl cellulose. The inorganic binder is, for example, silica sol.

In addition to production of the resin forming product of the present invention from the inorganic porous material and the binder resin, the resin forming product preferably contains a base material to which the binder resin and the inorganic porous material are fixed. In other words, the resin forming product of the present invention is preferably formed by fixing the composition containing the inorganic porous material and the binder resin to the base material. The forming product containing the base material can be produced by, for example, applying a solution or dispersion of the inorganic porous material and the binder resin in a solvent (for example, the coating composition of the present invention) to the base material.

The base material is not limited. Examples of the base materials include films, sheets, nets, plates, and cloths composed of fiber, paper, plastic, wood, concrete, metal, and leather. Nets, sheets, and films are preferred among these. In the case of a fiber base material, the fiber may be in the form of yarn made by spinning, woven fabric made by weaving, or fiber plate made by compression forming. These base materials may be used alone or in any combination of two or more with any proportion.

The fiber may be natural fiber and/or synthetic fiber. Furthermore, the fiber may be in any form, for example, woven fabric, knitted fabric, or nonwoven fabric. Examples of such forms include cloth, moquette, towel cloth, tricot, double rassel, circular knitting, and needle-punched. Examples of the fiber include natural fibers, such as cotton, hemp, silk, and wool; rayon; acetate; protein fiber. Further examples include fibers made of chlorinated rubber; polyamide, such as nylon 6, nylon 66, and nylon 12; polyvinyl alcohol; polyvinyl chloride; polyvinylidene chloride; polyacrylonitrile; polyesters, such as polyethylene terephthalate, polytrimethylene terephthalate, polybutylene terephthalate, and polylactic acid; polyethylene; polypropylene; polyurethane; polyvinylidene cyanide; and polyfluoroethylene; and copolymers and blends thereof. Polyesters and polyamides, which are readily availabe, are preferred. These fibers may contain additives such as, other polymers, matting agents, flame retardants, antistatic agents, and pigments.

Conductive cloths may be used in order to discharge static electricity effectively. Herein, the conductive cloths are prepared by compounding particles of conductive materials, such as copper, aluminum, stainless steel, carbon, and conductive polymers in organic fibers; coating these materials on the surfaces of the organic fibers by vacuum deposition; cladding the conductive materials with organic fibers; or adding fibers composed of the conductive materials to cloths. Addition of the conductive fibers to the cloths may be carried out by mixing in a fiber state, mixing in a sliver state, twisting, mixing or twisting in a filament state, or textural arrangement.

The single-yarn fineness of the fiber is generally 0.01 dtex or more, preferably 0.1 dtex or more, and more preferably 1 dtex or more, and generally 100 dtex or less and preferably 10 dtex or less. At a fineness of 100 dtex or less, the fiber has a sufficiently large surface area, which contributes to high hygroscopicity. At a fineness of 0.01 dtex or more, a fiber impregnated with the inorganic porous material has a practical level of mechanical strength.

The synthetic fiber may have various cross-sectional shapes, for example, circular, hollow, multilobal such as trilobal, other noncircular cross-sections. In addition, the synthetic fiber may have any shape, for example, filament or staple. Cloths may be woven fabric or knitted fabric according to application. Types of the woven fabric are, for example,

plain weave, diagonal weave, sateen weave, and combination thereof. A typical type of the knitted fabric is stockinet.

If the resin forming product of the present invention prepared by applying the coating composition on the base material is a hygroscopic film, the base material should also preferably be a film.

Examples of materials for films include synthetic resins, such as polyethylene terephthalate, polyethylene naphthalate, acrylic resins, polycarbonates, polystyrene, polyolefins, cellulose acetate, and polyvinyl chloride.

The thickness of the film is not restricted, and is preferably 10 μm or more and 5mm or less according to application.

When the resin forming product of the present invention prepared by applying a coating composition to a base material is a hygroscopic sheet, the base material should also be preferably a sheet.

Examples of materials for the sheets include paper and synthetic resins such as polyethylene terephthalate, polyethylene naphthalate, acrylic resins, polycarbonate, polystyrene, polyolefin, cellulose acetate, and polyvinyl chloride.

The thickness of the sheet is not restricted and should preferably be 50 μm or more and 1 cm or less in general depending on its application.

When the resin forming product of the present invention prepared by applying a coating composition to a base material is a light diffusion sheet, the base material should also be preferably a sheet. Furthermore, the base material should preferably be composed of a transparent material, and more preferably of a colorless transparent material.

Examples of the transparent materials include synthetic resins such as polyethylene terephthalate, polyethylene naphthalate, acrylic resins, polycarbonate, polystyrene, polyolefin, cellulose acetate, and polyvinyl chloride.

The thickness of the transparent materials is not restricted and should preferably be 50 μm or more and 1 cm or less in general depending on its application.

As described above, when the resin forming product of the present invention has a honeycomb structure, the coating composition of the present invention containing the inorganic porous material and the binder resin can be applied to a ceramic honeycomb base material, for example. In such a case, for example, a coating composition of the present invention prepared by mixing an inorganic porous material and a binder resin with a solvent is applied to the honeycomb structure. The honeycomb structure may be made of, for example, cordierite. The inorganic porous material may be shaped into spherical or pillar particles to be packed in a column. On the particle size in this case, spherical particles generally have a diameter of 0.1 to 30 mm and pillar particles generally have a diameter of 0.1 to 10 mm and a length of 1 to 30 mm in view of air permeability and contact area with moisture in the packed area of the column.

In an alternative embodiment, to the column or honeycomb provided with the inorganic porous material, an inlet that sucks in air of a space for air conditioning, an outlet that discharges the conditioned air, and optional powered instruments such as a pump and a fan for circulation of the air may be fixed. The column or the honeycomb facilitates circulation of air in air conditioning equipment, so that a larger volume of air can come into contact with the surface of the inorganic porous material and the moisture conditioning agent. As a result, the humidity of the space can be rapidly maintained at a certain level.

In the case of the production of the resin forming product of the present invention using the base material, the inorganic porous material may be fixed to the base material by any means. For example, the inorganic porous material and the binder resin may be fixed over the entire base material, or on part of the base material.

The base material may be used alone or in any combination of two or more with any proportion.

[2-4. Characteristics of resin forming product]

The resin forming product of the present invention that contains the inorganic porous material and the binder resin of the present invention and/or that has a specific ratio of the pore volume of the inorganic porous material to the interparticle voids, is excellent in dew condensation resistance, moisture conditioning effect, anti-fouling effect, cooling effect, and endurance.

The resin forming product of the present invention, which contains the inorganic porous material having high endurance and water resistance, may further contain other appropriate components such as a binder resin that do not impair these characteristics, i.e., high endurance and water resistance.

In the resin forming product of the present invention, major part of the pore volumes of the inorganic porous material communicates with the exterior of the forming product. Thus, high adsorption/desorption capacity of the inorganic porous material can be sufficiently ensured. Since, the resin forming product can adsorb a large amount of substances; the resin forming product of the present invention has high adsorptivity (including deodorant adsorptivitiy of malodorous substances) and extended release of adsorptive substances such as medicines.

Among adsorption/desorption characteristics of the resin forming product of the present invention, humidity conditioning ability, dew condensation resistance, extended release of medicines, absorbability, and antibacterial activity are described in detail.

<Humidity conditioning ability>

Since inorganic porous materials such as silica are porous materials, they adsorb and desorb water vapor at a predetermined vapor pressure that depends on the pore diameter. Thus, the control of the pores of the inorganic porous material leads to control of adsorption and desorption of water vapor (moisture), resulting in humidity control. The resin forming product of the present invention having such properties of the inorganic porous material can also control humidity. Thus, the resin forming product of the present invention has the following advantages. When the resin forming product of the present invention, which is formed using any fiber base material, is used as interior materials, for example, wallpapers, it can reduce humidity by moisture adsorption in a wet state, or increase humidity by moisture desorption in a dry state, and can maintain a comfortable sensible humidity (40 to 70%RH) for human bodies or an optimized humidity suitable for application.

<Dew condensation resistance>

As described above, the inorganic porous material is porous material and can adsorb or desorb water vapor at a specific vapor pressure depending on its pore diameter. Since the surface of the inorganic porous material has a large number of hydrophilic silanol groups, the surface of the resin forming product of the present invention is also hydrophilic. Thus, the resin forming product of the present invention has the following advantages: In the resin forming product of the present invention made of a metal base material, pores absorb moisture with an increase in relative humidity caused by a decrease in outside air temperature. These pores are filled with moisture with a further increase in relative humidity and the relative humidity reaches 100%. In the case of a conventional metal plate, liquid drops are formed on the surface by dew condensation at a relative humidity of 100%, resulting in falling of the liquid drops from walls and ceilings. In contrast, in the resin forming product of the present invention, moisture overspilling from the pores can be maintained in the interparticle voids of the inorganic porous material at a relative humidity of 100%. Even if the humidity is increased by a reduced temperature, the resin forming product of the present invention having the hydrophilic surface prevents from formation of droplets by dew condensation and water can flow on a surface having a slight slop.

As described above, the resin forming product of the present invention delays dew condensation and prevents droplets formed by dew condensation from falling.

<Extended release of medicines>

Extended release is one of the functions of the inorganic porous material. Extended release may be imparted to the resin forming product of the present invention. In particular, extended release of medicines can spread the applicable field of the resin forming product of the present invention. For example, one idea is advanced apparel showing extended release of medicines. More particularly, in production of apparel using the fiber of the resin forming product of the present invention, medical agents for moisture retention, vitamin supply, whitening, and healing effect are supported on the inorganic porous material in the resin forming product of the present invention that constitutes the apparel. This enhances extended release of aroma chemicals and skin-care components, resulting in high skin-care effect. Compared with conventional apparel supporting these medical agents, washing endurance can be improved. Examples of medical agents to be supported include vitamin C (including ascorbic acid derivatives), vitamin E, collagen, serisin, chitosan, hiba oil (hinokitiol), squalane, aloe extract, and proteins.

Use of surfactants on supporting the medical agents is preferred in view of stability. Any surfactant can be used. For example, anionic, cationic, and nonionic surfactants can be used. Examples of the surfactants include various fatty acid soaps, sodium lauryl sulfate, sodium higher alcohol sulfates, sodium dodecylbenzene sulfonate, sodium dialkylphosphosuccinates, potassium alkylphosphates, and sodium polyoxyethylene alkylether sulfates. These may be used with any nonionic surfactants, if necessary. Examples of the nonionic surfactants include polyoxyethylene derivatives, sorbitan monoalkylates, sorbitan dialkylates, and sorbitan trialkylates.

In order to enhance washing endurance, preferably, the surfactant should be fixed to part of the inorganic porous' material. In such a case, incorporation of the medical agents after the preparation of the resin forming product of the present invention is preferred to avoid mixing of the resin with the medical agents.

<Sorbability>

By the effect of the hydroxyl groups on the surface of the inorganic porous material, basic gas can be adsorbed by ionic bonding on the the surface of the inorganic porous material in the forming product. For example, ammonia, pyridine, trimethylamine, and indole can be adsorbed. These substances are causative agents of bad smells, such as smell of sweat, body odor of old people, smell of excretory substances, smell of smoking, and smell of kitchen garbage. Since the inorganic porous material in the resin forming product of the present invention can eliminate these odors,

clothes of the resin forming product of the present invention can keep clean interior environments thereof.

<Antibacterial activity>

The resin forming product of the present invention in which deodorant and antibacterial agents are preliminarily supported in the inorganic porous material has deodorant and antibacterial effects. Examples of the antibacterial agents include organic antibacterial agents, such as phenolic, carboxylic, biguanide, halogen, and surfactants; inorganic antibacterial agents such as silver; and antibacterial agents derived from natural products, such as chitosan and catechin.

In order to impart deodorant effect to the resin forming product of the present invention, various metals may be supported on the inorganic porous material, or the inorganic porous material may be modified into a 3-mercaptopropyl-modified inorganic porous material, to eliminate methyl mercaptan and hydrogen sulfide or the like by adsorption. Alternatively, the inorganic porous material may be modified into a 3-aminopropyl-modified inorganic porous material to eliminate nonenal and acetaldehyde or the like. Accordingly, terminal modification of the inorganic porous material is also effective for imparting additional functions to the resin forming product of the present invention.

<Other advantages>

In addition to the above advantages, the resin forming product of the present invention has various other advantages. Cooling effect is described as an example.

<Cooling effect>

The resin forming product of the present invention can maintain much water in the pores of the inorganic porous material and the interparticle voids. Since the surface of the resin forming product is hydrophilic, a water membrane can be formed on the forming product. Furthermore, the surface with a large surface area can maintain much more water.

Thus, the resin forming product of the present invention has the following advantages: When water is sprinkled on a resin forming product of the present invention including a nonwoven base material, a water membrane is rapidly formed on the surface of the forming product and is rapidly vaporized. Such rapid vaporization of a large amount of water generates latent heat of evaporation that cools the surface of the forming product and environmental air. The cooling effect by the latent heat of evaporation facilitates artificial cooling with energy-saving effect.

In the resin forming product of the present invention containing the silica of the present invention as the inorganic porous material, its pores and interparticle voids can adsorb and vaporize much more water. Thus, larger cooling effect is achieved.

[2-5. Others]

In the production of the resin composition of the present invention, a coating layer may be formed on a base material using the coating composition of the present invention, in combination of other coating films or layers. For example, the coating layer may be provided in combination with a primer layer or a decorative coat.

The primer layer is formed between the base material and the coating layer of the coating composition, and is composed of a proper material, depending on the type of the base material and properties of the inorganic porous material and the binder resin. The primer layer enhances bonding force of the coating layer of the coating composition to the base material and thus improves endurance of products. The layer also improves smoothness of the surface of the base material to achieve uniform coating of the coating composition. In the case of a metal base material, a proper primer layer prevents corrosion.

The decorative coat is generally formed outside the coating layer of the coating composition in order to improve design property of the base material. Decoration may be carried out by coloring, printing, embossing, wiping coating, or any combination thereof. On the decorated outermost surface, a transparent resin protect layer may be formed by applying a transparent resin coating composition, or laminating a transparent resin sheet or the like. In a coating composition containing a coloring agent, the coating composition itself may be subjected to drawing instead of use of a decorative coat, to improve design property.

These primer layer, the decorative coat, and the transparent resin protective layer may be directly formed on the base material or a coating layer of the resin forming product of the present invention. Or they may be formed on another sheet, such as paper or a plastic sheet, other than the base material and the coating film of the resin forming product of the present invention. After that, the sheet containing them is placed. Furthermore, an adhesive or sticky layer may be provided between any two layers among the base material, the primer layer, the coating film of the resin forming product of the present invention, the decorative coat, and the transparent resin protective layer.

[EXAMPLES]

The present invention is described in further detail by way of examples. These examples, however, are for illustration of the present invention, and the present invention should not be limited to these examples.

[Measurement]

In the following EXAMPLEs and COMPARATIVE EXAMPLEs, properties of silica used as an inorganic porous material and properties of the binder resin other than known properties by documents were measured by the methods described below.

[Pore volume, specific surface area, mode pore diameter]

The BET nitrogen isothermal adsorption curve (isothermal desorption curve) of silica was measured with a Quantachrome Instruments AS-1 to determine a pore volume (ml/g), a specific surface area ($m^2$/g), and a mode pore diameter $D_{max}$ (nm). More specifically, the pore volume was determined at a relative pressure $P/P_0$ = 0.98, and the specific surface area was calculated by a BET multipoint method from the amount of adsorptive nitrogen of three points at $P/P_0$ = 0.1, 0.2, and 0.3.

For each sample having a mode pore diameter ($D_{max}$) of 5 nm or less, its pore distribution curve was determined by a HK or SF method known for persons skilled in the art, whereas for each sample of 5 nm or more by a BJT method. The interval between points of the relative pressure to be measured was 0.025.

[Powdered X-ray diffraction]

X-ray diffractometry of powdered samples was carried out with a Rigaku Corporation RAD-RB instrument with a CuK$\alpha$ source under conditions of a divergence slit of 1/2 deg, a scattering slit of 1/2 deg, and a receiving slit of 0.15 mm.

[Mode particle diameter]

The mode particle diameter of the silica was determined by a particle size distribution that was measured with a laser diffraction-scattering particle size analyzer (a Laser Micronsizer LMS-24 made by Seishin Enterprise Co. Ltd.).

[Silanol content]

The silanol content of silica was calculated from a change in weight during the thermogravimetry described above.

[Hydroxyl value of binder resin]

The hydroxyl value of the binder resin was measured according to JIS K1557, "6.4 hydroxyl value". Using a phthalic anhydride in pyridine solution (concentration: about 140 g/L) as an esterifying reagent, the hydroxyl groups of the binder resin was esterified, and the excess reagent was titrated with a 0.5 N sodium hydroxide aqueous solution. The hydroxyl value of the binder resin was determined from the result.

[Emulsion size of binder resin (average resin particle diameter)]

Colloidal silicas having different particle sizes (5 $\mu$m, 7 $\mu$m, 12 $\mu$m, 18 $\mu$m, 22 $\mu$m, 45 $\mu$m, 80 $\mu$m, 120 $\mu$m, and 300 $\mu$m) were dispersed into water to prepare 20 weight% reference dispersions. The transparency of sample dispersions (coating compositions) was visually compared with the reference dispersions. Emulsion size of binder resin (the average resin particle diameter) was determined from the particle size of the colloidal silica in a reference dispersion having a transparency nearest that of the sample dispersion (coating composition).

[EXAMPLE1]

[Silica production and measurement of physical properties]

In a 5-L separable glass flask (with a jacket) provided with an open water-cooling condenser at the top, 1000 g of pure water was fed. With stirring at 80 rpm, 1400 g of tetramethoxysilane was fed by spending three minutes.

The molar ratio (water/tetramethoxysilane) was about 6/1. Hot water at 50°C was circulated in the jacket of the separable flask. Stirring was continued before the content reaches its boiling point. Hot water at 50°C was further circulated for about 0.5 hours for gelation of the generated sol.

After the gel was rapidly discharged, the gel was pulverized through a nylon screen with an opening of 600 micrometers into a powdered wet gel (silica hydrogel). Into a 1-L glass autoclave was fed 450 g of hydrogel and 450 g of pure water, followed by hydrothermal treatment at 180°C for 3 hours. The solution was filtered through a nylon screen with an opening of 100 micrometers, and the residue was dried without water washing under reduced pressure at 160°C until the weight become constant.

The resulting silica gel (the silica of the present invention) was pulverized with a milling machine (AFG-200 made by Hosokawa Micron), and the powder was subjected to air classification to prepare a silica powder (silica gel) having an average particle size of 5 $\mu$m.

Particles in the resulting silica powder were observed with a scanning electron microscope. All the particles were fractured particles having fractured faces.

The physical properties of the resulting silica were measured according to the methods described above. The specific surface area was 497 $m^2$/g, the pore volume was 1.06 ml/g, the mode pore diameter ($D_{max}$) was 8.3 nm, the mode particle diameter was 4.9 $\mu$m, and the silanol content was 3.9 $nm^{-2}$.

No crystalline peak was observed in the powdered X-ray diffraction pattern, and a peak at a lower angle ($2\theta \leq$ 5 deg) attributed to a periodical structure was not found.

[Production of coating composition]

The binder resin used was an acrylic latex aqueous dispersion solution having a solid content of 50 weight% (average resin particle diameter: 115 nm, Tg: 18°C, hydroxyl value: 40 mgKOH/g), and the solvents used were methanol, and methyl ethyl ketone.

The silica, acrylic latex aqueous dispersion solution, methanol, and methyl ethyl ketone (weight ratio of 12.5:12.5:67.5:7.5) were mixed and stirred to prepare a slurry composition (viscosity = 50 mPa·s).

The composition was prepared by the following procedure:

After 67.5g of methanol and 7.5g of methyl ethyl ketone were placed into a beaker, the solution was stirred and mixed at 400 to 800 rpm with a magnetic stirrer. Furthermore, 12.5 g of acrylic latex aqueous dispersion solution was added and dispersed into the solvent by stirring. No aggregate of the binder resin was found by visual observation. While uniform dispersion was confirmed, 12.5g of silica was gradually added and well dispersed. Thereby 100 g of composition was prepared (referred to as coating composition of EXAMPLE 1).

[Production of resin forming product]

The coating composition of EXAMPLE 1 was applied onto a polyvinyl chloride sheet (thickness: 0.5 mm) with a bar coater and was dried at room temperature to prepare a humidity conditioning sheet provided with a humidify-conditioning layer of a thickness of 49 $\mu$m (referred to as resin forming product of EXAMPLE 1).

[COMPARATIVE EXAMPLE 1]

A silica prepared as in EXAMPLE 1, the acrylic latex aqueous dispersion solution used in EXAMPLE 1, methanol, and methyl ethyl ketone in a weight ratio of 5.0:20.0:67.5:7.5 were mixed and stirred as in EXAMPLE 1 to prepare a slurry composition (viscosity: 114 mPa·s) (referred to as coating composition of COMPARATIVE EXAMPLE 1).

The coating composition of COMPARATIVE EXAMPLE 1 was applied onto a polyvinyl chloride sheet (thickness: 0.5 mm) with a bar coater and was dried at room temperature to prepare a humidity conditioning sheet provided with a humidify-conditioning layer of a thickness of 15 $\mu$m (referred to as resin forming product of COMPARATIVE EXAMPLE 1).

[EXAMPLE 2]

A silica prepared as in EXAMPLE 1, the acrylic latex aqueous dispersion solution used in EXAMPLE 1, methanol, and methyl ethyl ketone in a weight ratio of 8.3:16.7:67.5:7.5 were mixed and stirred as in EXAMPLE 1 to prepare a slurry composition (viscosity: 92 mPa·s) (referred to as coating composition of EXAMPLE 2).

The coating composition of EXAMPLE 2 was applied onto a polyvinyl chloride sheet (thickness: 0.5 mm) with a bar coater and was dried at room temperature to prepare a humidity-conditioning sheet provided with a humidify conditioning layer of a thickness of 21 $\mu$m (referred to as resin forming product of EXAMPLE 2).

[EXAMPLE 3]

A silica prepared as in EXAMPLE 1, the acrylic latex aqueous dispersion solution used in EXAMPLE 1, methanol, and methyl ethyl ketone in a weight ratio of 15.0:10.0:67.5:7.5 were mixed and stirred as in EXAMPLE 1 to prepare a slurry composition (viscosity: 52 mPa·s) (referred to as coating composition of EXAMPLE 3).
The coating composition of EXAMPLE 3 was applied onto a polyvinyl chloride sheet (thickness: 0.5 mm) with a bar coater and was dried at room temperature to prepare a humidity-conditioning sheet provided with a humidify conditioning layer of a thickness of 47 μm (referred to as resin forming product of EXAMPLE 3).

[EXAMPLE 4]

A silica prepared as in EXAMPLE 1, the acrylic latex aqueous dispersion solution used in EXAMPLE 1, methanol, and methyl ethyl ketone in a weight ratio of 17.9:7.1:67.5:7.5 were mixed and stirred as in EXAMPLE 1 to prepare a slurry composition (viscosity: 31 mPa·s) (referred to as coating composition of EXAMPLE 4).
The coating composition of EXAMPLE 4 was applied onto a polyvinyl chloride sheet (thickness: 0.5 mm) with a bar coater and was dried at room temperature to prepare a humidity-conditioning sheet provided with a humidify conditioning layer of a thickness of 86 μm (referred to as resin forming product of EXAMPLE 4).

[COMPARATIVE EXAMPLE 2]

A silica prepared as in EXAMPLE 1, the acrylic latex aqueous dispersion solution used in EXAMPLE 1, methanol, and methyl ethyl ketone in a weight ratio of 21.4:3.6:67.5:7.5 were mixed and stirred as in EXAMPLE 1 to prepare a slurry composition (viscosity: less than 5 mPa·s) (referred to as coating composition of COMPARATIVE EXAMPLE 2).
The coating composition of COMPARATIVE EXAMPLE 2 was applied onto a polyvinyl chloride sheet (thickness: 0.5 mm) with a bar coater and was dried at room temperature to prepare a humidity conditioning sheet provided with a humidify-conditioning layer of a thickness of 415 μm (referred to as resin forming product of COMPARATIVE EXAMPLE 2).

[COMPARATIVE EXAMPLE 3]

Silicone resin microparticles (Tospearl made by GE Toshiba Silicone Co. Ltd., spherical, average resin diameter: 4.5 μm), the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 27 mPa·s) (referred to as coating composition of

COMPARATIVE EXAMPLE 3).

The coating composition of COMPARATIVE EXAMPLE 3 was applied onto a polyvinyl chloride sheet (thickness: 0.5 mm) with a bar coater and was dried at room temperature to prepare a humidity conditioning sheet provided with a humidify-conditioning layer of a thickness of 21 μm (referred to as resin forming product of COMPARATIVE EXAMPLE 3).

[EXAMPLE 5]

A 1:1 mixture in a weight ratio of silicone resin microparticles (Tospearl made by GE Toshiba Silicone Co. Ltd., spherical, average resin diameter: 4.5 μm, pore volume: 0.025 ml/g) and silica prepared as in EXAMPLE 1 was used as an inorganic porous material. This inorganic porous material, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 37 mPa s) (referred to as coating composition of EXAMPLE 5).
The coating composition of EXAMPLE 5 was applied onto a polyvinyl chloride sheet (thickness: 0.5 mm) with a bar coater and was dried at room temperature to prepare a humidity conditioning sheet provided with a humidify-conditioning layer of a thickness of 26 μm (referred to as resin forming product of EXAMPLE 5).

[EXAMPLE 6]

A silica prepared as in EXAMPLE 1, the acrylic latex aqueous dispersion solution used in EXAMPLE 1, and methyl ethyl ketone in a weight ratio of 12.5:12.5:75.0 were mixed and stirred as in EXAMPLE 1 to prepare a slurry composition (viscosity: 238 mPa·s) (referred to as coating composition of EXAMPLE 6).
The coating composition of EXAMPLE 6 was applied onto a polyvinyl chloride sheet (thickness: 0.5 mm) with

a bar coater and was dried at room temperature to prepare a humidity conditioning sheet provided with a humidify-conditioning layer of a thickness of 57 μm (referred to as resin forming product of EXAMPLE 6).

[EXAMPLE 7]

A silica prepared as in EXAMPLE 1, the acrylic latex aqueous dispersion solution used in EXAMPLE 1, ethanol, and isobutyl methyl ketone in a weight ratio of 12.5:12.5:67.5:7.5 were mixed and stirred as in EXAMPLE 1 to prepare a slurry composition (viscosity: 176 mPa·s) (referred to as coating composition of EXAMPLE 7).
The coating composition of EXAMPLE 7 was applied onto a polyvinyl chloride sheet (thickness: 0.5 mm) with a bar coater and was dried at room temperature to prepare a humidity-conditioning sheet provided with a humidify-conditioning layer of a thickness of 41 μm (referred to as resin forming product of EXAMPLE 7).

[EXAMPLE 8]

A silica prepared as in EXAMPLE 1, the acrylic latex aqueous dispersion solution used in EXAMPLE 1, and acetone in a weight ratio of 12.5:12.5:75.0 were mixed and stirred as in EXAMPLE 1 to prepare a slurry composition (viscosity: 255 mPa·s) (referred to as coating composition of EXAMPLE 8).
The coating composition of EXAMPLE 8 was applied onto a polyvinyl chloride sheet (thickness: 0.5 mm) with a bar coater and was dried at room temperature to prepare a humidity-conditioning sheet provided with a humidify-conditioning layer of a thickness of 44 μm (referred to as resin forming product of EXAMPLE 8).

[COMPARATIVE EXAMPLE 4]

A silica prepared as in EXAMPLE 1, the acrylic latex aqueous dispersion solution used in EXAMPLE 1, and deionized water in a weight ratio of 12.5:12.5:75.0 were mixed and stirred as in EXAMPLE 1 to prepare a slurry composition (viscosity: 5 mPa·s) (referred to as coating composition of COMPARATIVE EXAMPLE 4).
The coating composition of COMPARATIVE EXAMPLE 4 was applied onto a polyvinyl chloride sheet (thickness: 0.5 mm) with a bar coater and was dried at room temperature to prepare a humidity conditioning sheet provided with a humidify-conditioning layer of a thickness of 25 μm (referred to as resin forming product of COMPARATIVE EXAMPLE 4).

[COMPARATIVE EXAMPLE 5]

A silica prepared as in EXAMPLE 1, an acrylic urethane latex aqueous dispersion solution (solid content: 50 weight%, average resin diameter: 150 nm, Tg: 30°C) used in EXAMPLE 1, and deionized water in a weight ratio of 12.5:12.5:75.0 were mixed and stirred as in EXAMPLE 1 to prepare a slurry composition (viscosity: 5 mPa·s) (referred to as coating composition of COMPARATIVE EXAMPLE 5).
The coating composition of COMPARATIVE EXAMPLE 5 was applied onto a polyvinyl chloride sheet (thickness: 0.5 mm) with a bar coater and was dried at room temperature to prepare a humidity conditioning sheet provided with a humidify-conditioning layer of a thickness of 25 μm (referred to as resin forming product of COMPARATIVE EXAMPLE

[COMPARATIVE EXAMPLE 6]

A silica prepared as in EXAMPLE 1, an acrylic latex aqueous dispersion solution (solid content: 50 weight%, average resin diameter: 300 nm, Tg: 30°C) used in EXAMPLE 1, methanol, and methyl ethyl ketone in a weight ratio of 12.5:12.5:67.5:7.5 were mixed and stirred as in EXAMPLE 1 to prepare a slurry composition (referred to as coating composition of COMPARATIVE EXAMPLE 6).
The coating composition of COMPARATIVE EXAMPLE 6 was applied onto a polyvinyl chloride sheet (thickness: 0.5 mm) with a bar coater and was dried at room temperature to prepare a humidity conditioning sheet provided with a humidify-conditioning layer of a thickness of 40 μm (referred to as resin forming product of COMPARATIVE EXAMPLE 6).

[COMPARATIVE EXAMPLE 7]

A silica prepared as in EXAMPLE 1, a urethane latex aqueous dispersion solution (solid content: 50 weight%, average resin diameter: 80 nm, Tg: 100°C), methanol, and methyl ethyl ketone in a weight ratio of 12.5:12.5:67.5:7.5 were mixed and stirred as in EXAMPLE 1 to prepare a slurry composition (referred to as coating composition of COMPARATIVE EXAMPLE 7).
The coating composition of COMPARATIVE EXAMPLE 7 was applied onto a polyvinyl chloride sheet (thickness: 0.5 mm) with a bar coater and was dried at room temperature to prepare a humidity conditioning sheet provided with a

humidify-conditioning layer of a thickness of 40 μm (referred to as resin forming product of COMPARATIVE EXAMPLE 7).

[EXAMPLE 9]

A silica prepared as in EXAMPLE 1, an acrylic urethane latex aqueous dispersion solution (solid content: 50 weight%, average resin diameter: 150 nm, Tg: 30°C), methanol, and methyl ethyl ketone in a weight ratio of 12.5:12.5:67.5:7.5 were mixed and stirred as in EXAMPLE 1 to prepare a slurry composition (referred to as coating composition of EXAMPLE 9).

The coating composition of EXAMPLE 9 was applied onto a polyvinyl chloride sheet (thickness: 0.5 mm) with a bar coater and was dried at room temperature to prepare a humidity conditioning sheet provided with a humidify-conditioning layer of a thickness of 40 μm (referred to as resin forming product of EXAMPLE 9).

[COMPARATIVE EXAMPLE 8]

A silica prepared as in EXAMPLE 1, an acrylic latex aqueous dispersion solution (solid content: 43 weight%, average resin diameter: 130 nm, Tg: 30°C), methanol, and methyl ethyl ketone in a weight ratio of 12.5:12.5:33.8:41.2 were mixed and stirred as in EXAMPLE 1 to prepare a slurry composition (referred to as coating composition of COMPARATIVE EXAMPLE 8).

The coating composition of COMPARATIVE EXAMPLE 8 was applied onto a polyvinyl chloride sheet (thickness: 0.5 mm) with a bar coater and was dried at room temperature to prepare a humidity conditioning sheet provided with a humidify-conditioning layer of a thickness of 32 μm (referred to as resin forming product of COMPARATIVE EXAMPLE 8).

[EXAMPLE 10]

A silica prepared as in EXAMPLE 1, an acrylic latex aqueous dispersion solution (solid content: 46 weight%, average resin diameter: 60 nm, Tg: 30°C), methanol, and methyl ethyl ketone in a weight ratio of 12.5:12.5:50.3:24.7 were mixed and stirred as in EXAMPLE 1 to prepare a slurry composition (referred to as coating composition of EXAMPLE 10).

The coating composition of EXAMPLE 10 was applied onto a polyvinyl chloride sheet (thickness: 0.5 mm) with a bar coater and was dried at room temperature to prepare a humidity conditioning sheet provided with a humidify-conditioning layer of a thickness of 32 μm (referred to as resin forming product of EXAMPLE 10).

[EXAMPLE 11]

A silica prepared as in EXAMPLE 1, an acrylic latex aqueous dispersion solution (solid content: 40 weight%, average resin diameter: 200 nm, Tg: 10°C), methanol, and methyl ethyl ketone in a weight ratio of 12.5:12.5:50.3:24.7 were mixed and stirred as in EXAMPLE 1 to prepare a slurry composition (referred to as coating composition of EXAMPLE 11).

The coating composition of EXAMPLE 11 was applied onto a polyvinyl chloride sheet (thickness: 0.5 mm) with a bar coater and was dried at room temperature to prepare a humidity conditioning sheet provided with a humidify-conditioning layer of a thickness of 30 μm (referred to as resin forming product of EXAMPLE 11).

[COMPARATIVE EXAMPLE 9]

A silica prepared as in EXAMPLE 1, a polyvinyl alcohol latex aqueous dispersion solution (solid content: 10 weight%, average resin diameter: 200 nm, Tg: 10°C), isopropyl alcohol, and deionized water in a weight ratio of 7.4:46.3:18.5:27.8 were mixed and stirred as in EXAMPLE 1 to prepare a slurry composition (referred to as coating composition of COMPARATIVE EXAMPLE 9).

The coating composition of COMPARATIVE EXAMPLE 9 was applied onto a polyvinyl chloride sheet (thickness: 0.5 mm) with a bar coater and was dried at room temperature to prepare a humidity conditioning sheet provided with a humidify-conditioning layer of a thickness of 28 μm (referred to as resin forming product of COMPARATIVE EXAMPLE 9).

[COMPARATIVE EXAMPLE 10]

A silica prepared as in EXAMPLE 1, an epoxy resin (solid content: 60 weight%, average resin diameter: 200 nm, Tg: 80°C), methyl ethyl ketone, and deionized water in a weight ratio of 12.5:6.7:70.8:10.0 were mixed and stirred as in EXAMPLE 1 to prepare a slurry composition (referred to as coating composition of COMPARATIVE EXAMPLE 10).

The coating composition of EXAMPLE 12 was applied onto a polyvinyl chloride sheet (thickness: 0.5 mm) with

a bar coater and was dried at room temperature to prepare a humidity conditioning sheet provided with a humidify-conditioning layer of a thickness of 25 μm (referred to as resin forming product of COMPARATIVE EXAMPLE 10).

[COMPARATIVE EXAMPLE 11]

A silica (mode pore diameter: 8.2 nm) having a mode particle diameter of 0.5 μm that was obtained by classification of the silica prepared as in EXAMPLE 1, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 16 mPa·s) (referred to as coating composition of COMPARATIVE EXAMPLE 11).
The coating composition of COMPARATIVE EXAMPLE 11 was applied onto a polyvinyl chloride sheet (thickness: 0.5 mm) with a bar coater and was dried at room temperature to prepare a humidity conditioning sheet provided with a humidify-conditioning layer of a thickness of 45 μm (referred to as resin forming product of COMPARATIVE EXAMPLE 11).

[EXAMPLE 12]

A silica (mode pore diameter: 8.3 nm) having a mode particle diameter of 1 μm that was obtained by classification of a silica prepared as in EXAMPLE 1, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 11 mPa·s) (referred to as coating composition of EXAMPLE 12).
The coating composition of EXAMPLE 12 was applied onto a polyvinyl chloride sheet (thickness: 0.5 mm) with a bar coater and was dried at room temperature to prepare a humidity conditioning sheet provided with a humidify-conditioning layer of a thickness of 58 μm (referred to as resin forming product of EXAMPLE 12).

[EXAMPLE 13]

A silica (mode pore diameter: 8.3 nm) having a mode particle diameter of 3 μm that was obtained by classification of the silica prepared as in EXAMPLE 1, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 16 mPa·s) (referred to as coating composition of EXAMPLE 13).
The coating composition of EXAMPLE 13 was applied onto a polyvinyl chloride sheet (thickness: 0.5 mm) with a bar coater and was dried at room temperature to prepare a humidity conditioning sheet provided with a humidify-conditioning layer of a thickness of 36 μm (referred to as resin forming product of EXAMPLE 13).

[EXAMPLE 14]

A silica (mode pore diameter: 8.3 nm) having a mode particle diameter of 35 μm prepared as in EXAMPLE 1 except that silica having a several-mm size was pulverized with a mortar after hydrothermal treatment, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 16 mPa·s) (referred to as coating composition of EXAMPLE 14).
The coating composition of EXAMPLE 14 was applied onto a polyvinyl chloride sheet (thickness: 0.5 mm) with a bar coater and was dried at room temperature to prepare a humidity conditioning sheet provided with a humidify-conditioning layer of a thickness of 36 μm (referred to as resin forming product of EXAMPLE 14).

[COMPARATIVE EXAMPLE 12]

A silica (mode pore diameter: 8.3 nm) having a mode particle diameter of 100 μm prepared as in EXAMPLE 1 except that silica having a several-mm size was pulverized with a co-mill pulverizer after hydrothermal treatment and classified through a screen, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 50 mPa·s) (referred to as coating composition of COMPARATIVE EXAMPLE 12).
The coating composition of COMPARATIVE EXAMPLE 12 was applied onto a polyvinyl chloride sheet (thickness: 0.5 mm) with a bar coater and was dried at room temperature to prepare a humidity conditioning sheet provided with a humidify-conditiohing layer of a thickness of 115 μm (referred to as resin forming product of COMPARATIVE EXAMPLE 12).

[COMPARATIVE EXAMPLE 13]

A silica (mode pore diameter: 8.3 nm) having a mode particle diameter of 200 μm prepared as in EXAMPLE 1 except that silica having a several-mm size was pulverized with a co-mill pulverizer after hydrothermal treatment and classified through a screen, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 250 mPa·s) (referred to as coating composition of COMPARATIVE EXAMPLE 13).

The coating composition of COMPARATIVE EXAMPLE 13 was applied onto a polyvinyl chloride sheet (thickness: 0.5 mm) with a bar coater and was dried at room temperature to prepare a humidity conditioning sheet provided with a humidify-conditioning layer of a thickness of 273 μm (referred to as resin forming product of COMPARATIVE EXAMPLE 13).

[EXAMPLE 15]

A micropore silica (mode pore diameter: 1 nm or less) having a mode particle diameter of 5 μm and a silanol content of 6 $nm^{-2}$ prepared as in EXAMPLE 1 except that the hydrothermal treatment was carried out at 60°C, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 22 mPa·s) (referred to as coating composition of EXAMPLE 15).

The coating composition of EXAMPLE 15 was applied onto a polyvinyl chloride sheet (thickness: 0.5 mm) with a bar coater and was dried at room temperature to prepare a humidity conditioning sheet provided with a humidify-conditioning layer of a thickness of 36 μm (referred to as resin forming product of EXAMPLE 15).

[EXAMPLE 16]

A silica (mode pore diameter: 5 nm) having a mode particle diameter of 5 μm and a silanol content of 5 $nm^{-2}$ prepared as in EXAMPLE 1 except the hydrothermal treatment was carried out at 130°C, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 50 mPa·s) (referred to as coating composition of EXAMPLE 16).

The coating composition of EXAMPLE 16 was applied onto a polyvinyl chloride sheet (thickness: 0.5 mm) with a bar coater and was dried at room temperature to prepare a humidity conditioning sheet provided with a humidify-conditioning layer of a thickness of 62 μm (referred to as resin forming product of EXAMPLE 16).

[EXAMPLE 17]

A silica (mode pore diameter: 15 nm) having a mode particle diameter of 5 μm and a silanol content of 4 $nm^{-2}$ prepared as in EXAMPLE 1 except the hydrothermal treatment was carried out at 200°C, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (viscosity: 84 mPa·s) (referred to as coating composition of EXAMPLE 17).

The coating composition of EXAMPLE 17 was applied onto a polyvinyl chloride sheet (thickness: 0.5 mm) with a bar coater and was dried at room temperature to prepare a humidity conditioning sheet provided with a humidify-conditioning layer of a thickness of 59 μm (referred to as resin forming product of EXAMPLE 17).

Reference Example 18

Alumina (mode pore diameter: 7.1 nm, pore volume: 0.45 ml/g, specific surface area: 188 $m^2/g$, silanol content: 0 $nm^2$) was used as an inorganic porous material. This alumina, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (referred to as coating composition of Reference EXAMPLE 18).

The coating composition of Reference EXAMPLE 18 was applied onto a polyvinyl chloride sheet (thickness: 0.5 mm) with a bar coater and was dried at room temperature to prepare a humidity conditioning sheet provided with a humidify-conditioning layer of a thickness of 70 μm (referred to as resin forming product of Reference EXAMPLE 18).

[EXAMPLE 19]

Silica-alumina (mode pore diameter: 5.7 nm, pore volume: 0.97 ml/g, specific surface area: 577 $m^2/g$, silanol

content: 1.5 $nm^{-2}$) was used as an inorganic porous material. This silica-alumina, the acrylic latex aqueous dispersion solution used in EXAMPLE 1, methanol, and methyl ethyl ketone in a weight ratio of 12.5:12.5:67.5:7.5 were mixed and stirred as in EXAMPLE 1 to prepare a slurry composition (referred to as coating composition of EXAMPLE 19).

The coating composition of EXAMPLE 19 was applied onto a polyvinyl chloride sheet (thickness: 0.5 mm) with a bar coater and was dried at room temperature to prepare a humidity conditioning sheet provided with a humidify-conditioning layer of a thickness of 112 μm (referred to as resin forming product of EXAMPLE 19).

[EXAMPLE 20]

Silica, a 20-weight% tetraethylammonium hydroxide (TEAOH) aqueous solution, and cetyltrimethylammonium bromide (CTMABr) were added to water in a weight ratio of 0.2:0.25:35 to prepare a gel mixture. More specifically, 62 g of CTMABr was added to 404 g of water, and the mixture was stirred at room temperature. With stirring, 100g of TEAOH solution and then 41 g of fumed silica were added to prepare the gel mixture.

The gel mixture was further stirred at 70°C for 2 hours, and aged at room temperature for 24 hours. Using an autoclave, the mixture was heated at 150°C for 48 hours for synthesis. After cooling, the product was filtered, washed, dried spontaneously, and fired at 600°C for 6 hours to prepare crystalline silica (MCM-41).

The physical properties of the resulting silica were measured by the methods described above. The specific surface area was 985 $m^2/g$, the pore volume was 0.78 ml/g, and the mode pore diameter ($D_{max}$) was 3.60 nm.

Using this silica, a slurry composition (referred to as coating composition) was prepared as in EXAMPLE 1.

Using this coating composition, a humidity conditioning sheet of a thickness of 89 μm was prepared as in EXAMPLE 1 (referred to as resin forming product of EXAMPLE 20).

[EXAMPLE 21]

A silica prepared as in EXAMPLE 1, powdered cellulose (average particle size: 24 μm, ash content: 0.25%) as an organic filler, the acrylic latex aqueous dispersion solution used in EXAMPLE 1, methanol, and methyl ethyl ketone in a weight ratio of 12.5:12.5:12.5:55.0:7.5 were mixed and stirred as in EXAMPLE 1 to prepare a slurry composition (referred to as coating composition of EXAMPLE 21).

The coating composition of EXAMPLE 21 was applied onto a polyvinyl chloride sheet (thickness: 0.5 mm) with a bar coater and was dried at room temperature to prepare a humidity conditioning sheet provided with a humidify-conditioning layer of a thickness of 89 μm (referred to as resin forming product of EXAMPLE 21).

[EXAMPLE 22]

A silica prepared as in EXAMPLE 1, powdered cellulose (average particle size: 24 μm, ash content: 0.25%) as an organic filler, the acrylic latex aqueous dispersion solution used in EXAMPLE 1, methanol, and methyl ethyl ketone in a weight ratio of 12.5:12.5:12.5:55.0:7.5 were mixed and stirred as in EXAMPLE 1 to prepare a slurry composition (referred to as coating composition of EXAMPLE 22).

The coating composition of EXAMPLE 22 was applied onto a polyvinyl chloride sheet (thickness: 0.5 mm) with a bar coater and was dried at room temperature to prepare a humidity conditioning sheet provided with a humidify-conditioning layer of a thickness of 31 μm (referred to as resin forming product of EXAMPLE 22).

[EXAMPLE 23]

The coating composition of EXAMPLE 1 was applied onto a polyvinyl chloride sheet (thickness: 0.5 mm) with a spray and was dried at room temperature to prepare a humidity conditioning sheet provided with a humidify-conditioning layer of a thickness of 17 μm (referred to as resin forming product of EXAMPLE 23).

[EXAMPLE 24]

The coating composition of EXAMPLE 1 was applied onto a PET film (thickness: 100 μm) with a bar coater and was dried at room temperature to prepare a humidity conditioning sheet provided with a humidify-conditioning layer of a thickness of 40 μm (referred to as resin forming product of EXAMPLE 24).

[EXAMPLE 25]

The coating composition of EXAMPLE 1 was applied onto a PET film (thickness: 100 μm) with a gravure coater and was dried at room temperature to prepare a humidity conditioning sheet provided with a humidify-conditioning layer

of a thickness of 18 μm (referred to as resin forming product of EXAMPLE 25).

[EXAMPLE 26]

The coating composition of EXAMPLE 1 was applied onto a PET film (thickness: 100 μm) with a dye coater and was dried at room temperature to prepare a humidity conditioning sheet provided with a humidify-conditioning layer of a thickness of 15 μm (referred to as resin forming product of EXAMPLE 26).

[EXAMPLE 27]

The coating composition of EXAMPLE 1 was applied onto a polyester woven fabric (thickness: 250 μm) with a bar coater and was dried at room temperature to prepare a humidity conditioning sheet provided with a humidify-conditioning layer of a thickness of 80 μm (referred to as resin forming product of EXAMPLE 27).

[EXAMPLE 28]

The coating composition of EXAMPLE 1 was applied onto a polyester woven fabric (thickness: 250 μm) by dipping and was dried at room temperature to prepare a humidity conditioning sheet provided with a humidify-conditioning layer of a thickness of 33 μm (referred to as resin forming product of EXAMPLE 28).

[EXAMPLE 29]

The coating composition of EXAMPLE 1 was applied onto a polyester nonwoven fabric (thickness: 80 μm) with a bar coater and was dried at room temperature to prepare a humidity conditioning sheet provided with a humidify-conditioning layer of a thickness of 300 μm (referred to as resin forming product of EXAMPLE 29).

[Evaluation]

The coating composition and the resin forming product in each EXAMPLE and COMPARATIVE EXAMPLE prepared according to the procedures described above were evaluated by the three grades, ○ (excellent), Δ (good), × (not good), on the following items:

[Dispersion (Precipitation)]

The dispersion (precipitation) of the inorganic porous material during preparation of the coating composition was evaluated by visual observation on the following items: homogeneous dispersion of the inorganic porous material into the coating composition; precipitation of the solid components after preservation of the coating composition in a plastic bottle for one week; and redespersibility of the precipitated solid components. If the coating composition can be redispersed, the coating composition has high preservability and can be preserved for a long terms.
O → Homogeneous dispersion was readily confirmed.
Δ → Homogeneous dispersion by a dispersing device was confirmed.
× → Homogeneous dispersion was not confirmed.

[Coating characteristics]

The flux, cratering, and fisheye as indices of coating characteristics were visually observed on the surface of the humidity conditioning sheet (resin forming product) in which the polyvinyl chloride sheet was coated with the coating composition using a bar coater (No. 75). In the case of poor coating characteristics, a uniform resin forming product cannot be formed, resulting in poor coating appearance of the surface.
○ → Smooth uniform coated surface
Δ → Defects on the coated surface
× → Poor forming product appearance due to difficult coating

[Appearance of coated surface]

The appearance of the coated surface of the humidity conditioning sheet (resin forming product) coated with the coating composition was evaluated by visual observation of pinholes, cracks, peeling, and irregular color. Poor appearance of the coated surface will cause characteristics of the resin forming product to be impaired.

○ → No defect
Δ → Partial defects on the forming product
× → Defects over the entire forming product

[Hydrophilicity]

On the coated surface of the humidity conditioning sheet (resin forming product), 50 μL of water droplet was dropped from a pipette. Hydrophilicity was evaluated by spreading of the droplet (diameter of the droplet was measured) and impregnation of the droplet (visual observation of the transparency of the resin forming product by water adsorption). If hydrophilicity is missing, spread of water on the surface of the resin forming product and formation of a water membrane do not occur, resulting in poor antifouling effect and poor cooling effect.
○ → Rapid spreading of the droplet with uniform impregnation
Δ → Slow spreading of the droplet or nonuniform impregnation.
× → No spreading or impregnation of the droplet, but shedding droplet.

[Dew condensation resistance]

The humidity conditioning sheet (resin forming product) was placed such that the coated surface was downward (tilt angle: 10°), and ice was placed on the upper surface (opposite to the coated surface) to generate dew condensation droplets under an environment of a temperature of 20°C and a humidity of 60%. Generation of the dew condensation droplets was visually observed. A hydrophilic wet surface of the resin forming product delays generation of dew condensation droplets. In addition, generated droplets flow along the slope toward the edge of the sheet, resulting in preventing the droplets falling out in the midway.
○ → Slow generation of droplets, without falling out in the midway
Δ → Slow generation of droplets, with slight falling out in the midway
× → Rapid generation of droplets, with falling out at the top and in the midway

[Cooling effect]

The humidity conditioning sheet (resin forming product) was immersed in water for 30 minutes. After the humidity conditioning sheet was pulled out, it was aired at a wind velocity of 0.5 m/s in an environment of a temperature of 25°C and a humid of 30% to evaporate water on the surface. The surface temperature of the humidity conditioning sheet was measured with a infrared thermometer to determine the temperature reduction from the outside air temperature. The temperature reduction was used as a criterion of the cooling effect. A larger temperature reduction represents more effective cooling of outside air temperature.
○ → 3°C or more of temperature reduction
Δ → 0 to 3°C of temperature reduction
× → No temperature reduction

[Hygroscopicity]

The weight of the humidity conditioning sheet (resin forming product) was measured at a constant temperature of 20°C and a varying humidity from 60% to 95%, and the weight of adsorbed moisture was calculated from the change in the weight. In addition, the time to reach the maximum weight of adsorbed moisture was measured to determine adsorption response as a measure of hygroscopicity. The weight of adsorbed moisture depends on the pore volume (maximum weight of adsorbed moisture) in the inorganic porous material and the adhrering amount, and rapid response of moisture adsorption/desorption to a change in humidity facilitates moisture conditioning.
○ → The change in moisture adsorption/desorption in rapid response to a change in humidity. The maximum weight of adsorbed moisture corresponds to 50% or more of the pore volume.
Δ → The change in moisture adsorption/desorption slightly lagging a change in humidity, or the maximum weight of adsorbed moisture corresponding to 5% or more and less than 50% of the pore volume.
× → The change in moisture adsorption/desorption not following a change in humidity, or the maximum weight of adsorbed moisture corresponding to less than 5%.

[Antifouling effect and endurance]

The humidity conditioning sheet (resin forming product) was placed out of doors for 90 days to be exposed to wind and weather for visual observation of contamination by speck and fugitive dust as a measure of antifouling effect.

Also, peeling, cracking, and discoloration of the resin forming product were observed visually as a measure of endurance.

- Antifouling effect
  ○ → Contaminant washable with water
  Δ → Contaminant partially unwashable with water × → Contaminant unwashable with water
- Endurance
  ○ → No change in appearance of resin forming product
  Δ → Some change in appearance, such as discoloration and cracking
  × → Peeling of resin forming product and destruction of forming product

[Abrasion resistance]

The surface of the humidity conditioning sheet (resin forming product) was rubbed with cotton 50 times to observe defects such as flaws and peeling of the forming product visually.
○ → No change in appearance of resin forming product surface
Δ → Flaws and peeling on part of surface layer
× → Exposed base material due to partial destruction of forming product

[Void volume per unit volume of resin forming product]

In the resin forming product of each EXAMPLE or each COMPARATIVE EXAMPLE, the void volume per unit volume of the resin forming product (the void volume per unit area and unit thickness of the resin forming product) was determined according to the method described in [2-1. Void volume per unit area and unit thickness of resin forming product.]

[Results]

The composition, physical properties, and evaluations of the coating compositions and the resin forming products of each of the EXAMPLEs and COMPARATIVE EXAMPLEs are shown in Tables 1 to 10 below. In the following description, "void volume per unit volume" represents the void volume per unit volume of the resin forming product (void volume per unit area and unit thickness of the resin forming product), "interparticle void/pore volume" represents the volume ratio, "inorganic porous material/binder resin" represents the weight ratio of the inorganic porous material to the solid content in the binder resin in the coating composition or the resin forming product, and "total solid content/solid content of binder" represents the weight ratio of the total solid content to the solid content in the binder in the coating composition or the resin forming product.
[Table 1]

Table 1

| | EXAMPLE 1 | COMPARATIVE EXAMPLE 1 | EXAMPLE 2 | EXAMPLE 3 | EXAMPLE 4 | COMPARATIVE EXAMPLE 2 |
|---|---|---|---|---|---|---|
| Void volume per unit volume ($ml/m^2 \cdot \mu m$) | 0.74 | 0.31 | 0.74 | 0.84 | 0.79 | 0.09 |
| Inorganic porous material/binder resin (weight ratio of solid content) | 2 | 0.5 | 1 | 3 | 5 | 12 |
| Total solid content/Solid content of binder (weight ratio) | 3 | 1.5 | 2 | 4 | 6 | 13 |
| Precipitation | ○ | ○ | ○ | ○ | ○ | ○ |

(continued)

| | EXAMPLE 1 | COMPARATIVE EXAMPLE 1 | EXAMPLE 2 | EXAMPLE 3 | EXAMPLE 4 | COMPARATIVE EXAMPLE 2 |
|---|---|---|---|---|---|---|
| Coating characteristics | ○ | Δ | ○ | ○ | ○ | Δ |
| Appearance of coated surface | ○ | × | ○ | ○ | ○ | × |
| Hydrophilicity | ○ | × | ○ | ○ | ○ | ○ |
| Anti-fouling effect | ○ | × | ○ | ○ | ○ | ○ |
| Dew condensation resistance | ○ | × | Δ | ○ | ○ | ○ |
| Hygroscopicity | ○ | × | Δ | ○ | ○ | ○ |
| Cooling effect | ○ | × | ○ | ○ | ○ | ○ |
| Scratch resistance | ○ | × | ○ | Δ | × | × |
| Weather resistance | ○ | × | ○ | ○ | Δ | Δ |

[Table 2]

Table 2

| | EXAMPLE 1 | COMPARATIVE EXAMPLE 3 | EXAMPLE 5 |
|---|---|---|---|
| Particle shape of inorganic porous material | Fractured | Spherical | Spherical+fractured |
| Void volume per unit volume (ml/$m^2$ · μm) | 0.74 | 0.21 | 0.72 |
| Inorganic porous material/binder resin (weiqht ratio of solid content) | 2 | 0 | 1 |
| Total solid content/Solid content of binder (weight ratio) | 3 | 3 | 3 |
| Precipitation | ○ | Δ | ○ |
| Coating characteristics | ○ | Δ | ○ |
| Appearance of coated surface | ○ | Δ | ○ |
| Hydrophilicity | ○ | × | ○ |
| Anti-fouling effect | ○ | × | ○ |
| Dew condensation resistance | ○ | × | ○ |
| Hygroscopicity | ○ | × | ○ |
| Cooling effect | ○ | Δ | ○ |
| Scratch resistance | ○ | Δ | ○ |
| Weather resistance | ○ | × | ○ |

[Table 3]

Table 3 .

| | EXAMPLE 1 | EXAMPLE 6 | EXAMPLE 7 | EXAMPLE 8 | COMPARATIVE EXAMPLE 4 | COMPARATIVE EXAMPLE 5 |
|---|---|---|---|---|---|---|
| Solvent | MeOH/MEK | MEK | EtOH/MIBK | Acetone | Water | Water |
| Average resin particle size (nm) | 18-22 | Less than 7 | 18-22 | 7-12 | 115 | 120 |
| Precipitation | ○ | ○ | ○ | ○ | x | × |
| Coating characteristics | ○ | ○ | ○ | ○ | × | × |
| Appearance of coated surface | ○ | ○ | ○ | ○ | × | × |
| Hydrophilicity | ○ | × | Δ | × | ○ | ○ |
| Anti-fouling effect | ○ | × | Δ | × | Δ | Δ |
| Dew condensation resistance | ○ | × | Δ | × | Δ | Δ |
| Hygroscopicity | ○ | × | Δ | × | Δ | Δ |
| Cooling effect | ○ | Δ | Δ | Δ | ○ | ○ |
| Scratch resistance | ○ | ○ | ○ | ○ | × | × |
| Weather resistance | ○ | ○ | ○ | ○ | × | × |
| * In the table, "MeOH" represents methanol, "EtOH" represents ethanol, "MEK" represents methyl ethyl ketone, and "MIBK" represents methyl isobutyl ketone. | | | | | | |

[Table 4]

Table 4

| | EXAMPLE 1 | COMPARATIVE EXAMPLE 6 | COMPARATIVE EXAMPLE 7 |
|---|---|---|---|
| Binder resin | Acrylic emulsion | Acrylic emulsion | Urethane resin |
| Hydroxyl value (mgKOH/g) | 40 | 10 | 10 |
| Tg(°C) | 18 | -20 | 100 |
| Precipitation | ○ | Δ | ○ |
| Coating characteristics | ○ | ○ | ○ |
| Appearance of coated surface | ○ | ○ | ○ |
| Hydrophilicity | ○ | Δ | ○ |
| Anti-fouling effect | ○ | Δ | ○ |
| Dew condensation resistance | ○ | Δ | Δ |
| Hygroscopicity | ○ | Δ | Δ |
| Cooling effect | ○ | ○ | ○ |
| Scratch resistance | ○ | Δ | × |
| Weather resistance | ○ | × | × |

[Table 5]

Table 5

| | EXAMPLE 1 | EXAMPLE 9 | COMPARATIVE EXAMPLE 8 | EXAMPLE 10 | EXAMPLE 11 | COMPARATIVE EXAMPLE 9 | COMPARATIVE EXAMPLE 10 |
|---|---|---|---|---|---|---|---|
| Binder resin | Acrylic Emulsion | Acrylic Urethane | Acrylic resin | Acrylic resin | Acrylic resin | Polyvinyl alcohol resin | Epoxy resin |
| Hydroxyl value (mgKOH/g) | 40 | 15 | 0 | 200 | 10 | 860 | 15 |
| Tg (°C) | 18 | 30 | 11 | 6 | 10 | 80 | 80 |
| Precipitation | ○ | ○ | × | ○ | ○ | ○ | ○ |
| Coating characteristics | ○ | ○ | ○ | ○ | ○ | ○ | ○ |
| Appearance of coated surface | ○ | ○ | ○ | ○ | ○ | ○ | ○ |
| Hydrophilicity | ○ | Δ | Δ | Δ | Δ | ○ | ○ |
| Anti-fouling effect | ○ | Δ | Δ | Δ | Δ | Δ | Δ |
| Dew condensation resistance | ○ | Δ | Δ | Δ | Δ | Δ | Δ |
| Hygroscopicity | ○ | ○ | ○ | Δ | Δ | Δ | Δ |
| Cooling effect | ○ | ○ | ○ | ○ | ○ | ○ | ○ |
| Scratch resistance | ○ | ○ | ○ | ○ | ○ | × | × |
| Weather resistance | ○ | Δ | ○ | ○ | ○ | × | × |

[Table 6]

Table 6

| | EXAMPLE 1 | COMPARATIVE EXAMPLE 11 | EXAMPLE 12 | EXAMPLE 13 | EXAMPLE 14 | COMPARATIVE EXAMPLE 12 | COMPARATIVE EXAMPLE 13 |
|---|---|---|---|---|---|---|---|
| Mode particle diameter of inorganic porous material (μm) | 5 | 0.5 | 1 | 3 | 35 | 100 | 200 |
| Void volume per unit volume ($ml/m^2 \cdot \mu m$) | 0.74 | 0.12 | 0.29 | 0.56 | 0.55 | 0.33 | 0.1 |
| Precipitation | ○ | × | Δ | ○ | Δ | Δ | Δ |
| Coating characteristics | ○ | × | ○ | ○ | Δ | Δ | × |
| Appearance of coated surface | ○ | Δ | ○ | ○ | ○ | Δ | × |
| Hydrophilicity | ○ | ○ | ○ | ○ | ○ | Δ | × |
| Anti-fouling effect | ○ | Δ | ○ | ○ | ○ | Δ | × |
| Dew condensation resistance | ○ | Δ | ○ | ○ | ○ | Δ | × |
| Hygroscopicity | ○ | × | ○ | ○ | ○ | Δ | × |
| Cooling effect | ○ | ○ | ○ | ○ | ○ | ○ | ○ |
| Scratch resistance | ○ | × | × | Δ | Δ | × | × |
| Weather resistance | ○ | × | ○ | ○ | ○ | × | × |

[Table 7]

Table 7

| | EXAMPLE 1 | EXAMPLE 15 | EXAMPLE 16 | EXAMPLE 17 |
|---|---|---|---|---|
| Mode pore diameter of inorganic porous material (nm) | 9 | 1 or less | 5 | 15 |
| Pore volume per unit volume (ml/m$^2$ · μm) | 0.74 | 0.73 | 0.76 | 0.73 |
| Precipitation | ○ | ○ | ○ | ○ |
| Coating characteristics | ○ | ○ | ○ | ○ |
| Appearance of coated surface | ○ | ○ | ○ | ○ |
| Hydrophilicity | ○ | ○ | ○ | ○ |
| Anti-fouling effect | ○ | ○ | ○ | ○ |
| Dew condensation resistance | ○ | ○ | ○ | ○ |
| Hygroscopicity | ○ | Δ | ○ | ○ |
| Cooling effect | ○ | ○ | ○ | ○ |
| Scratch resistance | ○ | Δ | ○ | ○ |
| Weather resistance | ○ | ○ | ○ | ○ |

[Table 8]

Table 8

| | Reference | | | |
|---|---|---|---|---|
| | EXAMPLE 1 | EXAMPLE 18 | EXAMPLE 19 | EXAMPLE 20 |
| Inorganic porous material | Silica | Alumina | Silica-alumina | Crystalline silica |
| Void volume per unit volume (ml/m$^2$ · μm) | 0.74 | 0.34 | 0.34 | 0.38 |
| Precipitation | ○ | ○ | Δ | ○ |
| Coating characteristics | ○ | ○ | ○ | ○ |
| Appearance of coated surface | ○ | Δ | Δ | ○ |
| Hydrophilicity | ○ | Δ | Δ | ○ |
| Anti-fouling effect | ○ | Δ | Δ | ○ |
| Dew condensation resistance | ○ | Δ | Δ | Δ |
| Hygroscopicity | ○ | Δ | Δ | Δ |
| Cooling effect | ○ | ○ | ○ | ○ |
| Scratch resistance | ○ | ○ | ○ | ○ |
| Weather resistance | ○ | ○ | ○ | ○ |

[Table 9]

Table 9

| | EXAMPLE 1 | EXAMPLE 21 | EXAMPLE 22 |
|---|---|---|---|
| Organic filler | None | Powdered cellulose | Powdered cellulose |
| Void volume per unit volume (ml/m$^2$ · μm) | 0.74 | 0.97 | 0.96 |

(continued)

| | EXAMPLE 1 | EXAMPLE 21 | EXAMPLE 22 |
|---|---|---|---|
| Inorganic porous material/binder resin (weight ratio of solid content) | 2 | 2 | 2 |
| Total solid content/solid content of binder (weight ratio) | 3 | 5 | 5 |
| Precipitation | ○ | Δ | Δ |
| Coating characteristics | ○ | ○ | ○ |
| Appearance of coated surface | ○ | Δ | Δ |
| Hydrophilicity | ○ | ○ | ○ |
| Anti-fouling effect | ○ | Δ | Δ |
| Dew condensation resistance | ○ | ○ | ○ |
| Hygroscopicity | ○ | Δ | Δ |
| Cooling effect | ○ | ○ | ○ |
| Scratch resistance | ○ | ○ | ○ |
| Weather resistance | ○ | ○ | ○ |

[Table 10]

Table 10

| | EXAMPLE 1 | EXAMPLE 23 | EXAMPLE 24 | EXAMPLE 25 | EXAMPLE 26 | EXAMPLE 27 | EXAMPLE 28 | EXAMPLE 29 |
|---|---|---|---|---|---|---|---|---|
| Coating process | Bar coating | Spraying | Bar coating | Gravure coating | Dye coating | Bar coating | Dipping | Bar coating |
| Base material | Polyvinyl chloride sheet | Polyvinyl chloride sheet | PET film | PET film | PET film | Polyester woven fabric | Polyester woven fabric | PETnonwoven fabric |
| Coating characteristics | ○ | △ | ○ | ○ | ○ | △ | ○ | △ |
| Appearance of coated surface | ○ | △ | ○ | ○ | ○ | △ | △ | △ |
| Hydrophilicity | ○ | ○ | ○ | ○ | ○ | ○ | ○ | ○ |
| Anti-fouling effect | ○ | ○ | ○ | ○ | ○ | ○ | ○ | ○ |
| Dew condensation resistance | ○ | ○ | ○ | ○ | ○ | ○ | ○ | ○ |
| Hygroscopicity | ○ | ○ | ○ | ○ | ○ | ○ | ○ | ○ |
| Cooling effect | ○ | ○ | ○ | ○ | ○ | ○ | ○ | ○ |
| Scratch resistance | ○ | ○ | × | × | × | △ | △ | ○ |
| Weather resistance | ○ | ○ | ○ | ○ | ○ | ○ | ○ | ○ |

Table 1 summarizes various properties of the coating composition and the resin forming product at various weight ratios of the inorganic porous material to the solid content of the binder resin (the weight ratio of the inorganic porous material to the solid content of the binder resin (hereinafter referred to as "inorganic porous material/binder resin ratio")) in the coating composition and the resin forming product.

Table 1 shows that an excessively larger ratio of the binder resin in the coating composition facilitates aggregation of the binder resin while an excessively smaller ratio of the binder resin facilitates aggregation of the inorganic porous material. Table 1 further shows that such aggregation impairs appearance of the coated surface due to poor coating characteristics and cracking.

In the resin forming product, at an excessively smaller inorganic porous material/binder resin ratio, the inorganic porous material is covered by the binder resin, resulting in blocking of pores that precludes water adsorption. Furthermore, interparticle voids are filled with the binder resin, resulting in a decrease in voids and, accordingly, impairing hydrophilicity.

In contrast, an excessively larger inorganic porous material/binder resin ratio leads to a decrease in bonding points between the inorganic porous material and the binder resin regardless of improved hydrophilicity. As a result, the inorganic porous material can be readily detached. Accordingly void formation is precluded and endurance such as abrasion resistance is impaired.

As described above, an excessively larger or smaller inorganic porous material/binder resin ratio leads to a decrease in voids. Such a decrease in voids impairs the hydrophilicity, i.e., dew condensation resistance and moisture conditioning effect due to poor water retention.

Table 2 shows that the spherical microparticle inorganic porous material exhibits poor coating characteristics and appearance of the coated surface compared with the fractured microparticle. Since the spherical microparticles can be packed more densely into a regular array compared to fractured microparticles, interparticle voids cannot be readily formed. Since spherical microparticles lead to a decrease in the interparticle void size, various properties such as dew condensation resistance is impaired by a decrease in water retention capability. On the other hand, addition of part of fractured microparticles to the spherical microparticles inhibits the regular array, resulting in formation of larger interparticle voids.

Table 3 shows the viscosity of the coating composition and the resin size of the binder resin in the coating composition depend on the type of the solvent used. Hydrophilic solvents such as alcohols lead to formation of a binder resin having a small resin size, which can be well dispersed without precipitation or coagulation of inorganic porous material. On the other hand, a solvent containing only water cannot disperse the binder resin, resulting in precipitation and coagulation of inorganic porous material and poor coating characteristics and poor appearance of the coated surface due to low drying rate.

Table 4 shows that an excessively lower or higher Tg of the binder resin results in a decrease in abrasion resistance and endurance. More particularly, an excessively lower Tg of the binder resin causes a resin forming product having lower mechanical strength that decreases abrasion resistance regardless of flexibility to the base material. On the other hand, an excessively high Tg of the binder resin leads to separation and cracking and impairs abrasion resistance due to low flexibility to the base material regardless of high mechanical strength of the resin forming product.

Table 5 shows that an excessively lower hydroxyl value of the solid content of the binder resin causes poor dispersion of the inorganic porous material in the coating composition. Furthermore, such a low hydroxyl value of the binder resin leads to poor hydrophilicity of the surface of the resin forming product. On the other hand, an excessively high hydroxyl value of the binder resin leads to a resin forming product having low mechanical strength, particularly low water resistance.

Table 6 shows that a large mode particle diameter of the inorganic porous material causes the viscosity to increase, resulting in unsatisfactory coating characteristics and appearance of the coated surface. Furthermore, such a large mode particle diameter of the inorganic porous material precludes formation of layer of inorganic porous material, thus formation of interparticle voids, resulting in a decrease in dew condensation resistance. Furthermore, contact points between the binder resin and the inorganic porous material are reduced. This leads to ready elimination of the inorganic porous material and thus a decrease in abrasion resistance. A small mode particle diameter of the inorganic porous material leads to coagulation of the inorganic porous material precipitated in the coating composition. Such inorganic porous material cannot be easily redispersed.

Table 7 shows comparison of various properties of coating compositions and resin forming products containing inorganic porous materials having different mode pore diameters. These coating compositions and resin forming products do not have significant differences in the properties, although a decrease in moisture retention due to a low pore volume is observed. This phenomenon is due to a porous structure, but not the mode diameter of pores of the inorganic porous material in coating compositions and resin forming products.

Table 8 shows comparison of various properties of coating compositions and resin forming products containing various inorganic porous materials. Silica exhibits more noticeable hydrophilicity. However, any inorganic porous materials are also excellent in cooling effect. Thus, any other inorganic porous material other than silica can be used.

Table 9 shows that the addition of the organic filler leads to an increase in the total solid content in the coating

composition, which causes high viscosity and readily precipitation. In the resin forming product containing the organic filler, the void volume per unit volume significantly increases although some properties including hydrophilicity are impaired. Such a significant increase in the void volume ensures retention of a larger amount of water, resulting in high dew condensation resistance and cooling effect.

Table 10 shows that the coating composition can be applied to a substrate by various coating methods and the resin forming product can be formed using various base materials. Accordingly, excellent properties can be ensured by any coating method using any base material.

[Industrial Applicability]

The applicable fields of the present invention are not limited. The present invention is suitably applicable to various fields, for example, building materials, interior design materials, catalysts, air conditioning, coatings and inks, additives for resins, paper making, food-related fields, medicines and agricultural chemicals, releasing materials, agricultural fields, transportation fields, electrical and electronics fields, precision apparatuses, daily necessities, and clothing items.

## Claims

**1.** A coating composition comprising at least an inorganic porous material, a binder resin, and a solvent, wherein

(1) the inorganic porous material comprises at least one silicon compound;
(2) the binder resin has:

(a) a solid hydroxyl value in the range of 5 mgKOH/g to 80 mgKOH/g and
(b) a glass transition temperature (Tg) in the range of -5°C to 40°C,

(3) the solvent comprises at least one organic solvent, and
(4) the weight ratio of the inorganic porous material to the solid content of the binder resin is in the range of 0.6 to 10.0.

**2.** The coating composition according to claim 1, wherein the weight ratio of the total solid content to the solid content of the binder resin is in the range of 1.6 to 11.0.

**3.** The coating composition according to either claim 1 or claim 2, wherein the inorganic porous material is silica.

**4.** The coating composition according to any one of claims 1 to 3, wherein the inorganic porous material has a mode particle diameter in the range of 1.0 μm to 50 μm.

**5.** The coating composition according to one of claims 1 to 4, wherein the proportion of the solvent in the coating composition is 40 weight% or more and 98 weight% or less.

**6.** The coating composition according to one of claims 1 to 5, wherein the proportion of the organic solvent to the total solvent is 5 weight% or more.

**7.** The coating composition according to any one of claims 1 to 6, further comprising an organic filler.

**8.** A resin forming product prepared by applying the coating composition of any one of claim 1 to 7 on a base material and removing the solvent.

**9.** The resin forming product according to claim 8, comprising at least an inorganic porous material and a binder resin, wherein
the resin forming product has a void volume per unit area and unit thickness in the range of 0.33 $ml/m^2 \cdot \mu m$ to 0.99 $ml/m^2 \cdot \mu m$.

**10.** The resin forming product according to claim 8 or 9, further comprising a base material, wherein
the inorganic porous material is fixed to at least part of the base material by the binder resin.

**11.** The resin forming product according to claim 10, wherein the base material comprises at least a sheet.

**12.** The resin forming product according to claim 10, wherein the base material comprises at least a film.

**13.** The resin forming product according to claim 10, wherein the base material comprises at least a fiber.

**14.** A method for making the coating composition according to any one of claims 1 to 7, comprising at least the step of:

mixing the binder resin, the inorganic porous material, and the solvent.

**Patentansprüche**

**1.** Beschichtungszusammensetzung, die mindestens ein anorganisches poröses Material, ein Bindemittelharz und ein Lösungsmittel umfasst, wobei

(1) das anorganische poröse Material mindestens eine Siliciumverbindung umfasst;
(2) das Bindemittelharz

(a) einen Feststoff-Hydroxylwert im Bereich von 5 bis 80 mgKOH/g und
(b) eine Glasübergangstemperatur (Tg) im Bereich von -5 bis 40°C
aufweist,

(3) das Lösungsmittel mindestens ein organisches Lösungsmittel umfasst und
(4) das Gewichtsverhältnis von anorganischem porösen Material zu Feststoffgehalt des Bindemittelharzes im Bereich von 0,6 bis 10,0 liegt.

**2.** Beschichtungszusammensetzung gemäss Anspruch 1, wobei das Gewichtsverhältnis von Gesamtfeststoffgehalt zu Feststoffgehalt des Bindemittelharzes im Bereich von 1,6 bis 11,0 liegt.

**3.** Beschichtungszusammensetzung gemäss einem der Ansprüche 1 oder 2, wobei das anorganische poröse Material Silica ist.

**4.** Beschichtungszusammensetzung gemäss irgendeinem der Ansprüche 1 bis 3, wobei das anorganische poröse Material einen Modalwert des Teilchendurchmessers im Bereich von 1,0 bis 50 μm aufweist.

**5.** Beschichtungszusammensetzung gemäss einem der Ansprüche 1 bis 4, wobei der Anteil an Lösungsmittel in der Beschichtungszusammensetzung 40 Gew.% oder mehr und 98 Gew.% oder weniger beträgt.

**6.** Beschichtungszusammensetzung gemäss einem der Ansprüche 1 bis 5, wobei der Anteil an organischem Lösungsmittel in bezug auf das gesamte Lösungsmittel 5 Gew.% oder mehr beträgt.

**7.** Beschichtungszusammensetzung gemäss irgendeinem der Ansprüche 1 bis 6, die ferner einen organischen Füllstoff umfasst.

**8.** Harzformprodukt, das durch Auftragen der Beschichtungszusammensetzung gemäss irgendeinem der Ansprüche 1 bis 7 auf ein Basismaterial und Entfernen des Lösungsmittels hergestellt wird.

**9.** Harzformprodukt gemäss Anspruch 8, das mindestens ein anorganisches poröses Material und ein Bindemittelharz umfasst, wobei das Harzformprodukt ein Hohlraumvolumen pro Flächeneinheit und Dickeneinheit im Bereich von 0,33 bis 0,99 $ml/m^2 \cdot \mu m$ aufweist.

**10.** Harzformprodukt gemäss Anspruch 8 oder 9, das ferner ein Basismaterial umfasst, wobei das anorganische poröse Material an mindestens einem Teil des Basismaterials durch das Bindemittelharz fixiert ist.

**11.** Harzformprodukt gemäss Anspruch 10, wobei das Basismaterial mindestens ein Blatt umfasst.

**12.** Harzformprodukt gemäss Anspruch 10, wobei das Basismaterial mindestens eine Folie umfasst.

**13.** Harzformprodukt gemäss Anspruch 10, wobei das Basismaterial mindestens eine Faser umfasst.

**14.** Verfahren zur Herstellung der Beschichtungszusammensetzung gemäss irgendeinem der Ansprüche 1 bis 7, das zumindest einen Schritt umfasst, in dem das Bindemittelharz, das anorganische poröse Material und das Lösungsmittel vermischt werden.

**Revendications**

**1.** Composition de revêtement comprenant au moins un matériau poreux inorganique, une résine liante, et un solvant, dans laquelle

(1) le matériau poreux inorganique comprend au moins un composé de silicium ;
(2) la résine liante présente :

(a) un indice d'hydroxyle solide qui se situe dans la plage de 5 mgKOH/g à 80 mgKOH/g et
(b) une température de transition vitreuse (Tg) qui se situe dans la plage de -5°C à 40°C,

(3) le solvant comprend au moins un solvant organique, et
(4) le rapport massique du matériau poreux inorganique par la teneur en solide de la résine liante se situe dans la plage de 0,6 à 10,0.

**2.** Composition de revêtement selon la revendication 1, dans laquelle
le rapport massique de la teneur totale en solide par la teneur en solide de la résine liante se situe dans la plage de 1,6 à 11,0.

**3.** Composition de revêtement selon la revendication 1 ou 2, dans laquelle le matériau poreux inorganique est de la silice.

**4.** Composition de revêtement selon l'une quelconque des revendications 1 à 3, dans laquelle le diamètre modal des particules du matériau poreux inorganique se situe dans la plage de 1 μm à 50 μm.

**5.** Composition de revêtement selon l'une des revendications 1 à 4, dans laquelle la proportion du solvant dans la composition de revêtement est de 40% en poids ou plus et 98% en poids ou moins.

**6.** Composition de revêtement selon l'une des revendications 1 à 5, dans laquelle la proportion du solvant organique par le solvant total est de 5% en poids ou plus.

**7.** Composition de revêtement selon l'une quelconque des revendications 1 à 6, comprenant en outre une charge organique.

**8.** Produit de formation de résine préparé en appliquant la composition de revêtement de l'une quelconque des revendications 1 à 7 sur un matériau de base et en retirant le solvant.

**9.** Produit de formation de résine selon la revendication 8, comprenant au moins un matériau poreux inorganique et une résine liante, dans lequel
le volume des vides par unité de surface et unité d'épaisseur du produit de formation de résine se situe dans la plage de 0,33 $ml/m^2 \cdot \mu m$ à 0,99 $ml/m^2 \cdot \mu m$.

**10.** Produit de formation de résine selon la revendication 8 ou 9, comprenant en outre un matériau de base, dans lequel le matériau poreux inorganique est fixé à au moins une partie du matériau de base par la résine liante.

**11.** Produit de formation de résine selon la revendication 10, dans lequel le matériau de base comprend au moins une feuille.

**12.** Produit de formation de résine selon la revendication 10, dans lequel le matériau de base comprend au moins un film.

**13.** Produit de formation de résine selon la revendication 10, dans lequel le matériau de base comprend au moins une fibre.

**14.** Procédé de réalisation de la composition de revêtement selon l'une quelconque des revendications 1 à 7, comprenant au moins l'étape qui consiste **à** :

mélanger la résine liante, le matériau poreux inorganique, et le solvant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6057178 A
- JP 2004211049 A
- JP 3398830 B
- JP 2000043179 A
- JP HEI11183023 B
- JP HEI9102679 B
- JP 2000115759 A
- US 5497306 A
- JP 2004236518 A
- JP 2003220657 A


### Non-patent literature cited in the description


- Hashimoto Laboratory. **K. HASHIMOTO.** Hikari Enerugi wo Riyoshita Kankyo Hozen. Research Center for Advanced Science and Technology, 03 February 2004
- **E. P. BARRETT ; L. G. JOYNER ; P. H. HAKLENDA.** *J. Amer. Chem. Soc.,* 1951, vol. 73, 373